# EUROPEAN PATENT SPECIFICATION

(11) **EP 2 570 365 B1**
(45) Date of publication and mention of the grant of the patent: **07.08.2019**
(21) Application number: 11780494.8
(22) Date of filing: 23.04.2011
(51) Int. Cl.: B65D 81/26, B32B 3/26, B32B 27/00, B65D 33/01, B65D 65/02, B65D 65/38, B65D 81/34

(54) **GAS-PERMEABLE FILM, MANUFACTURING METHOD THEREFOR, AND PACKAGING BAG USING SAID GAS-PERMEABLE FILM**
GASDURCHLÄSSIGER FILM, HERSTELLUNGSVERFAHREN DAFÜR UND VERPACKUNGSBEUTEL MIT DIESEM GASDURCHLÄSSIGEN FILM
FILM PERMÉABLE AUX GAZ, PROCÉDÉ DE FABRICATION DE CELUI-CI, ET SAC D'EMBALLAGE UTILISANT LEDIT FILM PERMÉABLE AUX GAZ

(30) Priority: 19.11.2010 JP 2010258996; 27.07.2010 JP 2010168696; 13.05.2010 JP 2010111470
(43) Date of publication of application: 20.03.2013
(73) Proprietor: FUKUMARU CO., LTD., Fukuoka-shi, Fukuoka 813-0034 (JP)
(72) Inventor: YAMAMOTO, Masakazu, Fukuoka-shi Fukuoka 813-0034 (JP); FUKUYAMA, Katsuyoshi, Fukuoka-shi Fukuoka 813-0034 (JP)
(74) Representative: Hoffmann Eitle
(86) International application number: PCT/JP2011/059990
(87) International publication number: WO 2011/142237

(56) References cited:
- EP-A1- 0 538 713
- JP-A- 10 147 381
- JP-A- 2003 054 646
- JP-A- 2011 098 772
- JP-U- H0 737 974
- US-A- 4 777 073
- US-A- 5 695 595
- US-A1- 2003 085 224

## Description

### TECHNICAL FIELD

The present invention relates to a gas-permeable film through which gases such as oxygen, carbon dioxide, and water vapor permeate, a manufacturing method therefor, and a packaging bag using the gas-permeable film. More specifically, the present invention relates to a gas-permeable film suitable for use in a packaging material for green goods, fermented food products, or the like and a container (bag) for microwave oven heating or the like, a manufacturing method therefor, and a packaging bag that is made using the gas-permeable film, can be used directly as a tray after opening without having to move a prepared dish, a hamburger steak, or the like within the bag into another container, is hermetically sealed for packaging and distribution of food products or the like including a large quantity of liquid and juice, is less prone to external leakage of liquid and juice inside even upon an impact at the time of distribution or storage, can be used securely with confidence since the bag does not rip or burst at the time of microwave oven heating, and is such that the whole bag can be microwaved for easy cooking.

### BACKGROUND ART

A gas-permeable film in which a gas-permeable section is provided to a base film such that a gas such as oxygen, carbon dioxide, or water vapor is caused to permeate through the gas-permeable section is used in various fields such as food products and medicine, mainly as a packaging material for commercial products. By using the gas-permeable film to package, for example, vegetables or fruits, those can be stored and kept fresh for a relatively long period of time. As for this type of gas-permeable film, generally used is a polymer film for a base film, which can be roughly classified into those provided with a micropore that penetrates the base film and those provided with a non-penetrating pore that does not penetrate a base film.

For example, Patent Document 1 discloses a preservation bag in which a fine pore of a prescribed pore area is provided for a polymer film of a prescribed thickness. The preservation bag is used for preserving citrus fruits. Patent Document 2 discloses a bag for microwave oven heating provided with a non-penetrating pore. This bag for heating is configured from a laminate film in which an inner layer and an outer layer are bonded integrally by an intermediate layer (adhesive layer), and the inner layer has a non-penetrating pore. When a frozen food product or the like is accommodated in the bag for microwave oven heating and heated in a microwave oven, water vapor is generated from the frozen food product. However, the water vapor permeates through a thin portion at the bottom of the non-penetrating pore, enters the intermediate layer, and is released outside as the intermediate layer peels off Furthermore, a gas-permeable film provided with a similar non-penetrating hole is described in Patent Document 3. In the permeable film, one surface of a single-layer or multilayer substrate film is provided with the non-penetrating holes having an average hole area of 10⁻⁶ to 10⁻² cm² and a depth at a ratio of 1 to 99.0% with respect to the thickness of the substrate film.

In recent years, frozen food products in which cooked foodstuffs such as dumplings or hamburger steaks are frozen have become widespread. Most of the frozen food products are packed into packaging bags of prescribed shapes for sale, and are thawed and heated in a microwave oven by consumers for an easy meal. While a variety of the packaging bags used therefor have been developed, those produced by using a plastic film have become mainstream. The packaging bags generally have a notch for tearing at a back seal section, so that a food product within the bag can be easily taken out by tearing and opening from this notch portion.

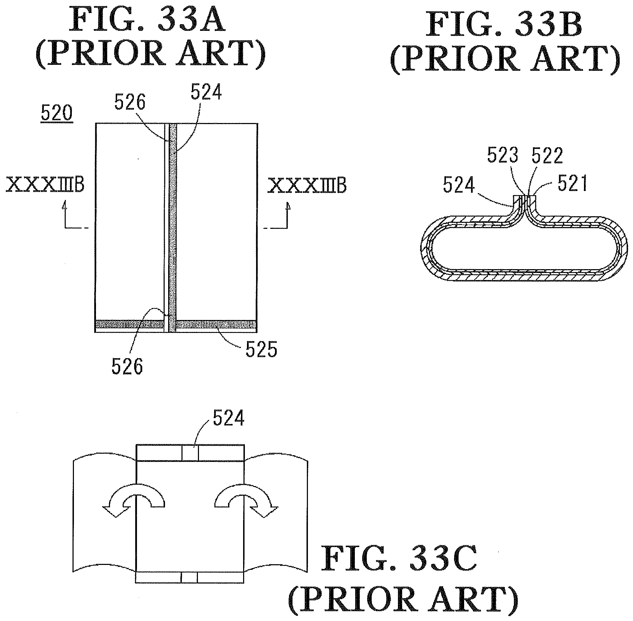

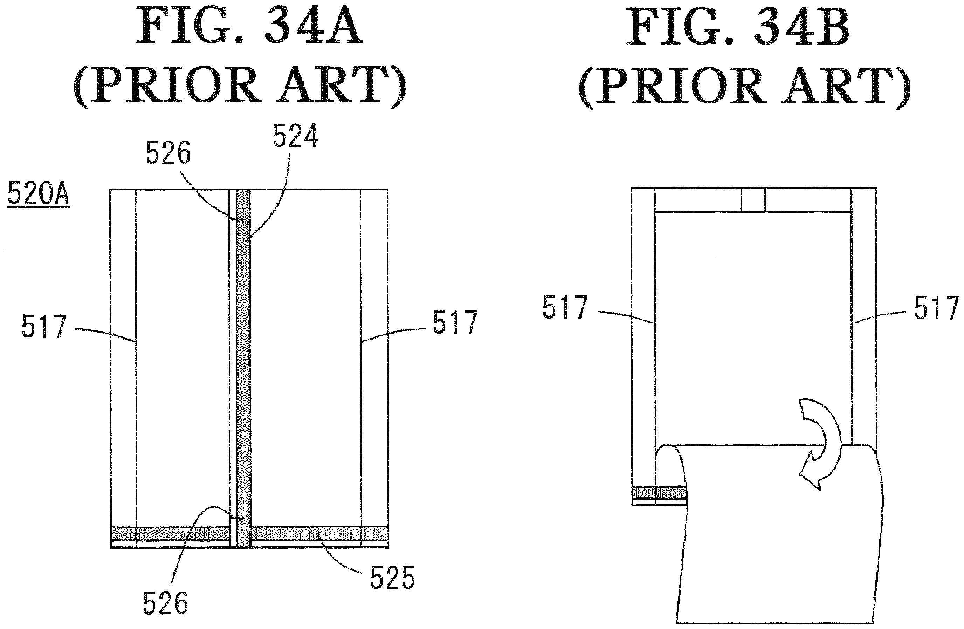

A typical packaging bag is introduced in, for example, Patent Document 4. The packaging bag described in this patent document will be described with reference to Fig. 33 and Fig. 34. Note that Fig. 33 shows the packaging bag described in this Patent Document 4. Fig. 33A is a back view of the packaging bag, Fig. 33B is a sectional view along line XXXIIIB-XXXIIIB in Fig. 33A, and Fig. 33C is a back view of a state where the packaging bag in Fig. 33A is opened. Fig. 34A is a back view of another packaging bag, and Fig. 34B is a back view of a state where the packaging bag in Fig. 34A is opened.

Packaging bags 520 and 520A are for microwave oven heating. As shown in Fig. 33B, the packaging bags use a rectangular-shaped film sheet in which a base layer 521, an intermediate layer 522, and a sealant layer 523 are laminated, and is produced by forming a back seal section 524 where the film sheet is fin-sealed with the sealant layer 523 as an inner surface and an end seal section 525 where an opening end section of a cylinder body formed by fin sealing is sealed. In the packaging bag, thermal adhesion at the back seal section 524 is lower in seal strength compared to the end seal section 525, and the intermediate layer 522 is formed of a monoaxially oriented film such that the stretched direction is orthogonal to the length direction of the back seal section. Due to this configuration, the back seal section 524 is more easily peeled compared to the end seal section, since the thermal adhesion is lower in strength compared to the end seal section 525. Therefore, when a food product is heated together with a bag body in a microwave oven and the vapor generated within a bag reaches a certain pressure, the back seal section peels off to release the vapor so that the bag body can be prevented from bursting. As shown in Fig. 33A and Fig. 34A, the packaging bags have cuts 526 near both upper and lower end sections of the back seal section 524 and in a direction perpendicular to the length direction of the back seal section 524. Due to this configuration, it is possible to tear the bag to the left and right starting from the cuts, thus opening the bag body widely to the left and right so that the opened bag body can be utilized as a tray at the time of a meal.

Furthermore, as shown in Fig. 34B, half-cut lines 527 extending parallel to the back seal section 524 are formed near both left and right end sections on the back surface of another packaging bag 520A. The half-cut line 527 is a cut only in a portion of a sheet in the thickness direction, i.e., penetrating only the base layer 521 or the base layer 521 as well as the intermediate layer 522. With the packaging bag 520A, the bag can be torn in a vertical direction along the half-cut line 527 after being torn to the left and right starting from the cut 526 near the upper end section of the packaging bag.

Microwave ovens are convenient in that various foodstuffs and food products (hereinafter referred to collectively as "food product") such as cooked and processed food products can be heated and cooked easily and quickly in a short amount of time and thus have become widespread in recent years. Along with the spread, food products to be heated and cooked in a microwave oven are also increasing in types and varieties. The food products are generally distributed in a hermetically sealed state in a packaging bag made of plastic, displayed in stores, and bought by general consumers. If the bought food product to be heated and cooked in a microwave oven is heated while still hermetically sealed, the internal pressure within the bag increases due to water vapor generated from the food product inside, such that a bag body is distended. When the internal pressure exceeds a prescribed level at this time, the packaging bag rips or bursts, causing the food product inside to be spattered within the microwave oven and contaminating the oven interior, as well as deforming the cooked food product from the original shape and thus ruining one's appetite.

In order to prevent a packaging bag from such ripping or bursting, a method of cutting a part of the packaging bag with scissors or the like in advance before heating in a microwave oven to form a ventilation opening or a method of forming a needle's eye in a part of the packaging bag has been employed. However, these methods are both cumbersome and occasionally forgotten. Therefore, recently, a packaging bag devised to prevent ripping or bursting by automatically opening a bag opening when the vapor pressure within the packaging bag exceeds a certain level has been proposed.

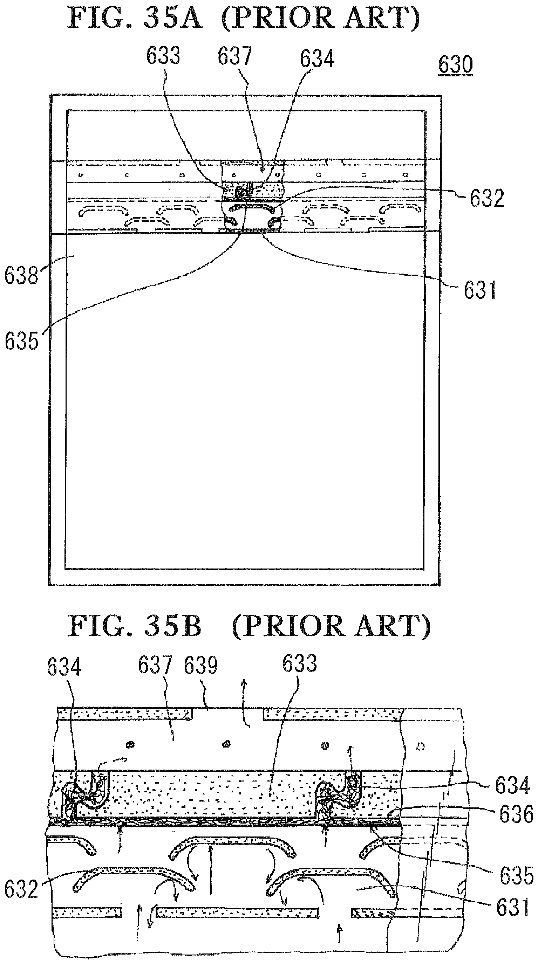

For example, Patent Document 5 describes a bag produced by using a degassing function film. The bag described in this Patent Document 5 will be described below with reference to Fig. 35. Note that Fig. 35 shows the bag described in Patent Document 5. Fig. 35A is a cutaway front view of a main section, and Fig. 35B is an enlarged plan view of the main section in Fig. 35A. A bag 630 has a gas passing band 631 in which liquid stopping sections 632 thermally welded intermittently in a horizontal manner are provided at a prescribed interval in the vertical direction such that upper and lower liquid stopping sections are arranged in two displaced rows, a weld section 633 of which a part on the gas passing band is unwelded for communication with a discharge pore section 634, and an obstruction section 637 on the weld section to cause films on two surfaces to firmly contact each other and release the internal pressure

When accommodated matter in the bag is heated inside a microwave oven and gas is generated from the accommodated matter to increase the pressure within the bag, the generated gas enters the gas passing band 631, passes the discharge pore section 634 from an inner end border section 636 of a nonwoven fabric 635 provided lengthwise to face inwards through to the inside of the obstruction section 637, pushes open a film 638, and is released externally from a discharge opening section 639. When the accommodated matter includes a large liquid portion, the liquid portion may enter the gas passing band 631. However, the entered liquid portion hits the lower surface of the liquid stopping section 632 in the lower row and falls downwards, or the liquid hits the liquid stopping section in the upper row and falls downwards even if further raised by a strong internal pressure. Thus external leakage is prevented. The liquid portion that has hit the liquid stopping section 632 is deflected downwards, particularly since ends on both sides of the liquid stopping section 632 are inclined downwards, and does not move directly upwards due to the liquid stopping section in the upper row being arranged for blockage at a passing section between liquid stopping sections in the lower row. Thus, since only gas is released outside at the time of heating in a microwave oven and a liquid portion does not leak outside, the bag described in Patent Document 5 shown below can be used with confidence.

Patent Document 6 also describes a similar packaging bag. In the packaging bag described in Patent Document 6, a back seal section is heat-sealed in a fin seal style to form a cylinder body, openings at both ends of the cylinder body are heat-sealed and formed into a pillow pouch style, and the back seal section or one of upper, lower, left, and right end border sections of the bag is provided with a discharge path having a bendy structure for adjusting the internal pressure within the bag to a certain range upon increase when the whole bag holding a food product inside is heated.

Furthermore, Patent Documents 7 and 8 below also describe similar packaging bags. The packaging bag described in Patent Document 7 is an easy-to-peel package having a heat seal section and filled with content, wherein a recess section is provided to the outer border of the heat seal section, the inner border of the seal section is linear, and the easy-to-peel package is formed from an interlayer separation film. The packaging bag described in Patent Document 8 has a shape in which a deepest section in a V-shaped portion in a top seal section is located on the content side in relation to an inner border section of a heat seal section.

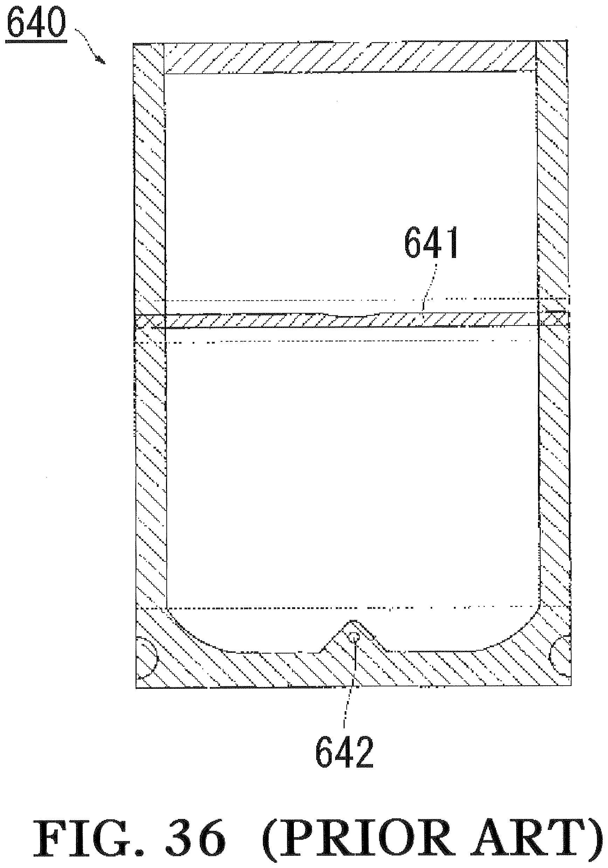

In all of the packaging bags described in these Patent Documents 5 to 8, liquid preparation (condiment) is used together with an ingredient, i.e., the ingredient flavored with the liquid preparation (condiment) is packed into the bag. However, packaging the ingredient flavored with the liquid preparation (condiment) in this manner may cause the liquid preparation (condiment) to be soaked excessively into the ingredient, so that the taste of the ingredient itself is lost. Thus, Patent Document 9 describes a packaging bag in which the inside of a bag is divided into two chambers so that liquid preparation (condiment) is packed into one chamber and an ingredient into the other chamber, thus producing a mixture during heating and cooking. In a packaging bag 640 described in Patent Document 9, a partition seal section 641 in which an easy-to-peel film is applied approximately parallel to one of side borders of an approximately rectangular-shaped inner periphery sealed at the periphery is provided to segment the inside into two chambers, and a ventilation opening 642 is formed in a part of the circumference of the packaging bag, as shown in Fig. 36.

Patent Document 1: JP-A-2006-158254 (paragraphs **[0013]** to **[0015]**)
Patent Document 2: JP-A-2006-27627 (paragraphs **[0014]** and **[0015]** and Fig. 3)
Patent Document 3: JP-A-8-52816 (paragraphs **[0014]** to **[0019]**)
Patent Document 4: JP-A-2008-81191 (paragraphs **[0016]** to **[0021],** Fig. 1, and Fig. 4)
Patent Document 5: JP-A-11-240579 (paragraphs **[0005]** to **[0008]** and Fig. 1)
Patent Document 6: JP-A-2000-327047 (paragraphs **[0034]** to **[0036]** and Fig. 1)
Patent Document 7: JP-A-10-147371 (paragraph **[0036]** and Fig. 1)
Patent Document 8: JP-A-8-276966 (paragraphs **[0028]** to **[0030]** and Fig. 1)
Patent Document 9: JP-A-2009-214892 (paragraph **[0005]** and Fig. 1)

EP0538713 (A1) provides a porous film useful as a fresh fruit and vegetable wrapping material which is obtained by forming a large number of small recesses in an organic film and which does not allow permeation of water, bacteria, and viruses, but allows permeation of a gas, e.g., the oxygen gas or the carbon dioxide gas, and water vapor. The porous film includes the organic film and the large number of recesses formed in the organic film and having an average opening width of 0.5 <0>mto 300 <0>m and inner surfaces exhibiting affinity. The invention provides as well a porous film manufacturing apparatus comprising: feed means for feeding an elongated organic film; a recess-forming unit including a first rotatable roll having a surface on which a large number of dielectric particles, each having sharp pointed portions and a Mohs hardness value of not less than 5, are deposited, and a second roll which is rotatable in a direction reverse to a rotating direction of the first roll and having a surface on which a dielectric layer is formed, the first and second rolls being arranged to cause the elongated organic film to pass therebetween, and either one or both of the rolls being movable in a direction along which the first and second rolls are aligned; pressure control means, arranged near two end portions of either one of the rolls, of the recess-forming unit, for controlling a pressure applied from each of the rolls to the elongated organic film; and high-voltage supply means for supplying a high voltage to the first roll.

US 2003/075224 A1 describes indentation patterns are scored in microwave packaging materials to enhance the baking and browning effects of the microwave packaging materials on food products. The indentation patterns provide venting to either channel moisture from one area of the food product to another, trap moisture in a certain area to prevent it from escaping, or channel the moisture completely away from the food product. The indentation patterns cause the microwave packaging material underneath a food product to be slightly elevated above the cooking platform in the base of a microwave. The indentation patterns lessen the heat sinking effect of the cooking platform by providing an air gap for insulation.; Elevating the base of the microwave packaging material further allows more incident microwave radiation to propagate underneath the microwave packaging material to be absorbed by the food product or by microwave interactive materials in the microwave packaging material that augment the heating process.

US 4 777 073 A describes a breathable polyolefin film prepared by melt embossing a highly filler polyolefin film to impose a pattern of different film thickness therein and by stretching the melt embossed film to impart greater permeability in the areas of reduced thickness in comparison to the areas of greater thickness.

### DISCLOSURE OF INVENTION

### PROBLEM TO BE SOLVED BY THE INVENTION

In the preservation bag in Patent Document 1 described above, the polymer film is provided with a penetrating pore that penetrates the film. Therefore, depending on the usage environment, there is a risk of unwanted matter (for example, mote, dust, or bacteria) entering inside the bag. Due to the risk of moisture seeping outside through the penetrating pore when something containing moisture inside is put within, the preservation bag is unsuitable for packaging of something including such moisture, and therefore has a potential problem of limiting the applications. The films in Patent Documents 2 and 3 described above have a non-penetrating pore (hole). Therefore, entrance of unwanted matter is prevented, and moisture does not seep outside naturally even if there is moisture contained. When the bag for microwave oven heating in Patent Document 2 described above is heated in a microwave oven, water vapor is generated from the frozen food product within the bag, and the water vapor permeates through a thin portion at the bottom of the non-penetrating pore, enters the intermediate layer, and is released outside. An increase in the internal pressure within the bag causes the water vapor at this time to permeate through the thin portion at the bottom of the non-penetrating pore and be released.

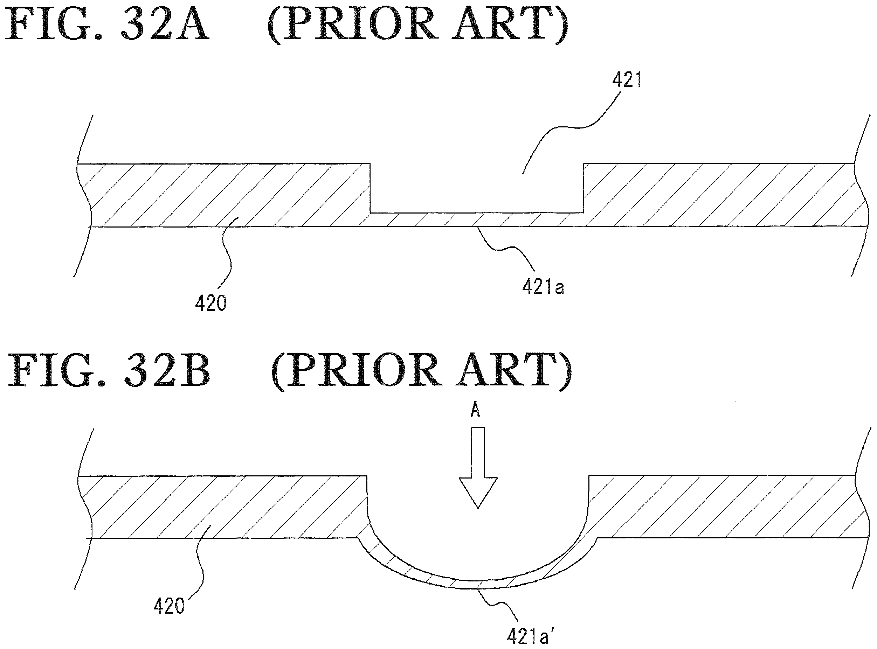

The inventors of the present invention have made a film provided with a similar non-penetrating hole modeled after the inner layer forming the laminate film in Patent Document 2 described above and have confirmed the gas permeation effect in an experiment. Note that Fig. 32A is an enlarged sectional view of a non-penetrating hole portion of the film in which the non-penetrating hole is provided to a base film, and Fig. 32B is a sectional view illustrating the permeation effect when an increase in internal pressure causes gas permeation. As shown in Fig. 32A, this non-penetrating hole 421 is formed from a recessed hole in which one surface of a base film 420 is recessed towards the other surface. The thickness of a bottom 421a of the recessed hole is approximately uniform, and the shape is such that the other surface does not protrude outwards. The recessed hole 421 in the drawing is in a state where internal pressure is not applied. When pressure is applied to the recessed hole in an arrow direction A in this state, the bottom of the recessed hole 421 stretches, expands, and distends, as shown in Fig. 32B. The distention causes the thickness of the bottom to become thin, and gas permeates through this thin portion 421a. That is, gas permeates through the thin portion 421a' where the bottom has stretched and expanded, but hardly permeates through in an unstretched or unexpanded state.

The gas permeation is influenced by the thickness at the bottom. The permeation amount increases as the thickness decreases, but if the thickness is reduced in excess, a micropore, i.e., a pinhole, is generated in a thin portion such that this portion is penetrated. The micropore poses the same problem as the problem with the film in Patent Document 1 described above. Thus, even if attempted, the reduction in thickness is limited such that thinning to 8 µm or less is extremely difficult with current processing techniques.

Thus, the gas-permeable film provided with the recessed hole 421 has difficulty in adjusting the gas permeation amount to a desired permeation amount and thus cannot be used for applications with such requirements. Note that although the structure of the non-penetrating hole is not clearly stated for the gas-permeable film in Patent Document 3 described above, it is speculated to be a structure approximately the same as the recessed hole in Fig. 32A, and there is potentially a similar problem.

In recent years, this type of gas-permeable film has further increased in applications, and there has been a demand for further improvement in the gas permeation performance. Gas-permeable films up to this point have been used for packaging of citrus fruits, heating bags for a microwave oven, or the like. However, since there are many types of citrus fruits and food products and preservation methods have been increasing in variety, even packaging for such applications require a packaging material (film) of higher performance. Given also that applications have been increasing, a packaging material (film) having a flexible gas permeation performance is necessary in order to adapt to those applications.

For food products such as vegetables, the required oxygen permeation amount differs considerably depending on the kind. For example, lettuce, scallions, garlic chives, king oyster mushrooms, cut vegetables (mixed), bean sprouts, asparagus, spinach, and the like differ considerably in the oxygen permeation amount. The gas amounts generated from kimchi, napa cabbage pickles, allium chinense, pickles, and the like respectively differ, and these gas generation amounts are greater than in vegetables.

For example, green goods including vegetables continue respiration even after harvest. That is, the harvested green goods respire more, i.e., perform more active respiration, than when in fields, for restoration of the green goods themselves. However, when the respiration becomes active, nutrients in the green good are consumed, and ripening and biological aging progress rapidly. However, the packaging for the green goods is usually a hermetically sealed packaging in which a packaging bag is packed and a bag opening is hermetically sealed. In the hermetically sealed packaging, oxygen existing within the bag at the time of packaging is used up over time. Therefore, an anaerobic state where oxygen hardly exists within the bag does not allow respiration and causes the green good to rot. Regarding the respiration of the green goods, the proportions of oxygen and carbon dioxide are roughly 20.9% for oxygen and 0% for carbon dioxide in a state before packaging (unsealed packaging), roughly 0% for oxygen and 20% or more for carbon dioxide in an anaerobic state (that does not allow respiration), and is said to be optimal at 5 to 10% for oxygen and 15 to 20% for carbon dioxide in a hibernation state described below. Thus, in packaging of green goods, it is necessary to adjust the gas permeability of the bag depending on the difference in respiration amount of the green good and in accordance with the green good and distribution conditions (particularly, the temperature).

A modified atmosphere (MA) packaging is a method in which a balance between air within a bag and the respiration performed by a green good itself causes an atmosphere of high concentration of carbon dioxide and low concentration of oxygen such that the green good comes to a hibernation state, thus delaying the growth or degradation of the green good and keeping the quality to last long. That is, by suppressing the respiration amount to be as low as possible, the rate of quality deterioration is slowed down to preserve the quality. Although a unidirectional packaging material is preferable for the MA packaging, packaging materials, i.e., gas-permeable films, up to this point do not have such properties.

Double packaging is performed for some food products. An example of double packaging is a double packaging in which a small inner bag is packed with an object A and hermetically sealed, and the inner bag packed with the object A is put in a large outer bag to be hermetically sealed. In the double packaging, an object B different from the object A in the inner bag may be packed into the large outer bag. The objects A and B are usually packaged to include the following.
(i) A food product such as a snack as the object A in the inner bag, and a preservative or a flavoring agent such as alcohol, inert gas, or flavor as the object B in the outer bag
(ii) A preservative and a flavoring agent such as alcohol or flavor as the object A in the inner bag, and a food product such as a snack as the object B in the outer bag

In the double packaging of (i) described above, the object B in the outer bag permeates and enters into the inner bag for preservation and flavoring of the object A. In the double packaging of (ii) described above, the object A in the inner bag permeates through the inner bag and enters into the outer bag for preservation and flavoring of the object B. In the double packaging, permeation and release of gas within the inner bag into the outer bag in the packaging of (i) described above leads to quality deterioration of the object A, and permeation and release of gas within the outer bag into the inner bag in the packaging of (ii) described above leads to quality deterioration of the object B. Thus, in order to maintain the quality of an object in such double packaging, a gas-permeable film requires a unidirectional gas permeability. However, gas-permeable films up to this point have not been development from this viewpoint, and the films in Patent Documents 2A and 3A described above obviously do not have such unidirectionality.

The packaging bag in Patent Document 4 described above can be opened widely to the left and right by tearing the bag body to the left and right from the cut at the back seal section. However, the packaging bag requires a strong tearing force at the time of opening and, when opened with a strong force, poses a risk of packaged matter popping outside with too much momentum at the instant of opening. Even upon tearing to the left and right from the cut at the back seal section, opening along an intended opening line is extremely difficult, easily causing a random opened opening shape. Therefore, for use as a tray, there is a potential problem that the tear is not linear or neat such that an opened opening border becomes an awkward shape that is unattractive and lacking in design.

Of these packaging bags, the packaging bag 520 shown in Fig. 33 has the risk that, upon tearing to the left and right, the tear reaches both end edge borders of the packaging bag 520. When the packaging bag 520 is torn up to both end edge borders and the packaged matter includes liquid, the liquid flows outside and contaminates the vicinity, and, if heated in a microwave oven, poses a risk of a burn from hot water. By contrast, the packaging bag 520A shown in Fig. 34 has the half-cut lines 527 near both ends of the bag, and therefore appears to be untearable up to both end edge borders as in the packaging bag 120 described above. However, the result of an experiment showed that opening along the half-cut line 527 is extremely difficult, and tearing to the left and right causes a tear up to both end edge borders of the packaging bag 520A beyond the half-cut line 527, thus posing a similar problem as with the packaging bag 520 described above. Particularly, it was found that those produced from a single-layer film cannot be opened along the half-cut line 527 and are torn up to both end edge borders of the packaging bag 520A beyond the half-cut line 527.

The packaging bag in Patent Document 4 described above is for a microwave oven. However, a packaging bag for packaging of not only frozen food products but also various food products, e.g., snacks, vegetables, fruits, sliced raw fish, meat, or prepared dishes, or fermented food products such as kimchi or pickles requires a specification suited for preservation of these food products. For example, fresh vegetables or the like need to be delivered to consumers in a state where freshness is preserved, and therefore a packaging bag requires prescribed gas-barrier properties and air permeability. A packaging bag for fermented food products such as kimchi similarly requires gas-barrier properties and air permeability.

The packaging bags for a microwave oven described in Patent Documents 5 to 8 described above can prevent a bag body from ripping or bursting, since a part of the bag body is opened automatically when vapor pressure within the bag at the time of heating and cooking exceeds a certain level. However, these packaging bags have several potential problems due to the configurations thereof. That is, the packaging bag described in Patent Document 5 described above is provided with each of the gas passing band having two rows of the liquid stopping sections, the weld section having the discharge pore section, and the obstruction section having the discharge opening section from the inside outwards. Since the opening of the discharge opening section is open, inside gas as well as liquid and juice passing through the gas passing band and the weld section for any reason causes a risk of the liquid and juice leaking outside from the opening of the discharge opening section and a further risk of germs or the like entering inside from the opening of the discharge opening section. While the packaging bag described in Patent Document 5 described above is provided with the two rows of the liquid stopping sections at the gas passing band in order to eliminate a spurt of liquid and juice, there is a risk of liquid leakage occurring even with the arrangement of the liquid stopping section. Moreover, since the gas passing band, the weld section, and the obstruction section needs to be provided with the two rows of the liquid stopping sections, the nonwoven fabric, the discharge pore section, and the discharge opening section, the structure becomes extremely complex, the production cumbersome, and the cost high.

In the packaging bag described in Patent Document 6 described above, the discharge path has a bendy structure. However, the packaging bag also has a similar problem as in Patent Document 5 described above. Furthermore, although the recess section or a V-shaped section as an opening part simplifies the structure, the packaging bags described in Patent Documents 7 and 8 described above require use of a special interlayer separation film and therefore poses a risk of an increase in cost. In the packaging bag described in Patent Document 9 described above, the partition seal section is configured from the easy-to-peel film and a material thereof differs from a bag body. Therefore, two types of materials are necessary and production is cumbersome. Since the easy-to-peel film of the partition seal section differs in material from the bag body, a gap from the bag body becomes a section of weak seal, such that liquid and juice or the like may spurt simultaneously with gas leakage from this portion when the internal pressure within the bag increases.

Furthermore, when liquid such as a condiment is put into an upper chamber of the packaging bag described in Patent Document 9 described above, the liquid may fall into a lower chamber and mix with an ingredient in the lower chamber, since a center section of the partition seal section is partly an unsealed section. Moreover, in the packaging bag described in Patent Document 9 described above, the unsealed section opens and the opening is enlarged when the internal pressure within the bag is increased during heating and cooking. However, since the opening is narrow, the form is such that the condiment in the upper chamber enters the lower chamber through the narrow opening, and the condiment is less likely to be widely dispersed on the ingredient within the lower chamber, resulting in a poor mixture and an uneven taste. For example, when salt in the upper chamber and edamame put in the lower chamber are packaged, the salt is less likely to be dispersed throughout and is less likely to attach evenly on the surface of the edamame, since the opening is narrow. Furthermore, while it is necessary to move a foodstuff onto a plate from the packaging bag after cooking, the action of moving the hot foodstuff is dangerous and requires care. Furthermore, washing the plate becomes inevitable after eating.

The present invention has been made to solve the problems of the related art up to this point on the basis of the requirements described above. An object of the present invention is to provide a gas-permeable film in which the gas permeation performance has been improved to enable use in a wide range of applications, particularly as a packaging film suitable for packaging various objects, and a manufacturing method therefor.

A further object of the present invention is to provide a packaging bag that is produced using the gas-permeable film described above, is easily opened along an opening line determined in advance without being torn beyond this line, and can be used as a tray having an attractive opened opening shape after opening.

Another object of the present invention is to provide a packaging bag that is produced using the gas-permeable film described above and suitable for MA packaging, degassing packaging for kimchi, pickles, or the like, and packaging for a microwave oven that is excellent in security, sanitation, and productivity, can automatically reduce the internal pressure without occurrence of ripping or bursting in a state where a bag body is standing independently at the time of heating and cooking, can package a foodstuff and liquid preparation (condiment) separately, causes the liquid preparation (condiment) to be widely dispersed on and mixed with the foodstuff at the time of heating and cooking, can cook steamed vegetables or the like easily by microwaving the whole bag, and is such that the bag body can be utilized directly as a simple plate after heating and cooking.

### MEANS FOR SOLVING PROBLEM

In order to solve the problem described above, a gas-permeable film according to a first aspect of the present invention is a gas-permeable film including a gas-permeable section for gas permeation that is provided to a base plastic film of a prescribed thickness. In the gas-permeable film, the gas-permeable section is a non-penetrating recession having a top opening and a bottom, and the recession is formed such that a thickness decreases gradually from the top opening towards the bottom with the bottom being thinnest. The bottom of the recession protrudes outwards from a surface of the base plastic film.
The recession is formed as a slit or recessed hole having a U-shapedor V-shaped sectional shape. The recession is formed from a discontinuous slit group in which a plurality of slits are arranged at a prescribed interval.

A gas-permeable film according to a second aspect is the gas-permeable film according to the first aspect, in which the plurality of slits of the discontinuous slit group each have one of a straight line, curved, and bent shapes in planar view.

A gas-permeable film according to a third aspect is the gas-permeable film according to the first aspect, in which the plurality of slits of the discontinuous slit group are each arranged in a shape of a straight line at a prescribed interval.

A gas-permeable film according to a fourth aspect is the gas-permeable film according to the second aspect, in which an extending direction of each of the plurality of slits of the discontinuous slit group is inclined at a prescribed angle with respect to an extending direction of the straight line.

A gas-permeable film according to an fifth aspect is the gas-permeable film according to the first aspect, in which the base plastic film is a film of at least one layer of polypropylene, polyethylene, polyethylene terephthalate, and polyacetal with a thickness of 15 to 100 µm, and a thickness at the bottom of the recession is 2 to 70 µm.

A gas-permeable film according to a sixth aspect is the gas-permeable film according to the fifth aspect, in which the base plastic film is a one-layer film, and another plastic film is laminated on a front surface or back surface of the base plastic film.

A gas-permeable film according to a seventh aspect is the gas-permeable film according to any one of the first to sixth aspects that is for hermetically sealing an opening of a container.

A method for manufacturing a gas-permeable film according to an eighth aspect of the present invention is a method for manufacturing a gas-permeable film in which a gas-permeable section for gas permeation is formed in a plastic film of a prescribed thickness. In the method for manufacturing a gas-permeable film, the gas-permeable section is formed from a recession for which the base plastic film is brought to a temperature exceeding a glass transition temperature and below a melting temperature of the film, and the film is pressed and stretched from one surface towards another surface to be recessed a prescribed amount, such that a thickness decreases gradually from a top opening towards a bottom with the bottom being thinnest and the bottom protrudes outwards from the other surface. The recession is formed as a slit having a U-shaped or V-shaped sectional shape, and the recession is formed from a discontinuous slit group wherein a plurality of slits are arranged at a prescribed interval.

A method for manufacturing a gas-permeable film according to a ninth aspect is the method for manufacturing a gas-permeable film according to the eighth aspect, in which another plastic film is laminated on one of front and back surfaces of the base plastic film after the recession has been formed in the base plastic film.

A method for manufacturing a gas-permeable film according to a tenth aspect is the method for manufacturing a gas-permeable film according to the ninth aspect, in which the recession is formed by running the plastic film between one roller provided with a protrusion of a prescribed shape and another roller not formed with the protrusion of the prescribed shape.

A method for manufacturing a gas-permeable film according to an eleventh aspect is the method for manufacturing a gas-permeable film according to the tenth aspect, in which a rigidity of the one roller provided with the protrusion of the prescribed shape being used is lower than a rigidity of the other roller.

A method for manufacturing a gas-permeable film according to a twelfth aspect is the method for manufacturing a gas-permeable film according to any one of the eighth to eleventh aspects, in which a film of at least one layer of polypropylene, polyethylene, polyethylene terephthalate, and polyacetal is used as the base plastic film with a thickness of 15 to 100 µm, and a thickness at the bottom of the recession is 2 to 70 µm.

A packaging bag according to a thirteenth aspect of the present invention includes a one-end-open bag body formed using the gas-permeable film according to any one of the first to seventh aspects.

A packaging bag according to a fourteenth aspect of the present invention is the packaging bag according to the thirteenth aspect, in which the one-end-open bag body has a back seal section in which two end edge sections are fin-sealed and an end seal section in which one opening of an end edge section orthogonal to the back seal section is sealed, the back seal section has a tear section that is a partial tear from an end section of the back seal section in a direction orthogonal to a length direction of the back seal section, a surface where the back seal section is located is provided with an opening cut line formed to be apart from the back seal section to extend approximately parallel to the back seal section and a guide cut line formed towards the tear section of the back seal section from the opening cut line, and the opening cut line and the guide cut line are formed by the recession of the gas-permeable film.

A packaging bag according to a fifteenth aspect is the packaging bag according to the fourteenth aspect, in which the tear section is formed in a plurality of parts to be apart from each other, the opening cut lines are formed on both sides of the back seal, the guide cut line is formed in a plurality of parts each towards the tear section in the plurality of parts from each of the opening cut lines.

A packaging bag according to a sixteenth aspect is the packaging bag according to the fifteenth aspect, in which the guide cut line is divided into a plurality of short first guide cut lines that extend at a prescribed interval from the opening cut line and a second guide cut line that is apart a prescribed distance from the first guide cut line, extends to a side of the back seal section at a different interval from the first guide cut line, and is longer than the first guide cut line.

A packaging bag according to a seventeenth aspect is the packaging bag according to the thirteenth aspect, in which in the one-end-open bag body, a packaging film material laminated on one surface with an outer sheet material to have a prescribed distance from both end borders with an intermediate layer in between is used such that the packaging film material is bent from the outer film portion with both end border sections being fin-sealed by the back seal section and an opening formed at an end edge section orthogonal to the back seal section is sealed by the end seal section, the back seal section is located in a center section of the bag body or to a side of an end section at one of both ends from the center section, a tear section is formed at least near one end section of and in a direction orthogonal to a length direction of the back seal section, the intermediate layer is provided with a guide cut line that extends from the outer film end border edge towards the tear section of the back seal section for opening, and the guide cut line is formed by the recession of the gas-permeable film.

A packaging bag according to an eighteenth aspect is the packaging bag according to the seventeenth aspect, in which the bag body has an opening cut line at the outer film end border edge, and the opening cut line is formed by the recession of the gas-permeable film.

A packaging bag according to a nineteenth aspect is the packaging bag according to the seventeenth or eighteenth aspect, in which the tear section is formed in a plurality of parts to be apart from each other, and a plurality of the guide cut lines are formed towards the plurality of the tear sections of the back seal section from the outer film end border edge or the opening cut line to extend approximately parallel at an approximately identical interval as an interval of the tear sections.

A packaging bag according to a twentieth aspect is the packaging bag according to the nineteenth aspect, in which the guide cut line is divided into a plurality of short first guide cut lines that extend at a prescribed interval from the opening cut line and a long second guide cut line that is apart a prescribed distance from the first guide cut line and extends to a side of the back seal section at an interval different from the interval, and both the cut lines are formed from a non-penetrating groove in which only a portion in a thickness direction of the plastic film is cut.

A packaging bag according to a twenty-first aspect is the packaging bag according to the thirteenth aspect, in which in the one-end-open bag body, a pair of overlapping first and second plastic films in which at least one is formed from a gas-permeable film are sealed together at a bottom and both side edge borders continuous with the bottom, a remaining one end opposing the bottom is a bag opening that is open, the bag opening has a bag opening seal section that is sealed after packaged matter is packed, a gas release section that, when an internal pressure of the bag body has increased to a prescribed value or greater, externally releases the increased internal pressure in a state where the bag opening is sealed and a liquid leakage block section that blocks leakage of liquid from the packaged matter to the gas release section are provided in a vicinity of the bag opening in order from the bag opening towards the bottom, and the gas release section is formed by the recession of the gas-permeable film.

A packaging bag according to a twenty-second aspect is the packaging bag according to the twenty-first aspect, in which the gas release section is provided to straddle between a part that seals the bag opening and the liquid leakage block section.

A packaging bag according to a twenty-third aspect is the packaging bag according to the twenty-first aspect, in which a prescribed gap is provided between the bag opening seal section and the liquid leakage block section, and the gas release section is provided at the gap.

A packaging bag according to a twenty-fourth aspect is the packaging bag according to the twenty-first aspect, in which the liquid leakage block section is formed from a weak thermal weld seal band in which the pair of gas-permeable films is thermally welded with a weak seal strength at a prescribed width between the both side edge borders, and the seal strength of the weak thermal weld seal band is weaker than a thermal weld seal strength of the both side edge borders and the bag opening.

A packaging bag according to a twenty-fifth aspect is the packaging bag according to the twenty-fourth aspect, in which the weak thermal weld seal band is provided with at least one part that is a non-weld or a weak weld part close to the non-weld such that width is crossed or the width is narrowed.

A packaging bag according to a twenty-sixth aspect is the packaging bag according to the twenty-fourth aspect, in which the seal strength of the weak thermal weld seal band is low on a bottom side of the bag body and high on a side of the gas release section.

A packaging bag according to a twenty-seventh aspect is the packaging bag according to the twenty-first aspect, in which the gas release section is formed from a continuous slit or discontinuous slits, and the slit is recessed from an inner wall surface of the film towards an outer front surface such that a peak section thinly protrudes outwards.

A packaging bag according to a twenty-eighth aspect is the packaging bag according to the twenty-first aspect, in which the one-end-open bag body is provided with a partition section between the liquid leakage block section and the bottom for a separate accommodation of packaged matter, the partition section is formed from the weak thermal weld seal band thermally welded at a prescribed width between the both side edge borders of the pair of gas-permeable films, and the seal strength of the weak thermal weld seal band is weaker than a thermal weld seal strength of the both side edge borders and the bag opening.

A packaging bag according to a thirty-ninth aspect is the packaging bag according to the twenty-eighth aspect, in which the weak thermal weld seal band is provided with at least one part that is a non-weld or a weak weld part close to the non-weld such that width is crossed or the width is narrowed.

A packaging bag according to a thirtieth aspect is the packaging bag according to the twenty-eighth aspect, in which the seal strength of the weak thermal weld seal band is low on a bottom side of the bag body and high on a side of the gas release section.

A packaging bag according to a thirty-first aspect is the packaging bag according to the twenty-eighth aspect, in which the one-end-open bag body has a notch in at least one edge of the both side edges on a side to the bottom from the partition section.

A packaging bag according to a thirty-second aspect is the packaging bag according to the twenty-first aspect, in which the bottom is folded at a time of non-accommodation of the packaged matter and has a structure in which an area is increased to a size that enables independent standing when the packaged matter is accommodated.

A packaging bag according to a thirty-third aspect is the packaging bag according to the twenty-first aspect, in which the bag opening seal section is sealed in a wave shape over the gas release section.

A packaging bag according to a thirty-fourth aspect is the packaging bag according to the twenty-first aspect, in which the bag opening seal section is provided with a width wider than a portion in which the both side edge borders are sealed by thermal welding.

A packaging bag according to a thirty-fifth aspect is the packaging bag according to any one of the twenty-first to thirty-fourth aspects, in which the bag opening seal section has at least one pore.

### EFFECTS OF THE INVENTION

With the invention according to the first to thirteenth aspects, the bottom of the recession can be thinned approximately maximally (for example, to about 2.0 µm) from the thickness of the base film, and the range of gas permeation degree is increased by the thinning. Thus, use in various fields becomes possible. Particularly, it becomes useful as a packaging material. That is, it becomes useful to be used in a packaging material for vegetables, fermented food products, or the like and for sealing of a packaging bag or container for fermented food products, for microwave oven heating, or the like. Since gas permeation is easy in one direction and difficult in the opposite direction, it becomes also effective for MA packaging, double packaging, or the like.

With the packaging bag according to the fourteenth aspect of the invention, a packaging bag that can easily be opened along an opening line determined in advance without being torn beyond the opening cut line and can be used as a tray having an attractive opened opening shape after opening can be provided. For example, if a frame is printed at the opening cut line, the guide cut line, and a portion connecting both the cut lines, the bag can be opened with the frame as an opened opening. Therefore, the bag can be used as a tray having an attractive opened opening shape after being opened.

With the packaging bag according to the fifteenth aspect, the bag body can be opened from an arbitrary tear section with an opened opening of a desired size.

Furthermore, with the packaging bag according to the sixteenth aspect, the bag body can be opened reliably from an arbitrary tear section with an opening of a desired size. That is, due to the length of the first guide cut line being a prescribed length, e.g., the same as the interval of the adjacent first guide cut lines or slightly longer than the interval, a tear does not occur from the second guide cut line directly to the opening line but is guided to one of the adjacent first guide cut lines, and thus opening becomes reliable. Since the guide cut line and the opening cut line can be formed in a film before the bag is produced, manufacture of the bag body becomes easy.

Furthermore, since the guide cut line is provided to extend approximately perpendicularly from the opening cut line such that the two cut lines are directly connected and a connecting section of the cut lines becomes an approximately T-shaped connection, a tear is guided smoothly from the guide cut line to the opening cut line upon opening, and the tear does not exceed the opening cut line as in the related art. Both the cut lines are formed from the discontinuous slit group in which the plurality of short slits are arranged at the prescribed interval, the slits have the non-penetrating recession that is recessed and distended a prescribed amount from one surface of the plastic film towards the other surface such that the bottom protrudes outwards from the other surface, and the recession is formed such that the thickness decreases gradually from the top opening towards the bottom with the bottom being the thinnest. Therefore, the bottom of the recession can be thinned approximately maximally (for example, to about 2.0 µm) from the thickness of the base film, and the range of gas permeation degree is increased by the thinning. Thus, use in various fields becomes possible. Particularly, it becomes useful for use in a packaging material for vegetables, fermented food products, or the like and a container for fermented food products, for microwave oven heating, or the like. Since gas permeability in one direction is high and gas permeation in the opposite direction is difficult, it becomes also effective for MA packaging, double packaging, or the like.

Moreover, with the packaging bags according to the seventeenth or eighteenth aspect, a packaging bag that can easily be opened along the cut line and the outer film end border edge without being torn beyond the outer film end border edge and can be used as a tray having an attractive opened opening shape after opening can be provided.

Moreover, with the packaging bag according to the nineteenth aspect, the bag body can be opened from an arbitrary tear section with an opened opening of a desired size.

Moreover, with the packaging bag according to the twentieth aspect, the bag body can be opened reliably from an arbitrary tear section with an opening of a desired size. That is, due to the length of the first guide cut line being a prescribed length, e.g., the same as the interval of the adjacent first guide cut lines or slightly longer than the interval, a tear does not occur from the second guide cut line directly to the opening line but is guided to one of the adjacent first guide cut lines. Thus, opening becomes reliable. Since the guide cut line and the opening cut line can be formed in a film before the bag is produced, manufacture of the bag body becomes easy.

Furthermore, since the guide cut line is provided to extend approximately perpendicularly from the outer film end border edge or the opening cut line such that the guide cut line is directly connected with the outer film end border edge or the opening cut line and a connecting section thereof becomes an approximately T-shaped connection, a tear is guided smoothly from the guide cut line to the opening cut line upon opening, and the tear does not exceed the outer film end border edge or the opening cut line as in the related art. Both the cut lines are formed from the discontinuous slit group in which the plurality of short slits are arranged at the prescribed interval, the slits have the non-penetrating recession that is recessed and distended a prescribed amount from one surface of the plastic film towards the other surface such that the bottom protrudes outwards from the other surface, and the recession is formed such that the thickness decreases gradually from the top opening towards the bottom with the bottom being the thinnest. Therefore, the bottom of the recession can be thinned approximately maximally (for example, to about 2.0 µm) from the thickness of the base film, and the range of gas permeation degree is increased by the thinning. Thus, use in various fields becomes possible. Particularly, it becomes useful for use in a packaging material for vegetables, fermented food products, or the like and a container for fermented food products, for microwave oven heating, or the like. Since gas permeability in one direction is high and gas permeation in the opposite direction is difficult, it becomes also effective for MA packaging, double packaging, or the like.

The packaging bags according to the twenty-first to twenty-seventh aspects of the present invention can reliably ensure that the bag body does not rip or burst during transportation or heating, have excellent sanitation in that bacteria do not enter within the bag from outside even at the time of distribution or storage, have excellent productivity in that production is possible easily and at low cost, and can be used with confidence without leakage of liquid and juice or the like. Particularly since the gas release section and the liquid leakage block section are provided separately in the vicinity of the bag opening, the respective functions can be fulfilled in the respective sections. That is, the liquid leakage block section can block external leakage of liquid of the bag body, and, when the pressure within the bag body has increased to a prescribed value or greater, the gas release section can externally release the increased internal pressure. Since the gas release section and the liquid leakage block section are such that the former is provided to a part close to the bag opening and the latter behind the gas release section as the liquid leakage block section inside the bag body, the gas release section and the liquid leakage block section can be formed easily to have the respective functions. Particularly, forming the gas release section becomes easy.

With the packaging bags according to the twenty-eighth to thirty-second aspects of the present invention, the internal pressure can automatically be reduced without occurrence of ripping or bursting in a state where the bag body is standing independently at the time of heating and cooking, a foodstuff and liquid preparation (condiment) can be packaged separately, the liquid preparation (condiment) is widely dispersed on and mixed with the foodstuff at the time of heating and cooking, and the bag body can be utilized directly as a simple plate after heating and cooking.

With the packaging bag for a microwave oven according to the thirty-third aspect of the present invention, the proportion of intersections of a thermally welded seal portion at the bag opening and the gas release section increases, and thus the internal pressure generated within the bag body can be released more efficiently.

With the packaging bag for a microwave oven according to the thirty-fourth aspect of the present invention, a portion with which a user can hold the packaging bag heated in a microwave oven with a bare hand can be provided to a bag opening portion, and thus a secure removal from the microwave oven or secure carrying by the user becomes possible.

With the packaging bag for a microwave oven according to the thirty-fifth aspect of the present invention, a user can pass a finger through a pore for holding or kitchen chopsticks or the like can be inserted. Therefore, removal or carrying of the heated packaging bag can be performed more securely.

### BRIEF DESCRIPTION OF DRAWINGS

Fig. 1 shows a gas-permeable film according to an embodiment of the present invention. Fig. 1 is a plan view, and Fig. 1B is an enlarged view of a portion IB in Fig. 1.
Fig. 2 is a sectional view along line II-II in Fig. 1.
Fig. 3 is a schematic view of a manufacturing device that manufactures the gas-permeable film in Fig. 1.
Fig. 4 illustrates the gas permeation effect of a slit. Fig. 4A is a sectional view of the slit, Fig. 4B is a sectional view of a slit shape at the time of gas permeation, and Fig. 4C is a sectional view of the slit shape at the time of gas permeation from an opposite direction.
Fig. 5 is a plan view of a gas-permeable film according to another embodiment.
Fig. 6 is a sectional view of a slit portion of a gas-permeable film according to still another embodiment.
Fig. 7 is a schematic view of a manufacturing device that manufactures the gas-permeable film in Fig. 6.
Fig. 8 is a perspective view of a packaging bag made using a gas-permeable film.
Fig. 9 is a perspective view of another packaging bag made using a gas-permeable film.
Fig. 10 is a perspective view of still another packaging bag made using a gas-permeable film.
Fig. 11 is a perspective view of yet another packaging bag made using a gas-permeable film.
Fig. 12 is a perspective view of a container in which the opening is covered with a gas-permeable film.
Fig. 13 is a back view of a packaging bag according to Embodiment 1 of the present invention.
Fig. 14A and Fig. 14B are sectional views when cut along line XIVA-XIVA in Fig. 13.
Fig. 15 is a back view of the packaging bag in Fig. 13 at the time of opening.
Fig. 16 shows a portion of the packaging bag in Fig. 13. Fig. 16A is an enlarged view of a portion XVIA in Fig. 13, and Fig. 16B is an enlarged view of a portion XVIB in Fig. 15.
Fig. 17A is a back view of a state where the packaging bag is opened, and Fig. 17B is a back view of a part of the packaging bag that is detached upon opening the packaging bag.
Fig. 18 is a back view of a packaging bag according to Embodiment 2 of the present invention.
Fig. 19 is a back view of a packaging bag according to Embodiment 3 of the present invention.
Fig. 20 shows a portion of the packaging bag in Fig. 19. Fig. 20A is an enlarged back view, and Fig. 20B is an enlarged view of a portion XXB in Fig. 20A.
Fig. 21 shows a packaging bag according to Embodiment 4 of the present invention. Fig. 21A is a back view, and Fig. 21B is a sectional view along line XXIB-XXIB in Fig. 21A.
Fig. 22 shows a base film used in a packaging bag of Embodiment 5 of the present invention. Fig. 22A is a plan view, and Fig. 22B is an enlarged view of a portion XXIIB in Fig. 22.
Fig. 23 shows a film sheet used in a packaging bag of Embodiment 6. Fig. 23A is a partial sectional view of the film sheet, and Fig. 23B is a partial sectional view of a film sheet according to a modification example of the packaging bag.
Fig. 24 shows a packaging bag for a microwave oven according to Embodiment 1 of the present invention. Fig. 24A is a front view, Fig. 24B is a sectional view along line XXIVB-XXIVB in Fig. 24A, and Fig. 24C is a sectional view along line XXIVC-XXIVC in Fig. 24A.
Fig. 25 shows a liquid leakage block section in the packaging bag in Fig. 24. Fig. 25A is a front view of the liquid leakage block section, Fig. 25B is a graph of the degree at which the liquid leakage block section is joined, and Fig. 25C to Fig. 25G are front views of a modification example of the liquid leakage block section in Fig. 25A.
Fig. 26 is a sectional view illustrating the effect of the liquid leakage block section of the packaging bag in Fig. 24.
Fig. 27 is an enlarged view of a portion XXVII in Fig. 24A.
Fig. 28 is a front view of a modification example of the packaging bag for a microwave oven according to Embodiment 1.
Fig. 29 shows a packaging bag for a microwave oven according to Embodiment 2 of the present invention. Fig. 29A is a front view, and Fig. 29B is a sectional view along line XXIXB-XXIXB in Fig. 29A.
Fig. 30 is a front view of a packaging bag for a microwave oven according to Modification Example 1 of the present invention.
Fig. 31 is a front view of a packaging bag for a microwave oven according to Modification Example 2 of the present invention.
Fig. 32 is a sectional view of a recessed hole provided to a gas-permeable film of the related art.
Fig. 33 shows a packaging bag described in a patent document of the related art. Fig. 33A is a back view of the packaging bag, Fig. 33B is a sectional view along line XXXIIIB-XXXIIIB in Fig. 33A, and Fig. 33C is a back view of a state where the packaging bag in Fig. 33A is opened.
Fig. 34 shows another packaging described in the patent document. Fig. 34A is a back view of the packaging bag, and Fig. 34B is a back view of a state where the packaging bag in Fig. 34A is opened.
Fig. 35 shows a bag of the related art. Fig. 35A is a cutaway front view of a main section of the bag, and Fig. 35B is an enlarged plan view of the main section.
Fig. 36 is a plan view of a bag body of another related art.

### BEST MODE(S) FOR CARRYING OUT THE INVENTION

Embodiments of the present invention will be described below with reference to the drawings. Note that the embodiments shown below exemplify a gas-permeable film for embodying the technical idea of the present invention, a manufacturing method therefor, and a container using the gas-permeable film.

### [Embodiment 1]

In a gas-permeable film of the present invention, a gas-permeable section that causes gas permeation is provided to a base film formed from a plastic film having a prescribed thickness. The gas-permeable section is formed from a recession that is in the longitudinal direction of the base film and recessed and distended a prescribed amount from one surface towards the other surface such that a bottom protrudes outwards from the other surface. The recession is formed such that the thickness decreases gradually from a top opening towards the bottom, with the bottom being the thinnest. The recession is configured from a slit or a recessed hole having a prescribed shape.

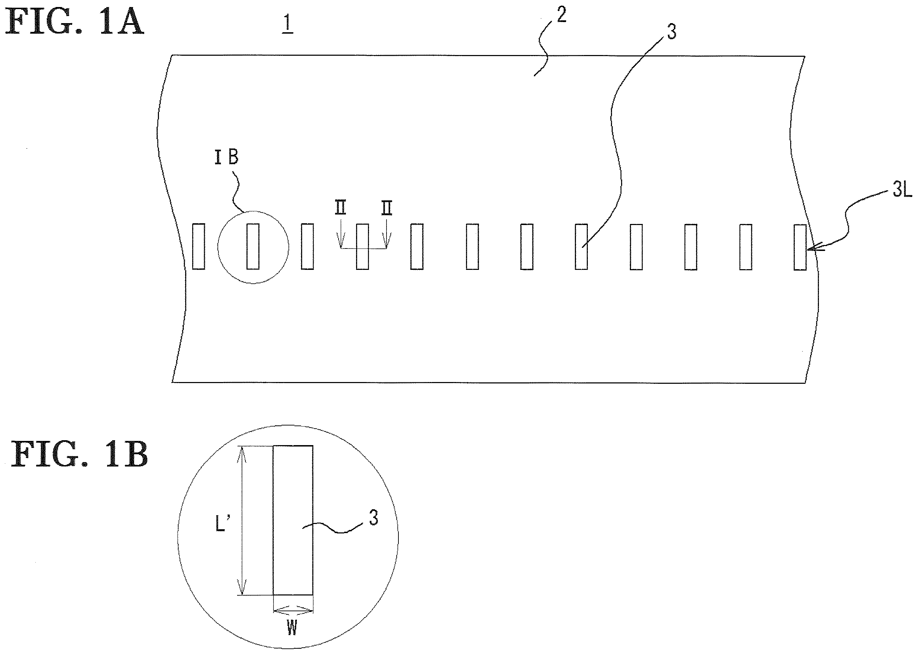

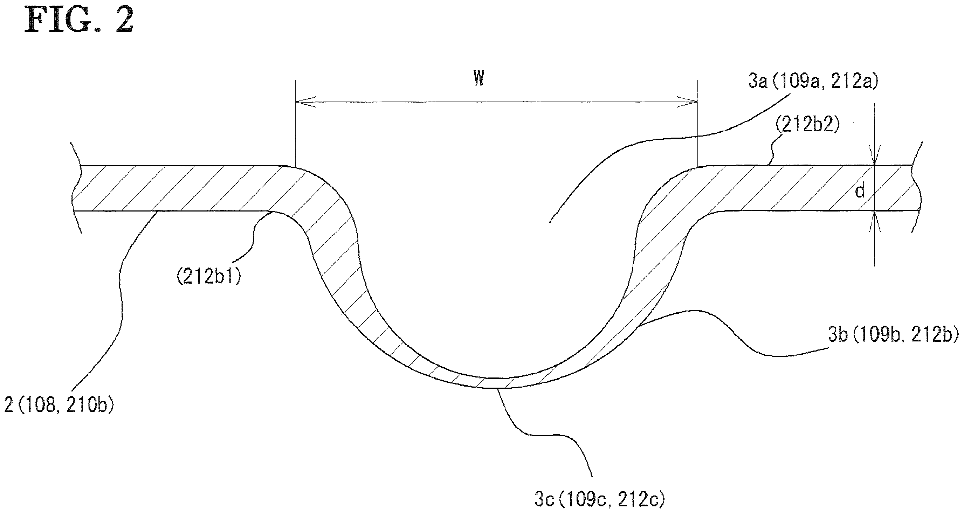

A gas-permeable film according to Embodiment 1 of the present invention will be described below with reference to Fig. 1 and Fig. 2. Note that Fig. 1 shows the gas-permeable film according to Embodiment 1 of the present invention. Fig. 1 is a plan view, and Fig. 1B is an enlarged view of a portion IB in Fig. 1. Fig. 2 is a sectional view along line II-II in Fig. 1.

A recession of the gas-permeable section according to Embodiment 1 of the present invention is configured from a slit group 3L in which a plurality of short slits 3 are arranged at prescribed intervals. The slits 3 have the same structures and are formed such that the thickness decreases gradually from a top opening towards a bottom, with the bottom being the thinnest. Note that the recession is formed from the slit group in which the slits 3 have a prescribed length, i.e., a discontinuous slit group, but may also be formed from a relatively long continuous slit.

As for a base film 2, used is a long base film having a prescribed width, thickness, and length. In the base film, the plurality of short slits 3 are arranged in one line at prescribed intervals in the longitudinal direction. The plurality of short slits 3 form the slit group 3L. The intervals of the adjacent slits 3 of the slit group 3L are arbitrary intervals depending on the application of the gas-permeable film, but are preferably equal intervals for packaging. The slit group 3L is not limited to being in one line and may be in two or more lines.

As for the base film 2, used is a single-layer or multilayer structured plastic film of polypropylene (PP), a biaxially oriented polypropylene film (OPP), polyethylene (PE), polyethylene terephthalate (PET), nylon (PA), for example. Note that this base is not limited to these and may be other plastic films. The slits 3 may be provided to one layer or provided to all layers within a multilayer structure film. That is, a lamination process may be performed after the slits are formed in a film of one layer for a multilayer structure, or the slits may be formed in a multilayer structure film. A processing method therefor is selected appropriately depending on the type of resin forming the film or the application. As an example of the multilayer structure, a film having both high gas-barrier properties and sealing properties can be obtained by laminating PE having a favorable seal function on PA or PET having high gas-barrier properties, for example. First, an example in which films having a single-layer or multilayer structure are used and slits are formed in the films will be described.

The base film is formed from a film material having a single-layer or multilayer structure. The thickness thereof is not particularly limited, but is preferably within a range of 15 to 100 µm. When the thickness is thinner than 15 µm, forming the slit is difficult, and sufficient strength may not be obtained for use as a packaging film, for example. When at 100 µm or greater, processing becomes difficult. Thus, the thickness of the base film is selected appropriately within the range depending on the type of film resin, the application, or the like.

The plurality of slits 3 (109, 212) are non-penetrating grooves formed from thin grooves having the same shapes. As shown in Fig. 2, the slits 3 (109, 212) are formed such that the thickness decreases gradually from a top opening groove 3a (109a, 212a) towards the bottom to cause a mountain-like distention, the bottom is protruded outwards from the other surface, this bottom 3c (109c, 212c) is thinnest, and the sectional shape is approximately a U-shape. Specifically, as shown in Fig. 1B and Fig. 2, there is a width W in the longitudinal direction of the base film 2 (108, 210f), as well as a length L' and a prescribed depth in directions orthogonal to the longitudinal direction. The width, length, and depth are not particularly limited, but the width W is preferably 100 to 500 µm and the length L' 1.2 to 2.6 mm. It is preferable that the depth be about 1.2 to 2.2 times when measured from a film surface and, even at this ratio, be a depth of 1.2 to 2.2 of the thickness. Furthermore, the thinnest thickness of the bottom 3c (109c, 212c) is preferably 2 µm to 70 µm. Note that the thickness is the same for both the single-layer and multilayer structured films. The interval between the adjacent slits in the slit group 3L (109L, 212L) is also not particularly limited, but is preferably 1.5 to 3.0 mm. Thus, the slit is selected appropriately depending on the type of film resin, the application, or the like.

The slit and the slit group can be adjusted in the gas permeation amount by changing the shape thereof and the thickness at the bottom.

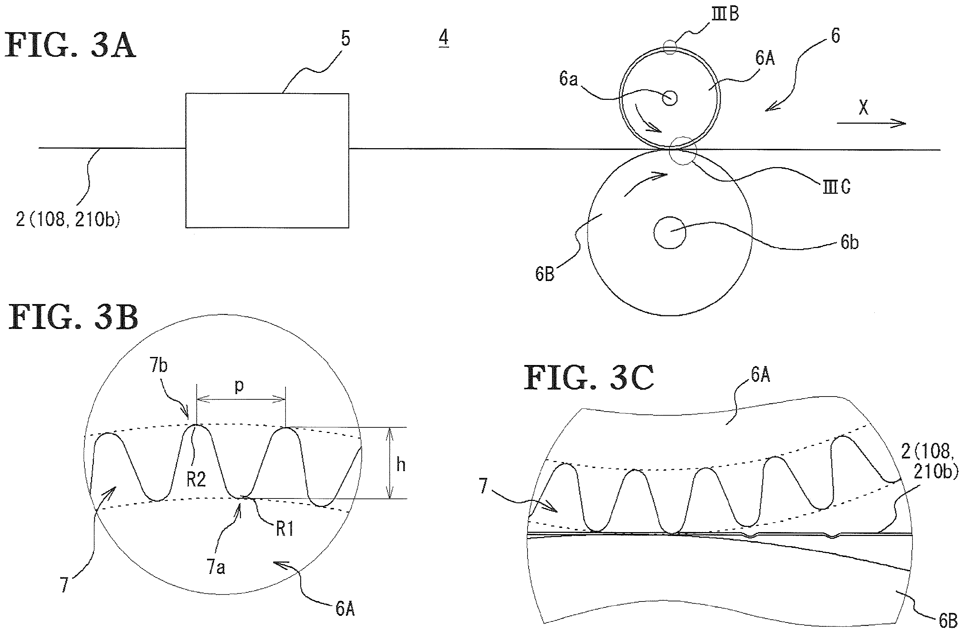

Next, a manufacturing method of a gas-permeable film will be described with reference to Fig. 3. Note that Fig. 3A is a schematic view of a manufacturing device that manufactures the gas-permeable film in Fig. 1, Fig. 3B is an enlarged view of IIIB in Fig. 3A, and Fig. 3C is an enlarged view of IIIC in Fig. 3A.

As shown in Fig. 3A, a manufacturing device 4 includes a pretreatment device 5 that pretreats the base film 2 (108, 210f) and a slit forming device 6 that forms the slit 3 (109, 212) in the base film 2 (108, 210f). The pretreatment device 5 is a temperature adjusting device that treats the base film 2 (108, 210f) such that the temperature exceeds the glass transition temperature and is less than the melting temperature of the base.

The temperature adjustment with the pretreatment device 5 is important for forming the slit in the base film. The base film 2 (108, 210f) is formed of a plastic film material, i.e., a polymer material. The polymer material is in a state where a crystalline portion and a non-crystalline portion coexist at low temperature, and thus is in a glass state where molecular motions are small. When the temperature is increased by heating from this state, the molecular motions increase to cause the polymer material to be in a rubber state, and further heating causes the polymer material to be melted into a melted state. The boundary of transition from the glass state to the rubber state is the glass transition temperature, and the boundary at which the rubber state turns into the melted state is the melting temperature. Thus, by heating a base film to a temperature exceeding the glass transition temperature to soften the base film, the slit can be rolled to be mountain-like such that the bottom becomes thinnest. Since rolling is possible while keeping the gas-barrier properties at this temperature, a thin slit can be formed without impairing the properties of the film. Also, a slit without a pinhole or the like can be formed.

The glass transition temperature and the melting temperature differ depending on the material of the base film. When PP is used for the base film, the temperature is adjusted to between 40 to 120°C, which is higher than normal temperature, since the PP has a glass transition temperature of minus 18°C and a melting temperature of 163°C. In a similar manner, the temperature is adjusted to between 85 to 200°C for PET since the glass transition temperature is 81°C and the melting temperature is 264°C, and to a temperature between 20 to 100°C, which is higher than normal temperature, for LDPE since the glass transition temperature is -125°C and the melting temperature is 115°C. In a multilayer structure film described below in which PET and LDPE are laminated, the temperature is adjusted to a range of 85 to 100°C.

With PP and PE, the glass transition temperature is already exceeded at normal temperature. However, since the melting temperature is 120°C to 190°C, the degree of processing is adjusted within an according range. Since the softness of the film differs even with the same base depending on the temperature in a range higher than the glass transition temperature and lower than the melting temperature, the slit can be formed easily even with light pressing in the following slit forming device by raising the temperature.

The slit forming device 6 has a disc-shaped pressing roll 6A in which a plurality of slit forming teeth 7 are arranged at prescribed intervals on the outer circumference and a receiving roll 6B that, with the pressing roll, clamps the base film 2 (108, 210f) therebetween. The pressing roll 6A is formed from a metallic disc-shaped gear having a prescribed diameter, thickness, and rigidity and rotates about a shaft 6a to feed the base film 2 (108, 210f) in an X-direction while forming the slit 3 (109, 212). As shown in Fig. 3B, the plurality of slit forming teeth 7 are teeth of approximately saw-tooth shapes having a prescribed pitch p and height h. The slit forming tooth 7 is provided with a prescribed R2 at a peak section tip end 7a and R of R1 at a bottom 7b. The pitch p is not particularly limited, but is 2.0124 mm to 2.094 mm. The height h is 2.0 mm. R2 is in a range of 0.05 to 1.0 mm and is preferably 0.1 to 0.2 mm in this range. When at 0.1 mm or less, it becomes more likely to cause damage and a pinhole in the base film if mechanical wear is severe. When at 1.0 mm or greater, it is possible to increase the area to be pressed. R1 is 0.5 mm. Note that the pitch may be made zero so that the teeth are continuous. In this case, the width is further narrowed in order to ensure a sufficient pressing force. That is, when continuous, the teeth increases in number, and the area per unit increases as a result, thus reducing the pressing force as a whole. Therefore, the width is narrowed to reduce the area, so that a desired pressing force is ensured.

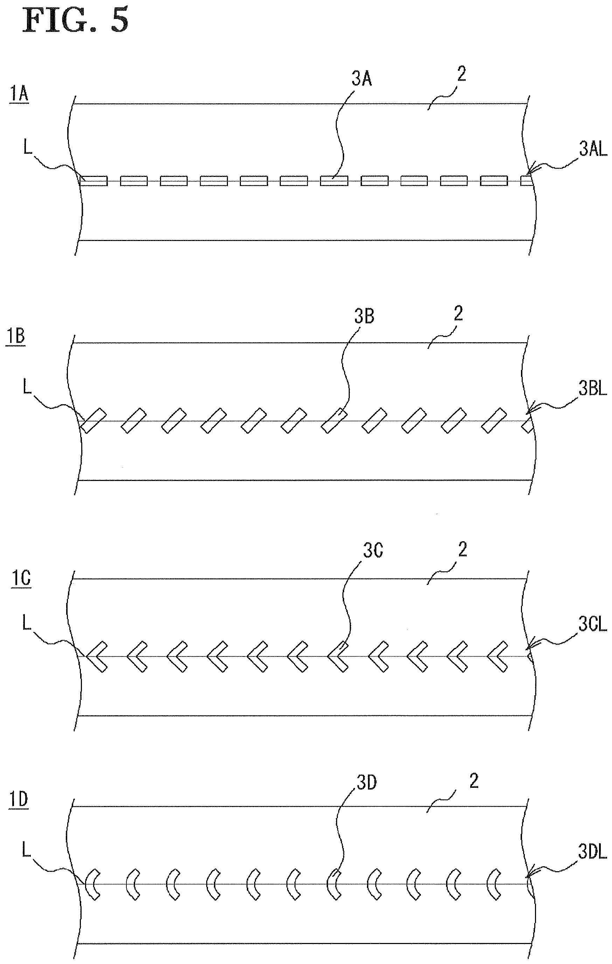

The pressing roll 6A is a disc-shaped gear in this embodiment, but may also be a rolled shape, i.e., a cylinder body or a column body. The rolled shape enables formation of a long slit and a continuous slit. The gear provided with the slit forming tooth is not particularly limited, but a gear provided with, for example, a spur gear is preferably used. The spur gear to be used is rectangular with a length of 1.5 to 2.6 mm and a width of 30 to 500 µm in planar view and is 1.2 to 2.4 times with respect to the thickness of the film in side view. Assuming that the spur gear is used and the total thickness of the base film is 50 µm, the peak of a mountain is at 60 to 120 µm when measured from the bottom of the base film. The degree thereof is determined by the gas amount of desired permeation. Depending on the shape of the slit, a gear having other shapes, e.g., a gear provided with a helical gear is used. Using such a gear, a slit as shown in Fig. 5B is formed, for example.

In a similar manner to the pressing roll 6A, the receiving roll 6B receives the pressing upon forming the slit 3 (109, 102) in the base film 2 (108, 210f) with the pressing roll 6A while rotating about a shaft 6b as the center to feed the base film 2 in the X-direction. The pressing roll 6A has a rigidity of 60 to 63 and is formed by a metal material having lower rigidity than the receiving roll 6B. The receiving roll 6B is formed by a metallic cylinder body or column body having a prescribed diameter and rigidity, the rigidity being 63 to 67. Due to the rigidity being lower than the rigidity of the receiving roll 6B, the pressing roll 6A is not abraded when the receiving roll 6B receives the pressing by the pressing roll 6A, even with one million meters of processing, for example.

In the manufacturing device 4, the base film 2 (108, 210f) is treated to a temperature exceeding the glass transition temperature with the pretreatment device 5 and fed to the slit forming device 6. In the slit forming device 6, the base film 2 (108, 210f) at a prescribed temperature is clamped between the pressing roll 6A and the receiving roll 6B, so that a prescribed pressing force is applied to the pressing roll 6A to roll the base film 2 (108, 210f) and form the slit (see Fig. 3C). The slit is formed by adjusting the pretreatment temperature of the base and the pressing force of the pressing roll according to the type and the thickness of the base film. When the bottom is thinned, the slit increases in the gas permeation degree by the thinned amount, but decreases in strength. The degree thereof is determined by adjusting at least one of the pretreatment temperature and the pressing force. For example, assuming that the base film has a glass transition temperature of 50°C and a melting temperature of 215°C and the pretreatment temperature is 60°C or 120°C, the latter provides more softness than the former, and the latter enables formation with a lighter pressing force than the pressing force in the former. The pressing degree is adjusted between, for example, 0 to 0.5 MPa and is particularly preferable at around 0.2 MPa. Note that 0.5 MPa is 5 kg per square centimeter.

In the manufacturing device 4, the pretreatment temperature of the base film 2 (108, 210f) and the pressing force of the pressing roll are adjusted according to the application to form a slit that is adapted to each application. For example, in vegetable packaging, a single film of an OPP antifog film having a thickness of 25 µm is used, and a recession is formed in the film from the inside of a bag. The minimum thickness of the recession is about 2 µm. The degree of pressing is caused to differ depending on the vegetable. For example, komatsuna is pressed at 0.2 MPa, and the shape of a portion to be pressed by a spur gear having a pitch of 2 mm is a rectangle having a length of 2 mm and a width of 200 µm. For a bag body of which the size is 200 mm × 320 mm, a slit group is only in one horizontal line.

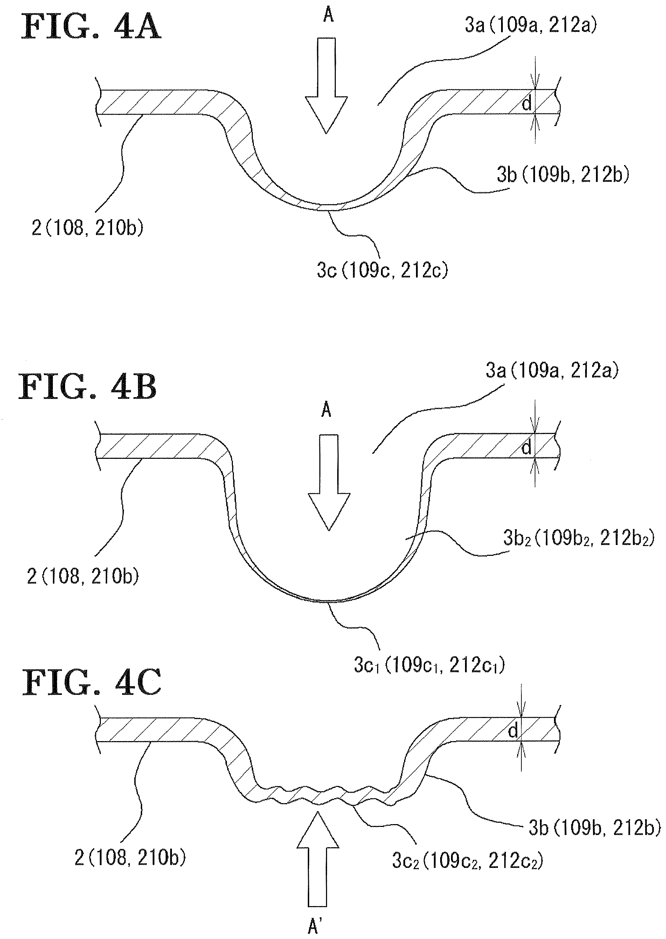

The gas permeation effect of the slit will be described with reference to Fig. 4. Note that Fig. 4 is a view illustrating the gas permeation effect of the slit. Fig. 4A is a sectional view of the slit, Fig. 4B is a sectional view of a slit shape at the time of gas permeation, and Fig. 4C is a sectional view of the slit shape at the time of gas permeation from an opposite direction.

The permeation effect will be described with an example in which a packaging bag of a prescribed size is made using a gas-permeable film 1, and, when the packaging bag holds an object, gas (such as vapor) is released from the object such that pressure is applied within the packaging bag. The slit 3 in Fig. 4A is in a state where internal pressure is not applied. Note that Fig. 4A is the same as Fig. 2.

When internal pressure is applied to the slit 3 (109, 102) from the direction of an arrow A, as shown in Fig. 4B, the pressure causes the bottom of the slit to stretch, expand, and distend in a balloon-shape to further reduce the thickness, and gas permeates through this thin portion 3c₁ (109c₁, 212c₁). Compared to a slit of the related art, the slit 3 (109, 102) is easier to adjust the permeation amount in the gas permeation and also has another advantageous effect. Specifically, the thickness at the bottom is approximately uniform in a recessed hole 21 (see Fig. 32) of the related art and therefore cannot be reduced maximally. Thus, with current processing techniques, about 8 µm is the limit. However, the slit 3 (109, 102) can be thinned approximately maximally (to about 2.0 µm), and therefore adjustment in the permeation amount becomes easy.

When pressure is applied from an opposite direction, as shown in Fig. 4C, a bottom 3c₂ (109c₂, 212c₂) of the slit is pressed in the opposite direction, and the gas permeation amount is reduced significantly compared to the direction of Fig. 4B. This phenomenon is confirmed in an experiment. Assuming that the permeation amount from the opening side is 10, the permeation amount from the opposite direction was approximately about 1 to 2. As a result, the gas-permeable film 1 (108, 210f) has high gas permeability in one direction and low gas permeability in the opposite direction, thus providing a significant advantageous effect when used in, for example, MA packaging or double packaging. That is, for MA packaging, a packaging bag is made and used such that the opening of the gas-permeable film 1 (108, 210f) is located on the inside and the bottom on the outside. In double packaging, a packaging bag is made and used such that the opening of the gas-permeable film 1 (108, 210f) is on the inside or outside and the bottom is on the outside or inside, according to an object to be packed. For example, in alcohol gas-permeable snack packaging, there are an outer bag and many inner bags. An anti-mold agent (which generates alcohol gas) is put in the outer bag, and the inner bag is pressed from the outside for a mountain-like processing. This causes the alcohol gas to enter into the many inner bags. The outer bag is a bag having gas-barrier properties, and the inner bag uses a film of 20 µm of only OPP. The size of the bag is 50 mm × 70 mm.

### [Embodiment 2]

The gas-permeable film 1 according to Embodiment 1 of the present invention in which the plurality of approximately parallel slits 3 are arranged at prescribed intervals have been described. However, this is not limiting, and other arrangements or shapes are also possible. Note that Fig. 5 is a plan view of a gas-permeable film according to a different Embodiment 2.

In a gas-permeable film 1A, a virtual line L is drawn in the longitudinal direction of the base film 2, and a plurality of slits 3A are arranged at prescribed intervals along this straight line to form a slit group 3AL. In a gas-permeable film 1B, the virtual line L is drawn in the longitudinal direction of the base film 2, and a plurality of slits 3B are arranged to intersect with this straight line to form a slit group 3BL. Furthermore, in a gas-permeable film 1C, a plurality of mountain-shaped slits are arranged on the virtual line L at prescribed intervals to form a slit group 3CL. Moreover, in a gas-permeable film 1D, a plurality of curved slits 3D are arranged on the virtual line L at prescribed intervals to form a slit group 3DL. The virtual lines L can be for example a straight line, a broken line, or a curved line.

### [Embodiment 3]

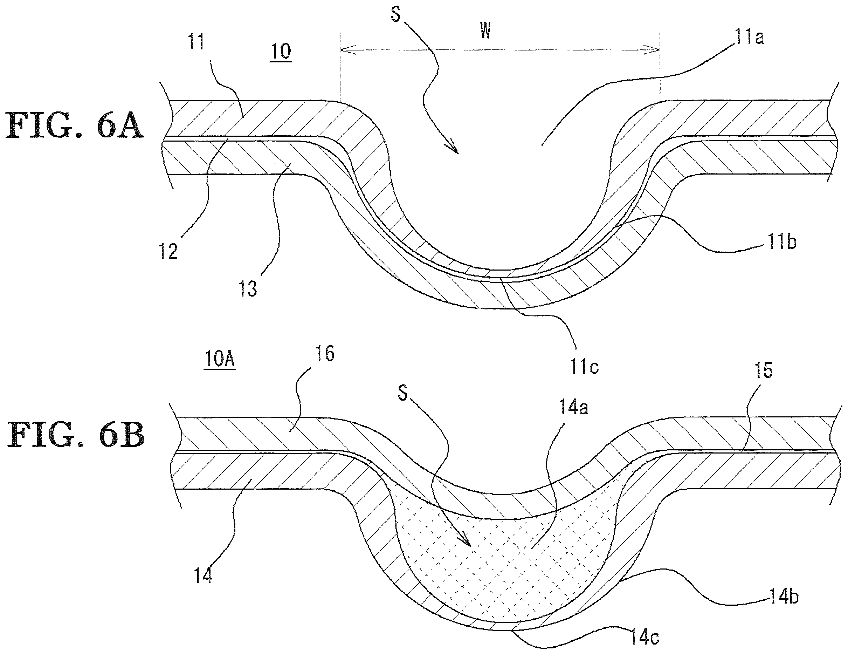

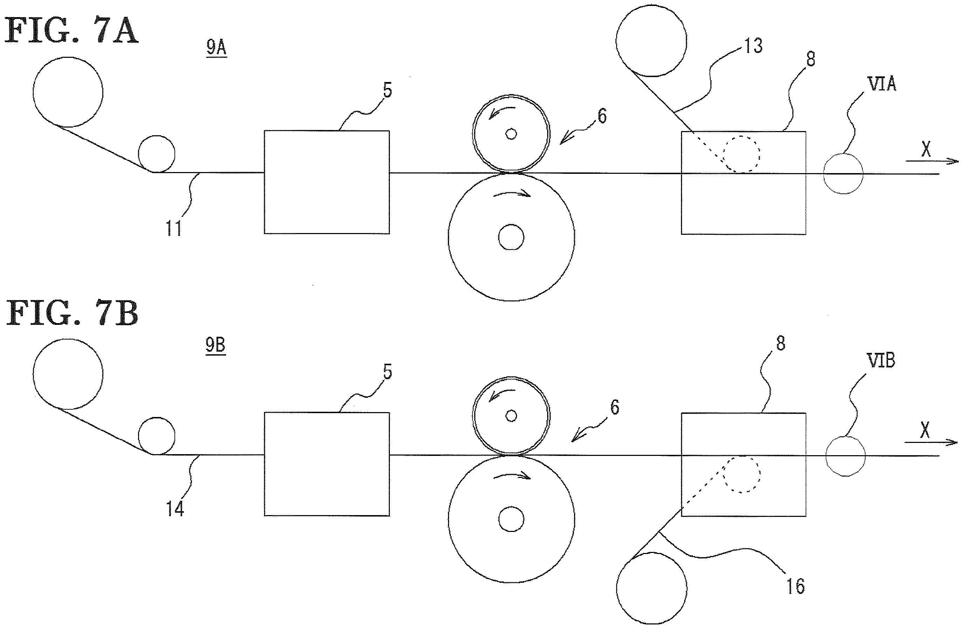

A gas-permeable film according to a still different Embodiment 3 of the present invention and a manufacturing method therefor will be described with reference to Fig. 6 and Fig. 7. Note that Fig. 6 is an enlarged sectional view of a slit portion in which one surface of front and back surfaces of a film provided with a slit is laminated with another film. Fig. 7 is a schematic view of a manufacturing device that manufactures the gas-permeable film in Fig. 6.

In a gas-permeable film 10, a film 11 provided with a slit S is joined with another film by an adhesive on the protruding side of the slit. The slit S has the same structure as the slit 3 and is formed such that the thickness decreases gradually from a top opening groove 11a towards the bottom to cause a mountain-like distention, the bottom protrudes outwards from the other surface, this bottom 11c is the thinnest, and the sectional shape is approximately a U-shape or a V-shape.

Examples of the combination of films to be adhered include use of PE for the film 11 and PA or PET for a film 13. A film having both high gas-barrier properties and sealing properties can be obtained by adhering PE having a favorable seal function on PA or PET having high gas-barrier properties. Note that the bottom thickness of the gas-permeable film 10 is a total thickness of the bottom thickness (2 to 70 µm) of the slit S of the film 11, the thickness (15 to 100 µm) of the film 13, and the thickness of an adhesion layer. The gas-permeable film 10 is formed by the film 11 provided with the slit S being joined with another film 13 by an adhesive 12 on the protruding side of the slit. In a manufacturing device 9A for the gas-permeable film 10, a film joining device 8 is added to the manufacturing device 4 (see Fig. 7A).

The gas-permeable film 10 is suitable for a container for microwave oven heating. When the container for microwave oven heating using the gas-permeable film 10 is heated in a microwave oven, water vapor is generated from content matter to increase the internal pressure of the container, and the water vapor permeates through the slit S of the film 11. Since the slit S is laminated with the separate film 13 at this time, the water vapor permeated through the slit S peels off the adhesive 12 between the film 11 and the film 13 and is accumulated in this gap. The water vapor is released outside when the film 13 rips or by further passing through the gap between the films 11 and 13 and permeating through a seal section provided to an end section of the container. Accordingly, the container for microwave oven heating can be prevented from bursting.

In a gas-permeable film 10A, a film 14 provided with the slit S is joined with another film by an adhesive on the recessed side of the slit. The slit S has the same structure as the slit 3. The film 14 provided with the slit S is joined with another film 16 by an adhesive 15 on the recessed side of the slit. In a similar manner to the case of the gas-permeable film 10, the bottom thickness of the gas-permeable film 10A is a total thickness of the bottom thickness (2 to 70 µm) of the slit S of the film 14, the thickness (15 to 100 µm) of the film 16, and the thickness of the adhesive 15. In a manufacturing device 9B for the gas-permeable film 10A, the film joining device 8 is added to the manufacturing device 4 (see Fig. 7B).

The gas-permeable film 10A is also suitable for a container for microwave oven heating in a similar manner. When the container for microwave oven heating using the gas-permeable film 10A is heated in a microwave oven, water vapor is generated from content matter such that the container expands, and the internal pressure causes the water vapor to permeate through the film 14 or the film 14 to rip and release the water vapor. At this time, the film 14 is laminated with the separate film 16. Since the film 16 is provided with the slit S, the water vapor is accumulated in a space 14a of the slit S, and the water vapor is released by the slit S breaking upon a further increase in the internal pressure. Accordingly, the container for microwave oven heating can be prevented from bursting.

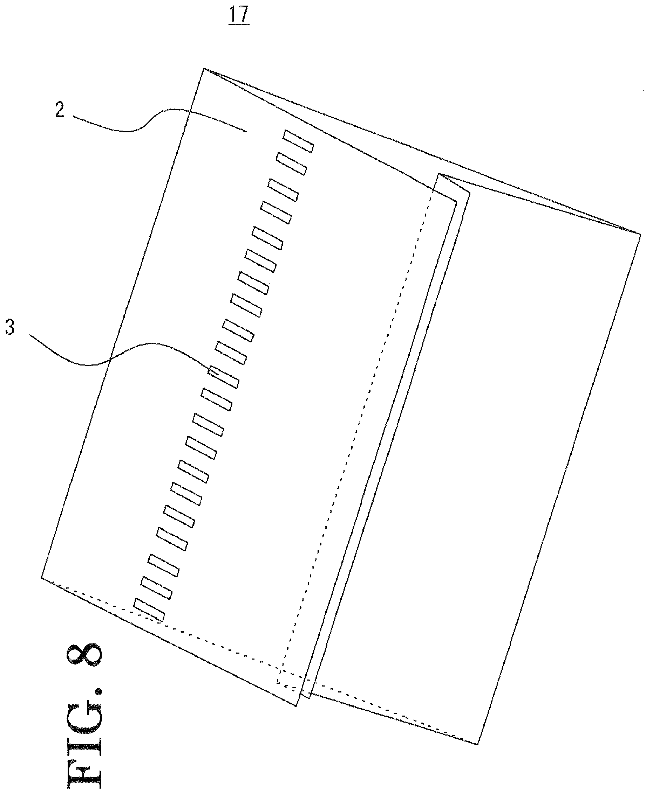

The gas-permeable films 1, 1A to 1D, 10, and 10A can be used as a packaging container (packaging bag) or a cover that covers the opening of a container. Some examples of the packaging bag and cover will be described below with reference to Fig. 8 to Fig. 12.

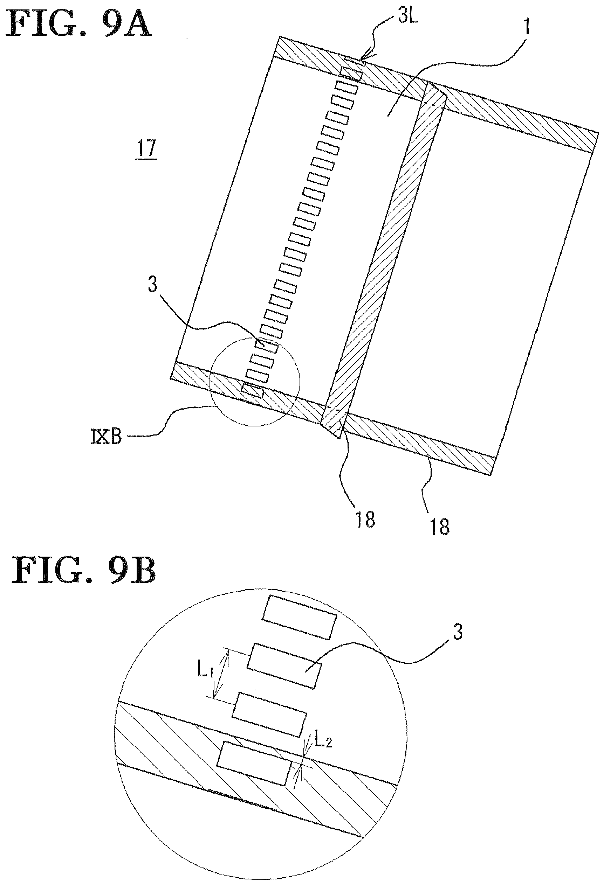

A packaging bag 17 in Fig. 8 and Fig. 9 uses the gas-permeable film 1. For the packaging bag 17, as shown in Fig. 8, the gas-permeable film 1 is first cut to a prescribed length, folded, and applied with heat sealing for three directions so that one end becomes a bag opening. Next, a food product is packed into the packaging bag 17, and the bag opening is shut by heat sealing. Fig. 9A shows a state where the food product is packed into the bag and the bag opening is shut. In the packaging bag 17, the slits 3 located at both ends of the slit group 3L are sealed by a seal section 18, and the slits 3 are located in the vicinity of the seal section 18.

The packaging bag can be used to pack various objects such as green goods or snacks, but can also pack a frozen food product and be utilized as a bag for microwave oven heating. When the packaging bag 17 is used as a bag for a microwave oven and heated in a microwave oven, water vapor is generated from a food product to increase the internal pressure within the bag, permeates through the slit group 3L, and is released outside. When the vapor amount increases, the permeation amount for permeation through the slit group 3L is exceeded to increase the internal pressure, and an interval from the slit 3 in the vicinity of the seal section 18 to the seal section is narrowed. Therefore, breakage occurs from this portion to release a great amount of vapor from this portion (see Fig. 9B). For example, when an interval L₁ between the slits 3 is 2.2 mm, an interval L₂ of the slits 3 in the vicinity of the seal section 18 is narrowed to a range of 0 to 2.2 mm. The interval L₂ causes this portion to be weak in strength and easily broken, thus enabling the packaging bag to be prevented from bursting.

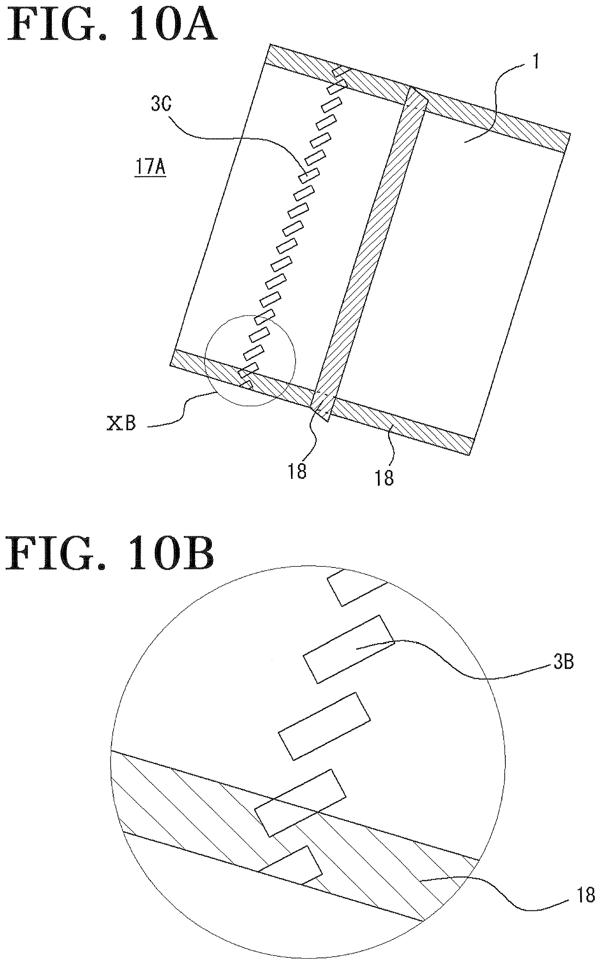

A packaging bag 17A in Fig. 10 uses the gas-permeable film 1B (see Fig. 5). By providing the slits 3B having such a shape, the slits 3B are always formed to straddle the boundary of the seal section 18. Therefore, for example, when it is necessary to cause breakage with generated water vapor at the time of use in a microwave oven, it is possible to cause the breakage reliably in a portion having the slits. Therefore, a food product can be packaged in consideration of the breakage. In a similar manner to the description above, an interval from the slit 3B in the vicinity of the seal section 18 to the seal section is narrowed in this portion. Therefore, breakage occurs from this portion to release a great amount of vapor from this portion (see Fig. 10B). Note that Fig. 10B is an enlargement of a portion XB in Fig. 10A.

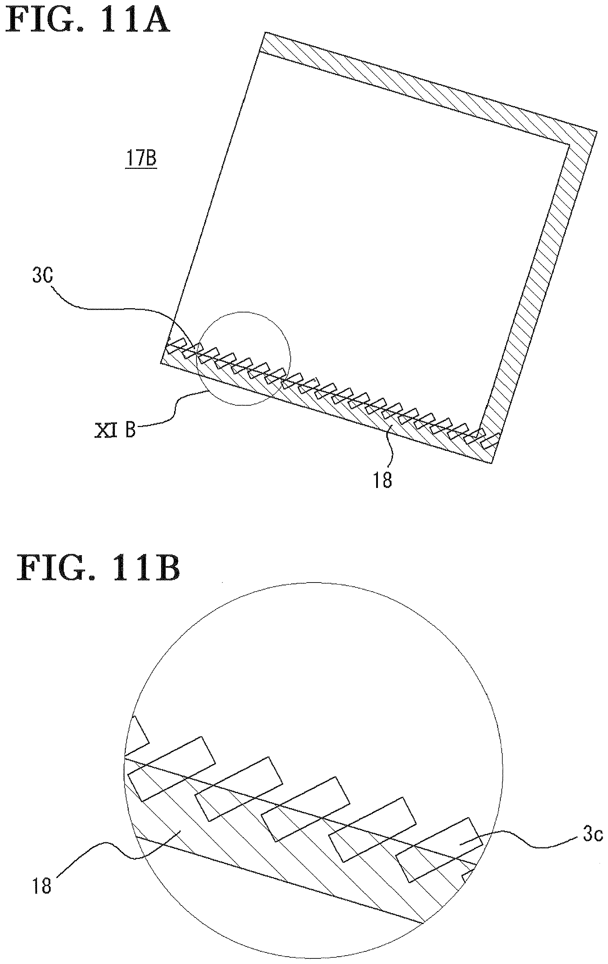

A packaging bag 17B in Fig. 11 uses the gas-permeable film 1B (see Fig. 5). Since an interval from each slit 3C in the vicinity of the seal section 18 to the seal section 18 is narrowed in this portion, breakage occurs from this portion to release a great amount of vapor from this portion (see Fig. 11B). Note that Fig. 11B is an enlargement of a portion XIB in Fig. 10A.

For a container (bag) for double packaging, the packaging bag is made and used such that the opening of the gas-permeable film is on the inside or outside and the bottom is on the outside or inside, according to an object to be packed.

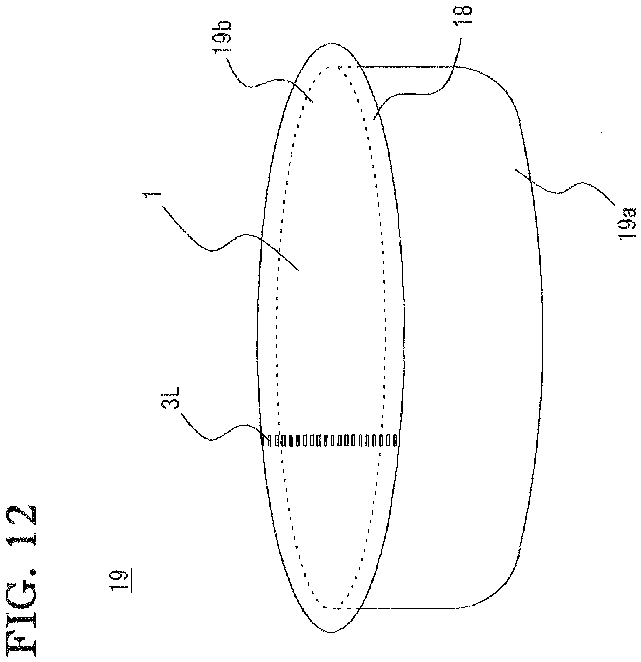

In Fig. 12, the opening of a container is covered and hermetically sealed by the gas-permeable film. In a container 19, an opening 19b of a bottomed container body 19a having the top opening 19b is sealed by the seal section 18 of the gas-permeable film 1. The container is suitable for a fermented food product such as kimchi. In the gas-permeable film 1 used for packaging of the kimchi, PE that can be peeled easily is laminated through dry lamination with respect to a PET container having a thickness of 12 µm, and the slit group 3L is formed in the film by pressing from a surface that is to be on the inside of the container, for example. The minimum thickness at the bottom of the slit group 3L is about 2 µm. By sealing the gas-permeable film 1 through thermal welding of the opening 19b of the container body 19a formed from PET, carbon dioxide gas generated from kimchi, a fermented food product, can permeate through the slit group 3L in a moderate manner.

With the gas-permeable film of the present invention, as described above, the bottom of the recession can be thinned approximately maximally (for example, to about 2.0 µm) from the thickness of the base film, and the range of gas permeation degree is increased by the thinning, thus enabling use in various fields. Particularly, it becomes useful as a packaging material. That is, it becomes useful for use in a packaging material for example for vegetables and for fermented food products, and a container for fermented food products and/or for microwave oven heating. Since gas permeation is easy in one direction and difficult in the opposite direction, it becomes also effective for MA packaging or double packaging, for example.

### [Embodiment 4]

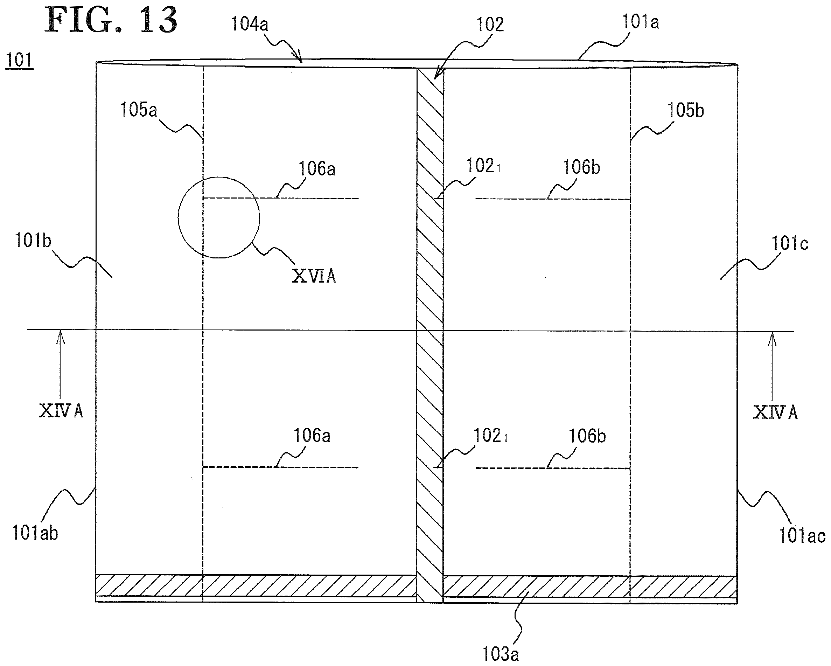

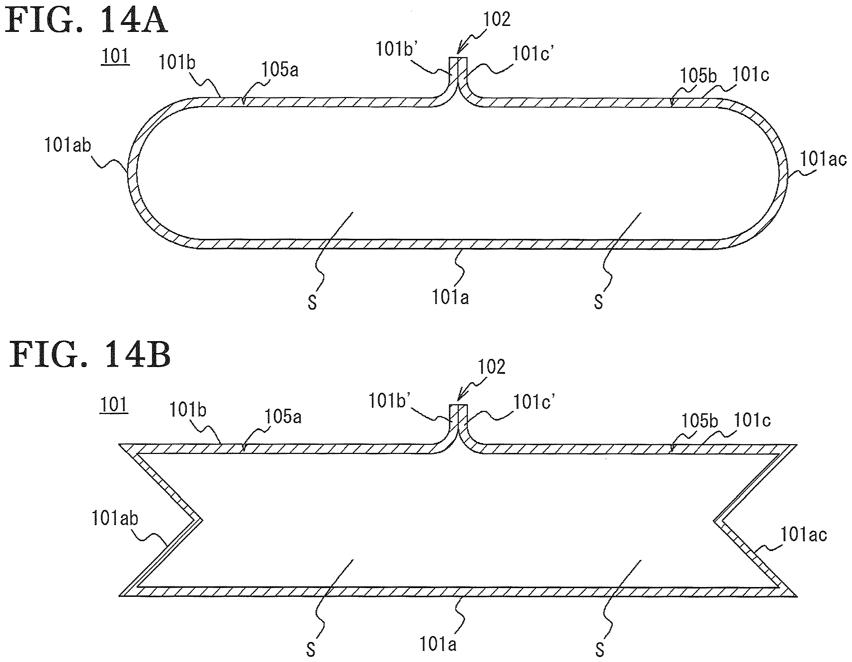

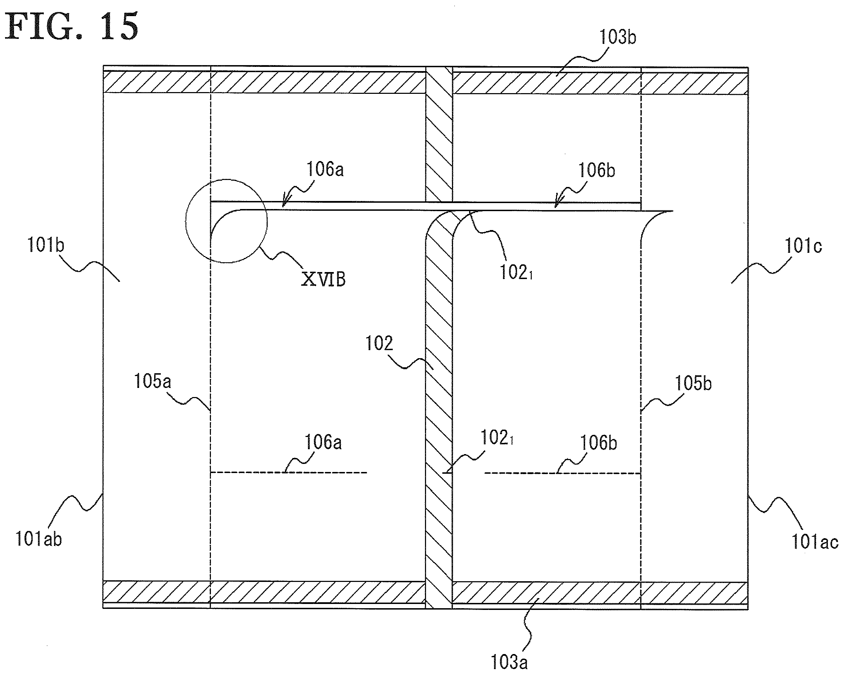

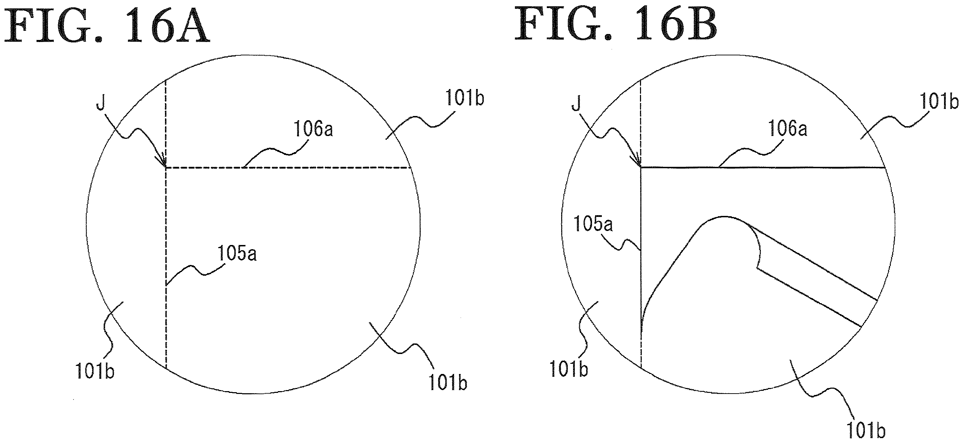

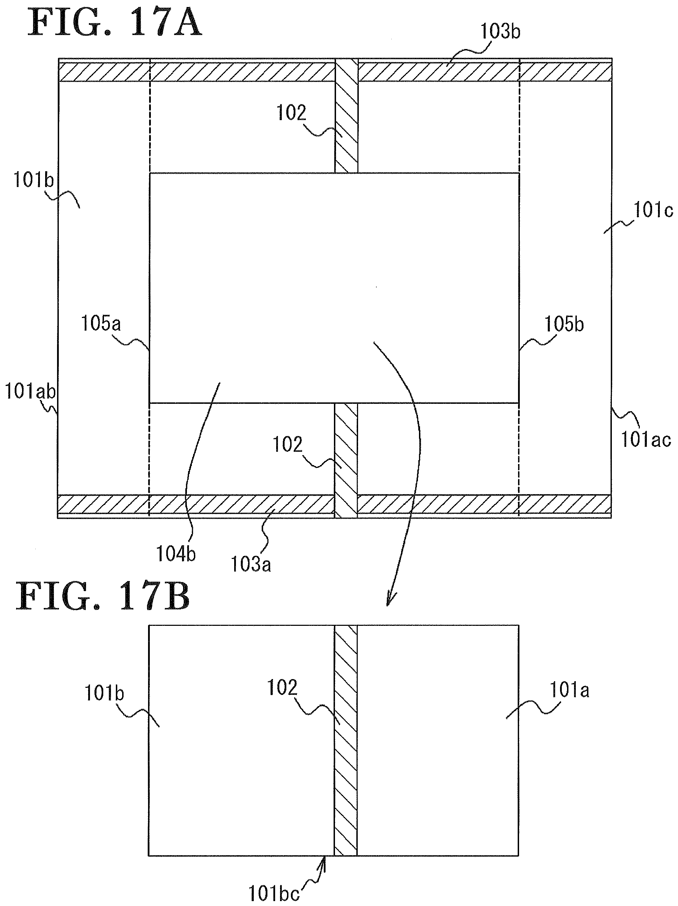

A packaging bag according to Embodiment 4 of the present invention will be described with reference to Fig. 13 to Fig. 17. Note that Fig. 13 is a back view of the packaging bag according to Embodiment 4 of the present invention, Fig. 14A and Fig. 14B are sectional views when cut along line XIVA-XIVA in Fig. 13, Fig. 15 is a back view illustrating how the packaging bag is opened, Fig. 16 shows a portion of the packaging bag in Fig. 13, Fig. 16A is an enlarged view of a portion XVIA in Fig. 13, Fig. 16B is an enlarged view of a portion XVIB in Fig. 15, Fig. 17A is a back view of a state where the packaging bag is opened, and Fig. 17 is a back view of a part of the packaging bag in a detached state upon opening the packaging bag.

In the state shown in Fig. 13, a packaging bag 101 according to Embodiment 4 of the present invention is configured from a bag body in which a band-shaped film sheet having a pair of opposing long edges in the longitudinal direction and a pair of opposing short edges in a direction orthogonal to the longitudinal direction is used, the band-shaped film sheet is bent such that both end edges approach each other along the longitudinal direction, both end edge sections are caused to meet and back-sealed to form a cylinder body, the opening at a lower end edge section of the cylinder body is end-sealed, and an upper end edge section is caused to be open. Note that the packaging bag in Fig. 13 shows a state before packaged matter is packed into the bag body. The configuration of the band-shaped film sheet and the packaging bag produced with the film sheet will be described below in detail.

As for the film sheet, used is a single-layer or multilayer structured plastic film of polypropylene (PP), cast polypropylene (CPP), a monoaxially or biaxially oriented polypropylene film (OPP), polyethylene (PE) (low-density, medium, or high-density polyethylene), polyethylene terephthalate (PET), nylon (PA), for example. The thickness thereof is not particularly limited, but is preferably in a range of 15 to 100 µm. Note that the packaging bag of Embodiment 4 is preferably produced with a single-layer film.

In the state shown in Fig. 13, the packaging bag 101 is a bag body having a band-shaped (rectangular-shaped) bottom 101a having a prescribed area, a pair of folding pieces 101b and 101c that are both folded inwards from both end edges of the bottom, a back seal section 102 in which both end edge sections 101b' and 101c' of the respective folding pieces 101b and 101c are caused to meet and bonded with each other, and an end seal section 103a in which the opening at the lower end edge section of the cylinder body formed by the back seal is joined together, such that the upper end edge section of the cylinder body has an opening 104a, and a space S of a prescribed size is formed inside. The top opening 104a is sealed after the packaged matter is packed inside to form an end seal section 103b (see Fig. 15). In the bag body packed with the packaged matter, the outer surface of the bottom 101a becomes a front surface, and descriptions of the packaged matter are printed in the outer surface of the bottom. Note that the packaging bag and the bag body may be illustrated to refer to the same thing in the description below.

As shown in Fig. 14, folding sections 101ab and 101ac of the bag body are curved or in the form of a gusset. Note that the folding sections 101ab and 101ac may be made flat for joining. The pair of folding pieces 101b and 101c may be a sheet material separate from the bottom and joined at the periphery. Although there are differences depending on the film material, the joining is heat sealing (thermal welding). The heat sealing is performed using a high-frequency or ultrasonic sealing device.

The both end edge sections 101b' and 101c' of the folding pieces 101b and 101c are fin-sealed linearly, such that the back seal section 102 is located in the center of the bag body or to the end section side of one of the two folding sections from this center section. The back seal section 102 has a tear section 102₁ near upper and lower ends. The tear section is formed from for example a cut groove or a half-cut. The bag body is opened through tearing and opening from the tear section. The half-cut can be formed through the same step for a half-cut line described below and thus is easily formed.

When the back seal section 102 is thermally welded with a seal strength lower compared to an end seal section 103, it becomes suitable for packaging of a food product for a microwave oven. That is, the back seal section is more easily peeled compared the end seal section. Therefore, when a food product is heated in a microwave oven and vapor generated within a bag reaches a certain pressure, the back seal section peels off to release the vapor so that the bag body can be prevented from bursting.

The pair of folding pieces 101b and 101c are respectively provided, at near both ends thereof, i.e., in positions close to the folding sections, with opening cut lines 105a and 105b formed from the half-cut line that extends to be approximately parallel to the back seal section 102 so that a bag body surface is torn and opened. The folding pieces 101b and 101c are also respectively provided with guide cut lines 106a and 106b formed from a similar half-cut line that extend from the opening cut lines 105a and 105b towards the tear section 102₁ of the back seal section 102. The guide cut lines 106a and 106b are preferably provided to extend and approach the back seal section 102 or up to the back seal section. If a frame is printed at the opening cut lines 105a and 105b and the guide cut lines 106a and 106b and a portion connecting both the cut lines, the bag body can be opened with the frame as an opened opening. Thus, the bag body can be opened along a frame line determined in advance, and be used as a tray with an attractive opened opening shape after opening being opened.

As shown in Fig. 16A, the opening cut lines 105a and 105b and the guide cut lines 106a and 106b are provided such that the guide cut line 106a extends approximately perpendicularly from the opening cut line 105a, and the two cut lines are directly connected such that a connecting section J thereof is connected approximately in a T-shape. By the two cut lines being connected in the T-shape, a tear is guided smoothly from the guide cut line to the opening cut line upon opening of the bag body, and the tear does not exceed the opening cut line as in the related art. Note that forming the bag body with a monoaxially oriented film makes tearing along the guide cut line easy. The opening cut line and the guide cut line are formed from a non-penetrating groove (half-cut) in which only a portion of a sheet in the thickness direction is cut. Note that, in a multilayer structure film, it is formed to penetrate only a base layer or to penetrate the base layer and an intermediate layer.

To open the packaging bag 101, the bag body is first torn from a cut in the tear section 102₁ of the back seal section 102, causing a tear to proceed along the guide cut lines 106a and 106b and reach the opening cut lines 105a and 105b (see Fig. 15). When the tear reaches the opening cut lines 105a and 105b, the tear propagates to the opening cut lines 105a and 105b via the connecting section J since the guide cut lines 106a and 106b and the opening cut lines 105a and 105b are connected by the connecting section J (see Fig. 16A). Thus, a portion 101bc is detached from the bag body to form an opened opening 104b (see Fig. 16B and Fig. 17). Thus, since the packaging bag can be opened along the guide cut line and the opening cut line as determined in advance, the packaged matter does not pop outside at the time of opening, and the bag body can used as a tray having an attractive opened opening shape after being opened. By printing an opening frame for the opened opening, the bag body can be opened along the guide cut line and the opening cut line according to the frame.

### [Embodiment 5]

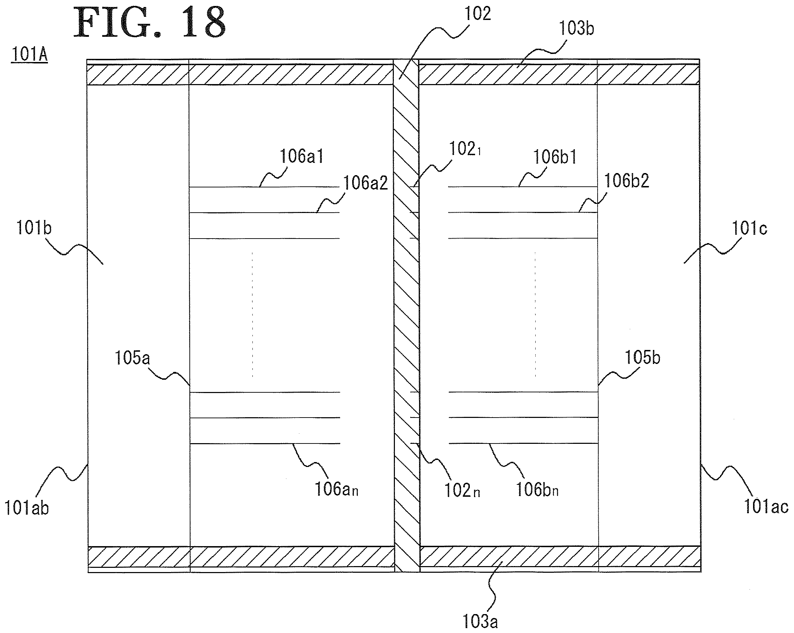

A packaging bag according to Embodiment 5 of the present invention will be described with reference to Fig. 18. Note that Fig. 18 is a back view of the packaging bag according to Embodiment 5 of the present invention. In a packaging bag 101A according to Embodiment 5 of the present invention, a plurality of tear sections 102₁ to 102n are provided to the back seal section 102 of the packaging bag 101, and a plurality of guide cut lines 106a1 to 106an and 106b1 to 106bn corresponding to the tear sections are formed on the left and right. The plurality of guide cut lines are arranged and formed at approximately equal intervals and to be approximately parallel. With the packaging bag 101A, a bag body can be opened from an arbitrary tear section to have an opening of a desired size.

### [Embodiment 6]

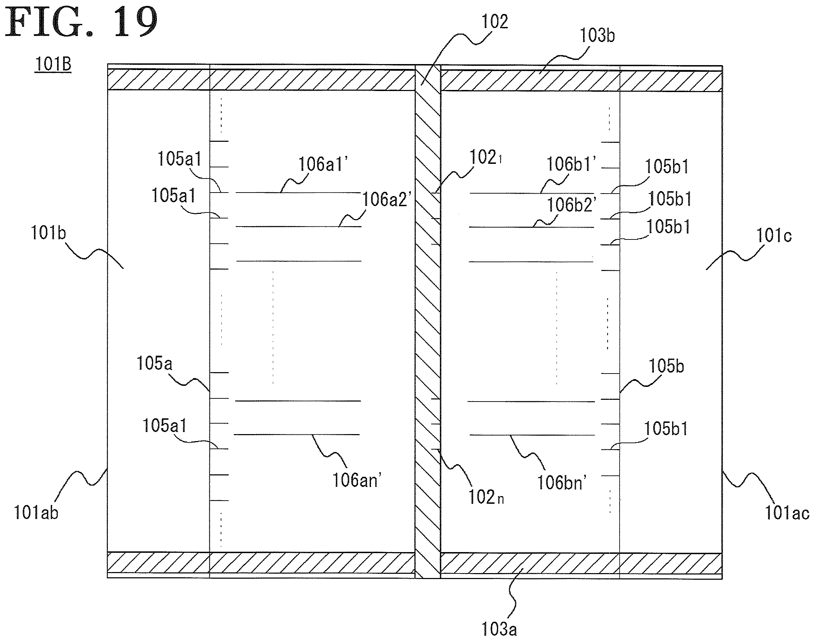

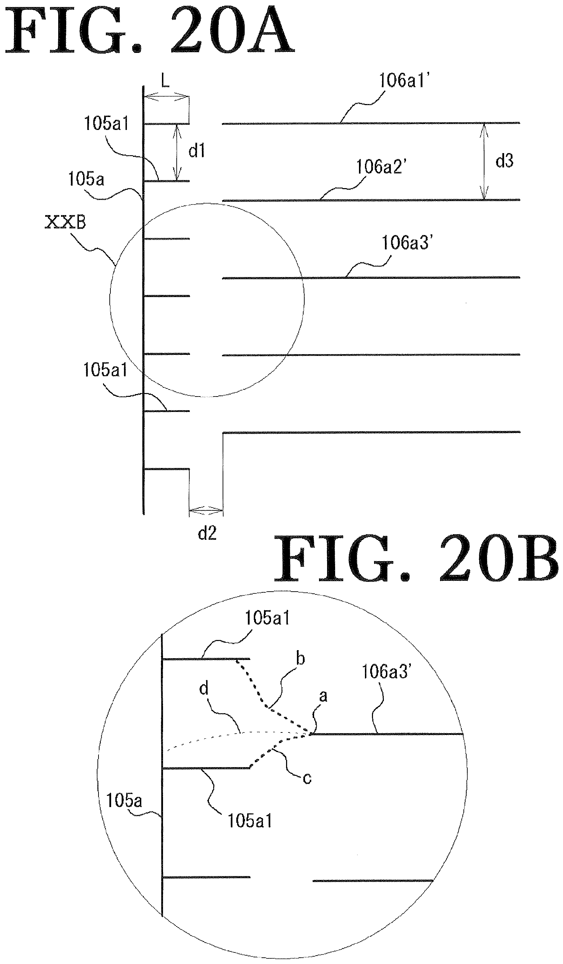

A packaging bag according to Embodiment 6 of the present invention will be described with reference to Fig. 19 and Fig. 20. Note that Fig. 19 is a back view of the packaging bag according to Embodiment 6 of the present invention, and Fig. 20 shows a portion of the packaging bag in Fig. 19. Fig. 20A is an enlarged back view, and Fig. 20B is an enlarged view of a portion XXB in Fig. 20A.

In a packaging bag 101B according to Embodiment 6 of the present invention, as shown in Fig. 19 and Fig. 20A, left and right guide cut lines of the packaging bag 101A are divided into short first guide cut lines 105a1 and 105b1 and long second guide cut lines 106a1' to 106an' and 106b1' to 106bn' that are apart by a prescribed distance d2, such that intervals d1 and d3 of both cut lines are formed to be different. The distance and intervals are, for example, 0 to 10 mm for the distance d2, 2 to 4 mm for d1 and 3 to 10 mm for d3. The first guide cut lines 105al and 105b1 are provided such that the left and right opening cut lines 105a and 105b extend a prescribed length approximately perpendicularly towards the back seal section 102. The first guide cut lines 105al and 105b1 are formed in the same step as with the respective opening cut lines 105a and 105b with reduced lengths.

The second guide cut lines 106a1' to 106an' and 106b1' to 106bn' may be formed from a cut line that is the same as the first guide cut lines 105a1 and 105b1 or that is a different shallow groove. That is, forming a bag body with a monoaxially oriented film makes tearing along the second guide cut line easy, and therefore a shallow groove half-cut is also acceptable. The first guide cut lines 105al and 105b1 and the second guide cut lines 106a1' to 106an' and 106b1' to 106bn' are formed in a film before a bag is produced.

The packaging bag 101B is torn from an arbitrary tear section of the back seal section 102 in a similar manner to the packaging bag 101A. When a tear is guided by the arbitrary second guide cut line, e.g., the second guide cut line 106a3' located between the adjacent first guide cut lines 105a1 as shown in Fig. 20, the tear reaches the first guide cut line 105a1 side. The tear causes the second guide cut line 106a3' to be torn from a tip end section a thereof towards one of the upper or lower first guide cut line 105al shown in Fig. 20B. That is, it is torn from the tip end section a in a direction of b or c. The tearing direction b or c is determined by the direction and force of tear applied to the second guide cut line from the tear section. The tear in either direction is guided by the first guide cut line 105a1, and followed by tearing and opening along the opening cut line 105a.

At the time of tearing, a tear in a direction of d, i.e., a tear directly to the opening cut line 105a does not occur, and the tear from the second guide cut line 106a3' is guided to the first guide cut line 105a1. Therefore, a length L of the first guide cut line 105al is the same as the interval d1 between the adjacent first guide cut lines 105al or slightly longer than the interval d1.

With the packaging bag 101B, a bag body can be opened reliably from an arbitrary tear section to have an opening of a prescribed size in a similar manner to the packaging bag 101A, and the guide cut line and the opening cut line can be formed in the film before the bag is produced and thus easily formed.

### [Embodiment 7]

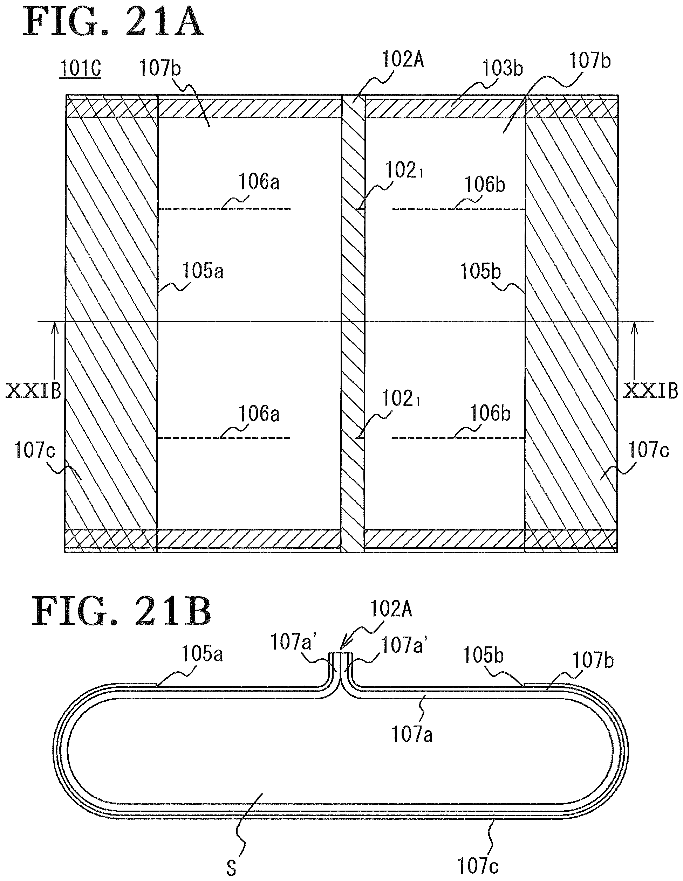

A packaging bag according to Embodiment 7 of the present invention will be described with reference to Fig. 21. Note that Fig. 21 shows a packaging bag according to Embodiment 7 of the present invention. Fig. 21A is a back view, and Fig. 21B is a sectional view along line XXIB-XXIB in Fig. 21A.

A packaging bag 101C according to Embodiment 7 is produced using a composite film sheet in which a plurality of films are laminated. The packaging bag 101C is a bag body using a composite film in which a base layer 107a formed from a band-shaped film of a prescribed length is laminated, on one surface, with an outer sheet 107c with a margin of a prescribed distance from both end borders of the base layer with an intermediate layer 107b therebetween, such that the composite film is bent from an outer sheet portion so that both end border sections 107a' of the base layer 107a are fin-sealed by the back seal section 102, and an opening formed at an end edge section orthogonal to the back seal section is sealed by the end seal sections 103a and 103b. In the bag body, the back seal section 102 is located in a center section of the bag body or to the side of an end section at one of both ends from the center section, the tear section 102₁ is formed near at least one end section of and in a direction orthogonal to the length direction of the back seal section, and the guide cut lines 106a and 106b are formed towards an outer sheet end edge from the tear section.

Rayon, PET, nylon, or OP is used for the base layer, PP or PE for the intermediate layer, and paper or foam material, for example for the outer sheet 107c. The outer sheet end edge is preferably provided with the opening cut lines 105a and 105b. Note that the opening cut line may be omitted when the paper or foam material used in the outer sheet 107c is thick. In this case, the end edge of the outer sheet acts as a guide for a tear in a similar manner to the opening cut lines 105a and 105b. The packaging bag can also be opened with a similar method as in the packaging bag 101 described above and has a similar advantageous effect.

### [Embodiment 8]

A packaging bag according to Embodiment 8 of the present invention will be described with reference to Fig. 2 to Fig. 4, Fig. 14 to Fig. 16, and Fig. 22. A packaging bag 101D according to Embodiment 8 differs in the opening cut line and the guide cut line from the packaging bags 101 to 101C in Embodiments 4 to 7, but otherwise has the same configuration. As such, the overall configuration of the packaging bag 101D is omitted in the drawing. Regarding the description thereof, descriptions of the packaging bags 101, 101A, 101B, and 101C of Embodiment 1 and Embodiments 4 to 7 are incorporated, and the difference in configuration will be described in detail.

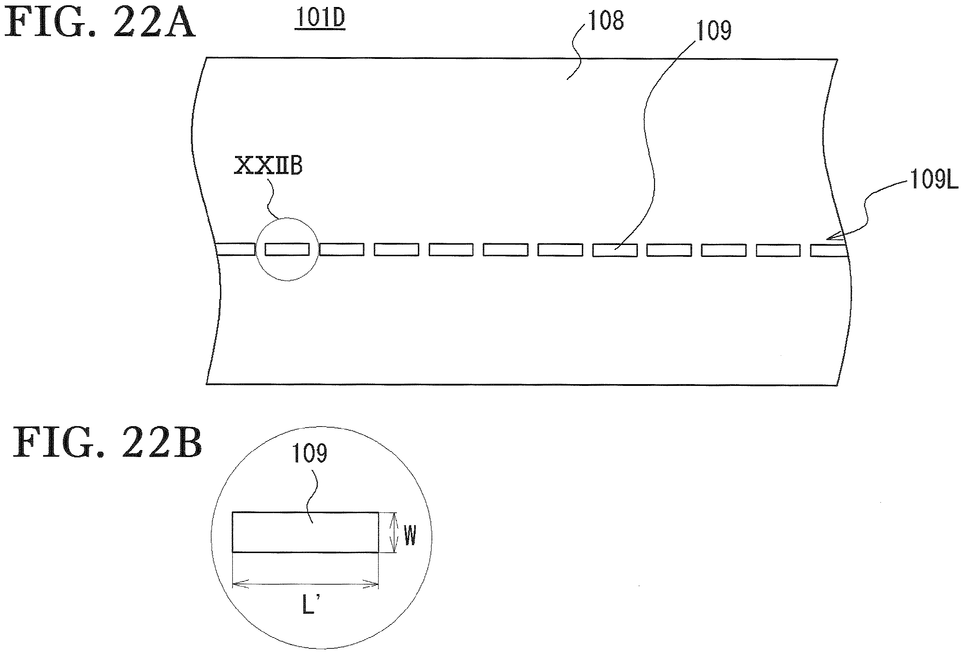

First, an opening cut line and a guide cut line formed in a film sheet will be described with reference to Fig. 2 and Fig. 22. Note that Fig. 22 shows a base film. Fig. 22A is a plan view, and Fig. 22B is an enlarged view of a portion XXIIB in Fig. 22A.

In the packaging bag, the opening cut line and the guide cut line provide both a tear-open effect for an easy opening as well as an accurate opening and a gas permeation effect of causing gas permeation, in a similar manner as in the packaging bags 101, 101A, and 101B. The opening cut line and the guide cut line are configured from a slit group 109L in which a plurality of short slits 109 are arranged at prescribed intervals. The individual slits have the same configurations and are configured from a recession that is in the longitudinal direction of a band-shaped film sheet 108 (hereinafter, also referred to as base film 108) and recessed and distended a prescribed amount from one surface towards the other surface such that the bottom protrudes outwards from the other surface. That is, the recession is formed such that the thickness decreases gradually from a top opening towards the bottom, with the bottom being the thinnest.

As for the base film 108, used is the film sheet mentioned above, a co-extrusion film sheet of PP and PE, for example. The thickness thereof is not particularly limited, but is preferably in a range of 15 to 100 µm. When the thickness is below 15 µm, forming the slit is difficult, and moreover sufficient strength may not be obtained. When at 100 µm or greater, processing becomes difficult. Thus, the thickness of the base film is selected appropriately within the range depending on the type of film resin or the application, for example.

Note that, for the shape of the slit, the manufacturing method of the base film, and the gas permeation effect of the slit, descriptions in Embodiment 1 also apply, and therefore descriptions will be omitted.

With the packaging bag of Embodiment 8, the bottom of the recession can be thinned approximately maximally (for example, to about 2.0 µm) from the thickness of the base film, and the range of gas permeation degree is increased by the thinning, thus enabling use in various fields. Particularly, it becomes useful for use in a packaging material for vegetables, fermented food products, or the like and a container for fermented food products and for microwave oven heating. Since gas permeation in one direction is easy and gas permeation in the opposite direction is difficult, it becomes also effective for example for MA packaging or double packaging.

### [Embodiment 9]

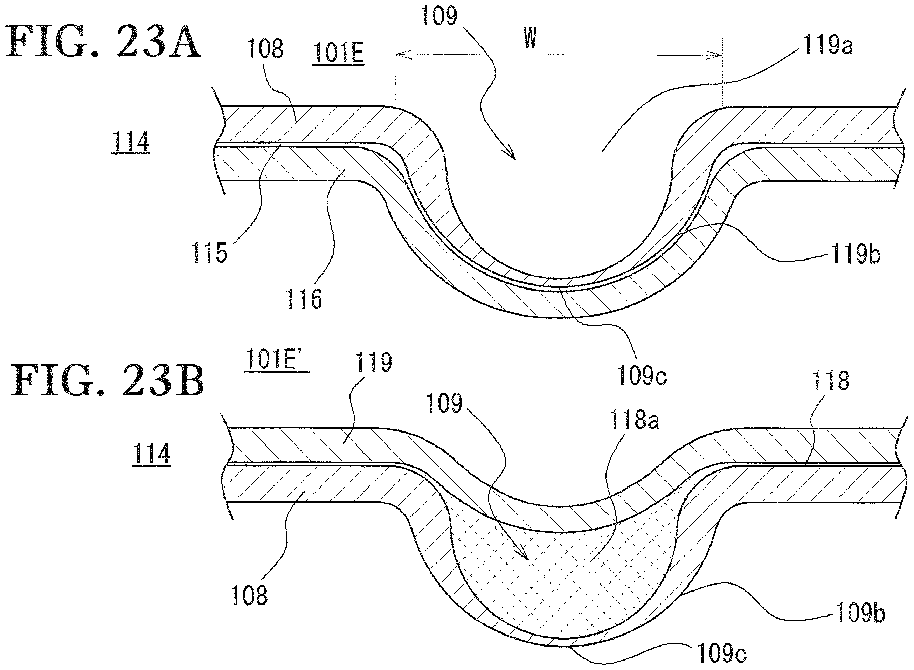

A packaging bag according to Embodiment 9 of the present invention will be described with reference to Fig. 23. The packaging bag according to Embodiment 9 differs from the packaging bag in Embodiments 8 only in the configuration of film sheet lamination and otherwise has the same configuration. As such, the overall configuration of the packaging bag is omitted in the drawing. Regarding the description thereof, the description of the packaging bag of Embodiment 8 is incorporated, and the difference in configuration will be described in detail. Note that Fig. 23 shows a film sheet used in a packaging bag 101E of Embodiment 9. Fig. 23A is a partial sectional view of the film sheet for the packaging bag 101E, and Fig. 23B is a partial sectional view of a film sheet according to a modification example of the packaging bag 101E. The packaging bag 101D of Embodiment 6 is produced with a film sheet having a two-layer structure. Note that the packaging bag 101E is omitted in the drawing.

In a film sheet 114, the base film 108 provided with the slit 109 is joined with another film 116 by the adhesive 15 on the protruding side of the slit. The slit is formed such that the thickness decreases gradually from the top opening groove 109a towards a bottom to cause a mountain-like distention, the bottom protrudes outwards from the other surface, this bottom 109c is the thinnest, and the sectional shape is approximately a U-shape or a V-shape. Note that the slit has the same structure as the slit 109. On the protruding side of the slit of the base film 108 provided with the slit 109, the film 116 is joined by the adhesive 115. As an example of the combination of films to be adhered, PE for the base film 108 and PA or PAT for the film 116 are used. Adhesion of PE having a favorable seal function with PA or PET having high gas-barrier properties provides the packaging bag with both high gas-barrier properties and sealing properties. In a manufacturing device, a film joining device is added to a manufacturing device 110. The packaging bag is suitable for microwave oven heating. That is, when the packaging bag is packed with a food product with the opening being sealed and is heated in a microwave oven, vapor is generated from the food product to increase the internal pressure within the bag, such that water vapor permeates through the slit. At this time, the water vapor permeated through the slit peels off the adhesive 115 between the film 108 and the film 116, is accumulated in this gap, and is released outside when the film 116 rips or through the gap between the two films. Accordingly, the packaging bag can be prevented from bursting.

In a film sheet 114A, the film 108 provided with the slit 109 is joined with another film by an adhesive on the recessed side of the slit. On the recessed side of the slit of the base film 108 provided with the slit 109, another film 119 is joined by an adhesive 118. This packaging bag is also suitable for microwave oven heating. Although the slit having gas permeability is provided to the half-cut line in the packaging bags in these embodiments, the slit may also be provided to another part, e.g., one or both of front and back surfaces of the bag body. Accordingly, the gas permeation degree can be adjusted, and packaging of various objects becomes possible.

### [Embodiment 10]

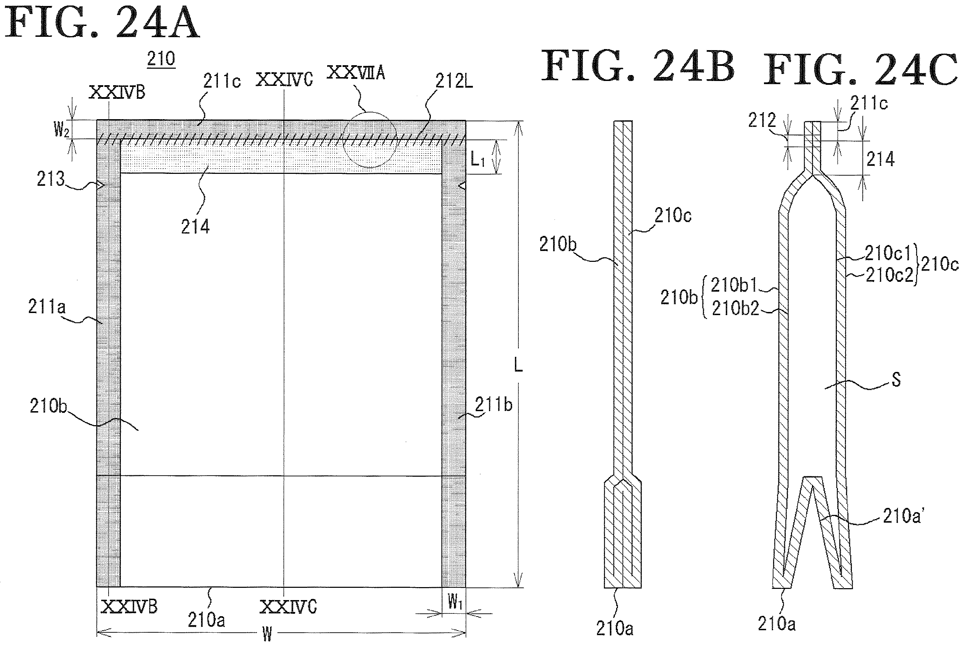

The overall configuration of a packaging bag for a microwave oven according to Embodiment 10 of the present invention will be described with reference to Fig. 24. Note that Fig. 24 shows the packaging bag for a microwave oven according to Embodiment 10 of the present invention. Fig. 24A is a front view, Fig. 24B is a sectional view along line XXIVB-XXIVB in Fig. 24A, and Fig. 24C is a sectional view along line XXIVC-XXIVC in Fig. 24A.

The packaging bag for a microwave oven (hereinafter referred to as packaging bag) 210 according to Embodiment 10 of the present invention is, as shown in Fig. 24, formed from a bottomed bag body in which one plastic film having approximately a thin rectangular shape is folded at a center section in the longitudinal direction to overlap while both end edges in the width direction are aligned, both side edge sections thereof are respectively joined (sealed by thermal welding), and a remaining edge is open as a bag opening, such that the bag body is provided with each of a bag opening seal section 211c, a gas release section 212L, and a liquid leakage block section 214 in the vicinity of an opening in order from the bag opening towards a bottom. That is, this packaging bag 210 has a bottom 210a that has a prescribed width and length and can be enlarged to a relatively large area, a pair of opposing films provided to extend a prescribed length upwards from both bottom side borders in the longitudinal direction of the bottom, front and back films 210b and 210c respectively as the front and back, side edge heat seal sections 211a and 211b in which both side edge border sections of the front and back films 210b and 210c are sealed by thermally welding at a prescribed width W₁, the bag opening seal section 211c in which the bag opening open at an upper end is sealed by thermal welding at a width W₂ after packaged matter is accommodated, the gas release section 212L that is adjacent to the bag opening seal section 211c and, when the internal pressure has increased to a certain level or greater, externally releases the increased internal pressure, and the liquid leakage block section 214 that is adjacent to the gas release section and prevents leakage of a liquid portion included in the packaged matter, is formed from the bag body having the space S that is large enough for accommodating the packaged matter inside, and is produced with the plastic film.

The packaging bag 210 is a rectangular-shaped bag body having the width W and the length L. The gas release section 212L is formed from a plurality of slits 212, and the slits 212 are formed to straddle between the bag opening seal section 211c and the liquid leakage block section 214. The liquid leakage block section 214 is provided in a position adjacent to the bag opening seal section 211c. When the liquid leakage block section 214 is in this position, the liquid leakage block section 214 is in a high position in a state where the bag body is standing independently. Therefore, the internal volume of the bag body is not reduced, immersion in liquid and juice becomes less likely, and an increase in the internal pressure within the bag body promptly causes a peel. Obviously, liquid leakage does not occur even if the bag body is laid horizontally. Note that the bag body is produced with one plastic film, but may be produced using a plurality of different films. It is preferable to provide a cutout (notch) 213 to the side edge of at least one of the side edge heat seal sections 211a and 211b.

As for the plastic film, used is polyethylene terephthalate (PET), polypropylene (PP), polyethylene (PE), polyamide (PA), a laminate film of polyethylene terephthalate (PET) on the front side and polyethylene (PE) on the back side, a laminate film of polyamide (PA) on the front side and polyethylene (PE) on the back side, a laminate film of polyethylene (PE) and polypropylene (PP). The polypropylene may be either one that has been stretched (OPP) or one that is unstretched (CPP). The thickness is 15 to 100 µm in total.

The bottom 210a is, when folded inwards with the packaged matter accommodated within the internal space S, in a shape in which this folding portion is enlarged as, for example, a gusset bag (folding bottom section 210a') to form a so-called standing pouch that can stand independently on this bag bottom section.

The front and back films 210b and 210c are formed from front and back surfaces 210b1 and 210c1 as well as 210b2 and 210c2 of the plastic film. Note that although the films 210b and 210c are front and back films, either one may be the front or back upon use in a packaging bag. One of the front and back films 210b and 210c is referred to as a first or second plastic film in the scope of claims for patent.

In the packaging bag 210, as shown in Fig. 24, an outer circumference side border and the bag opening are joined by thermal welding at the prescribed width W₁ to form the side edge heat seal sections 211a and 211b and the bag opening seal section 211c. The joining strength or so-called seal strength with which the side edge heat seal sections 211a and 211b and the bag opening seal section 211c are sealed by thermal welding is a seal strength higher than in the liquid leakage block section 214. The conditions for sealing by thermal welding is such that the weld temperature is relatively high at, for example, 120°C and a prescribed pressing force is applied for a time of, for example, several seconds. When the side edge heat seal sections 211a and 211b and the bag opening seal section 211c are sealed by thermal welding under these conditions, joining becomes firm, and a peel from the seal sections does not occur even if the packaged matter is heavy or upon impact during transportation. As a result, content does not pop outside due to a peel of the side edge heat seal sections 211a and 211b and the bag opening seal section 211c.

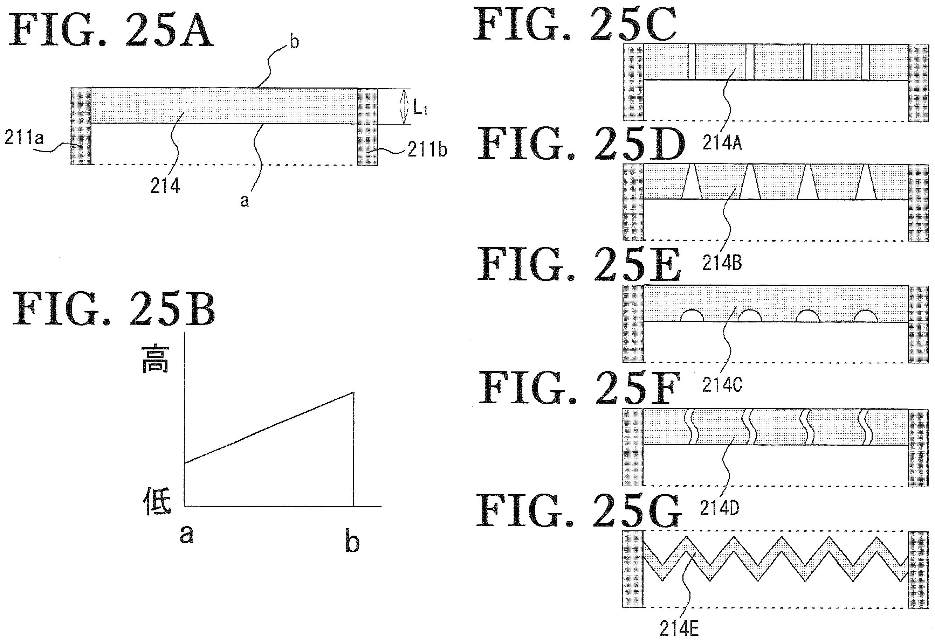

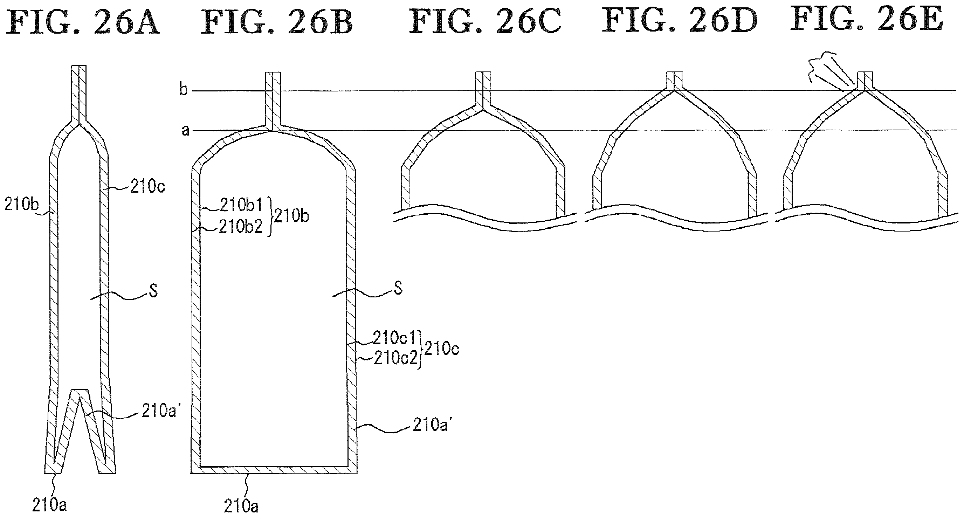

The liquid leakage block section 214 will be described with reference to Fig. 24 to Fig. 26. Note that Fig. 25 shows the liquid leakage block section in the packaging bag in Fig. 24. Fig. 25A is a front view of the liquid leakage block section, Fig. 25B is a graph of the degree at which the liquid leakage block section is joined, and Fig. 25C to Fig. 25G are front views of a modification example of the liquid leakage block section in Fig. 25A. Fig. 26 is a sectional view illustrating the effect of the liquid leakage block section of the packaging bag in Fig. 24.

As shown in Fig. 24A and Fig. 25A, the liquid leakage block section 214 is formed from a thermal weld seal band in a band shape having a prescribed width, e.g., about several millimeters to several ten of millimeters, to connect the two side edge heat seal sections 211a and 211b. For the seal strength of the thermal weld seal band, sealing by thermal welding is weaker than in the side edge heat seal sections 211a and 211b and the bag opening seal section 211c as described above. For this weak thermal weld seal band, the weld temperature is lower at, for example, 100 to 110°C than the weld temperature 120°C for the side edge heat seal sections 211a and 211b and the bag opening seal section 211c, and a prescribed pressure is applied for a time of, for example, 0.3 to 0.5 seconds. The conditions for thermal welding are such that the weld temperature is lower and the time is shorter than for the side edge heat seal sections 211a and 211b and the bag opening seal section 211c. This sealing method enables a seal having a prescribed function easily by adjusting the weld temperature or the pressing force described below without using a special film material, e.g., a laminate film provided with an easy-to-peel layer.

By sealing the liquid leakage block section 214 with a seal strength weaker compared to the side edge heat seal sections 211a and 211b and the bag opening seal section 211c, liquid leakage is prevented in a state where the packaged matter is packed into the bag, and ripping or bursting can be prevented since a peel occurs easily when the internal pressure exceeds a prescribed level to release gas that has exceeded the prescribed level from the gas release section.

The entire seal strength of the weak thermal weld seal band forming the liquid leakage block section 214 is approximately uniform, but the seal strength may be partially varied. For example, it is preferably strong on the side close to the gas release section 212L and weakened as the distance increases from the gas release section. That is, as shown in Fig. 25B, the seal strength is strong on a side "b" close to the gas release section 212L, weakens as the distance increases from the gas release section, and is weakest on the side "a" farthest from the gas release section. When the pressure within the bag body increases, a peel first starts from the side "a" on the inside of the bag body along with the increase, and this peeling phenomenon smoothly spreads and causes a peel on the gas release section 212L side "b", due to the seal strength being varied in this manner. As a result, liquid leakage is prevented at the time of transportation or storageand, when the pressure of water vapor generated from the packaged matter exceeds the prescribed level at the time of heating and cooking, a peel occurs more easily to release the internal pressure from the gas release section, thus enabling ripping or bursting to be prevented.

The adjustment of the seal strength is performed using a thermal weld seal bar that adjusts the pressure applied under the conditions for sealing by thermal welding described above, e.g., having a shape such that the pressing force is strong on the gas release section 212L side and the pressing force is weakened as the distance increases from the gas release section. For the thermal weld seal bar, that in which a pressing surface thereof is inclined at a prescribed angle, that having a stepped shape, for example is used. Note that the joining may be by joining means other than sealing by thermal welding, e.g., gluing.

The effect of the liquid leakage block section will be described with reference to Fig. 26. In the packaging bag 210, water vapor is hardly generated from the packaged matter, which is not shown, or exists in a very small amount before non-heating and cooking. Therefore, the liquid leakage block section 214 maintains a joined state (see Fig. 26A). When heating and cooking starts and water vapor is generated from the packaged matter, the pressure within the bag increases such that the bag body is distended (see Fig. 26B). In this state, the pressure within the bag is low and is not enough to cause a peel of the liquid leakage block section 214. When the pressure within the bag exceeds the prescribed level due to heating, a thermally welded part of the liquid leakage block section 214 starts to peel. If the seal strength of the liquid leakage block section 214 at this time is strong on the side "b" close to the gas release section 212L, weakened as the distance increases from the gas release section 212L, and weakest on the side "a" farthest from the gas release section as shown in Fig. 25B, the inside of the bag body, i.e., the side "a" farthest from the gas release section 212L quickly starts to peel in response to the increase in the pressure within the bag as shown in Fig. 26C and peels at an accelerated peel rate thereof along with a further increase in the pressure within the bag (see Fig. 26D). If the pressure within the bag increases still, the thermally welded part of the liquid leakage block section 214 peels off completely. As a result, the water vapor (gas) increased inside is released externally from the gas release section (see Fig. 26E). Since the bag opening seal section is firmly sealed at the time of this gas release, the seal section does not open, and only the water vapor of which the pressure has increased spurts out from the gas release section.

For the thermal weld pattern of the weak thermal weld seal band forming the liquid leakage block section 214, the thermal weld pattern is formed such that the entire surface is sealed by thermal welding at the prescribed width as shown in Fig. 25A. However, this is not limiting, and the thermal weld pattern may be modified in various ways. Fig. 25C to Fig. 25G show modification examples of the liquid leakage block section. For liquid leakage block sections 214A, 214B, and 214D in Fig. 25C, Fig. 25D, and Fig. 25F, non-weld parts of prescribed shapes, i.e., a non-weld part having a slit shape, a triangular shape, and an approximate S-shape are provided to a prescribed part in the thermal weld pattern in Fig. 25A. With the liquid leakage block sections 214A, 214B, and 214D, it becomes easier to pass gas through the non-weld parts having the slit shape, the triangular shape, and the approximate S-shape as paths. That is, when the internal pressure within the bag increases at the time of heating and cooking, the liquid leakage block sections having these weak thermal weld patterns cause the increased gas to first pass through the path in the shape described above to reach the gas release section. Upon a further increase in the internal pressure, a peel then occurs in a thermally welded portion in the vicinity of the path, such that the gas with increased pressure reaches the gas release section.

Note that the parts in the slit shape, the triangular shape, and the approximate S-shape may be a weak seal close to a non-weld instead of a non-weld. Note that the liquid leakage block sections 214 and 214A to 214E may be referred to as weak thermal weld pattern sections 214 and 214A to 214E in the description below. In the weak thermal weld pattern sections 214C and 214E in Fig. 25E and Fig. 25F, a non-thermal weld part has a semicircular cutout shape and a thermal weld section is in a wave shape. The liquid leakage block sections 214A to 214E may have a thermal weld pattern in which the seal strength is varied as shown in Fig. Fig. 25B. With the liquid leakage block section having the weak thermal weld patterns, the effect in Fig. 26 can be adjusted more precisely.

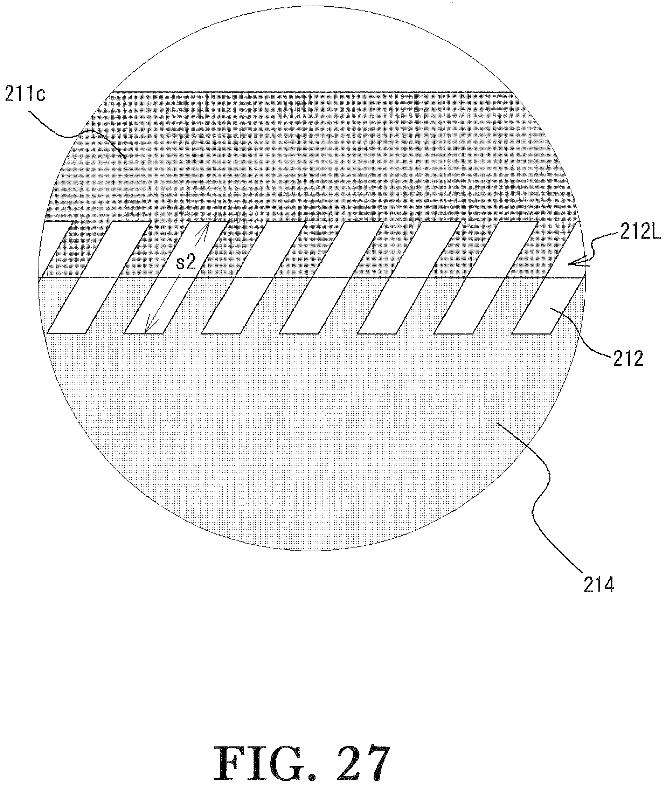

The gas release section 212L will be described with reference to Fig. 2 to Fig. 4 and Fig. 24 to Fig. 27. Note that Fig. 27 shows the gas-permeable section and is an enlarged view of a portion XXVII in Fig. 24.

On a film surface, as shown in Fig. 24, the gas release section 212L is formed from a slit group formed from the plurality of slits 212 of which the gas permeation degree is high in one direction and the gas permeation degree is low in the opposite direction. Note that the gas release section 212L is also referred to as a slit group 212L in the description below. The slit group 212L only needs to be formed on at least one film of the front and back films 210b and 210c and thus is illustrated as being provided to the front film 210b in this embodiment. For the film, that described above is used. The thickness thereof is preferably a prescribed thickness, e.g., in a range of 15 to 100 µm, in consideration of slit formation. When the thickness is thinner than 15 µm, forming the slit is difficult, and moreover sufficient strength may not be obtained. When at 100 µm or greater, processing becomes difficult. Thus, the thickness of the film material is selected appropriately within the range depending on the type of film resin or the application, for example.

The slit group 212L is formed from the plurality of slits 212 of a prescribed length being arranged at approximately equal intervals or unequal intervals in the film portion 210b, and the slits have the same configurations. As shown in Fig. 27, the slits 212 are configured from a recession that is in the width direction of the film 210b and recessed and distended a prescribed amount from one surface towards the other surface such that the bottom protrudes outwards from the other surface. That is, the recession is formed such that the thickness decreases gradually from a top opening towards the bottom, with the bottom being the thinnest.

Note that, for the shape of the slit, the manufacturing method of the base film, and the gas permeation effect of the slit, descriptions in Embodiment 1 also apply, and therefore descriptions will be omitted.

In the packaging bag 210 described above, the gas release section and the liquid leakage block section are provided separately in the vicinity of the bag opening, and thus the respective functions can be fulfilled in the respective sections. That is, the liquid leakage block section can block external liquid leakage of liquid in the bag body. Moreover, with the gas release section, immersion in liquid does not occur when the pressure within the bag body is low and, when there is an increase to a prescribed value or greater, the increased internal pressure can be released externally. Since the gas release section and the liquid leakage block section are such that the former is provided to a part close to the bag opening and the latter behind the gas release section as the liquid leakage block section inside the bag body, the gas release section and the liquid leakage block section can be formed easily to have the respective functions. Particularly, forming the gas release section becomes easy. As a result, the packaging bag is excellent in security in that ripping or bursting of the bag body does not occur at the time of transportation or heating, is excellent in sanitation in that bacteria do not enter within the bag from outside even at the time of distribution or storage, is excellent in productivity in that production is possible easily and at low cost, and can be used with confidence without leakage of liquid and juice or the like.

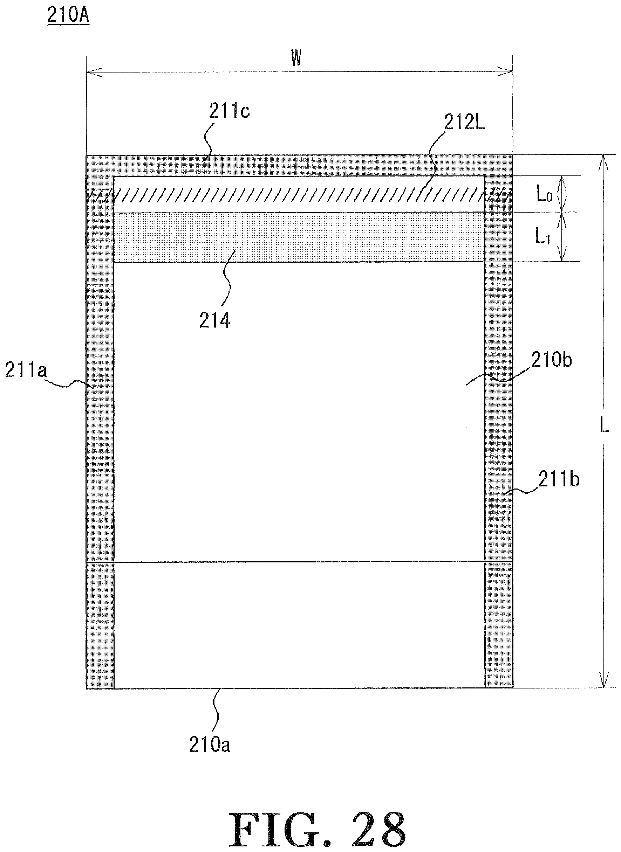

Although the gas release section and the liquid leakage block section are adjacent, i.e., the plurality of slits forming the gas release section 212L are formed to straddle between the bag opening seal section 211c and the liquid leakage block section 214 in the packaging bag 210 described above, it may be such that a prescribed gap L₀ is provided between a part that seals the bag opening and the liquid leakage block section, and the gas release section is provided at the gap, as in a packaging bag 210A (see Fig. 28). With the packaging bag 210A, gas can be released from the gap L₀. Particularly, when the weak weld patterns 214A, 214B, or 214D shown in Fig. 25 is used in the liquid leakage block section, distention in the gap L₀ causes a release of gas, and the release becomes easy.

### [Embodiment 11]

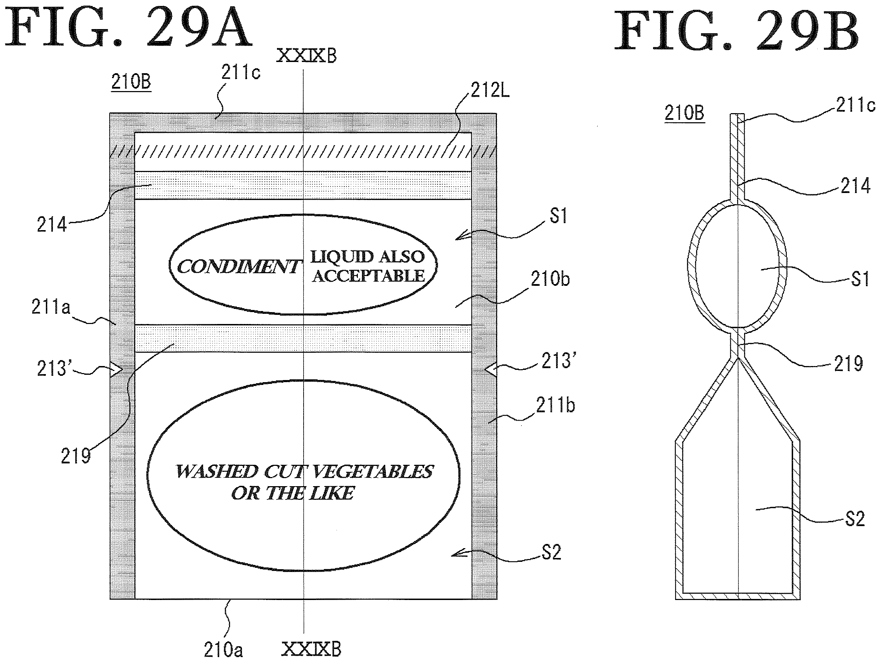

A packaging bag for a microwave oven according to Embodiment 11 of the present invention will be described with reference to Fig. 29. Note that Fig. 29 shows the packaging bag for a microwave oven according to Embodiment 11 of the present invention. Fig. 29A is a front view and Fig. 29B is a sectional view along line XXIXB-XXIXB in Fig. 29A. In a packaging bag 210B for a microwave oven according to Embodiment 11 of the present invention, the inside of the bag body of the packaging bag 210 or 210A of Embodiment 10 is partitioned by a partition seal section such that upper and lower chambers of respective prescribed sizes are formed. Thus, portions common to the two are denoted by the same reference numerals, redundant descriptions will be omitted, and the difference in configuration will be described in detail.

In the packaging bag 210B, the bag body of the packaging bag 210 or 210A is partitioned inside, i.e., between the bottom 210a of the bag body and the liquid leakage block section 214, by a partition seal section 219 to form an upper chamber S1 and a lower chamber S2 above and below the partition seal section as a boundary. The sizes (volumes) of the upper and lower chambers S1 and S2 are determined by the type or size, for example, of packaged matter to be accommodated in the respective chambers. For example, when a foodstuff is put into the lower chamber S2 and a condiment for flavoring the foodstuff is put into the upper chamber S1, it is determined in consideration of the type and amount of the foodstuff and the amount of the condiment required for the foodstuff The partition seal section 219 is joined with the thermal weld pattern of the liquid leakage block section 214 used in the packaging bag 210 or 210A. Regarding selection of the thermal weld pattern, the thermal weld pattern 214, 214C, or 214E (see Fig. 25A, Fig. 25E, or Fig. 25G) without a path is selected when liquid matter is put into the upper chamber S1, and the thermal weld pattern 214A, 214B, or 214D (see Fig. 25C, Fig. 25D, or Fig. 25F) with the path is selected when solid matter is put.

With these thermal weld patterns as well, the seal peels in an instant upon an increase in the internal pressure of the lower chamber to a certain level, e.g., at a timing in which the foodstuff in the lower chamber is cooked, if the seal strength is varied in the sealing for partitioning. Therefore, the condiment in the upper chamber falls to be dispersed and mixed approximately throughout the surface on the foodstuff in the lower chamber without becoming uneven. When an asparagus, potato, edamame, or the like is accommodated in the lower chamber S2, heating in a microwave oven with a condiment such as, for example, salt for flavoring the foodstuff put in the upper chamber S1 enables delicious cooking readily in a short amount of time with the salt sprinkled throughout. That is, the whole bag can be microwaved to make steamed vegetables or the like easily. Particularly since the weld force in the partition seal section 219 is lower than the weld force in the liquid leakage block section 214, microwaving and a subsequent increase in the internal pressure cause the partition seal section 219 to peel off first such that the foodstuff and the condiment mix. Upon further heating in the mixed state and a further increase the internal pressure, the liquid leakage block section 214 peels off next, and thus the internal pressure can be released from the gas release section 212L. Therefore, cooking can be performed more efficiently. Note that the weld force of the partition seal section 219 at this time is preferably adjusted such that the internal pressure due to heating in a microwave oven causes a peel but a peel does not occur from a load applied during transportation. Furthermore, since the area of the bottom 210a of the bag body is large and standing is possible, the bag body can be used as a simple plate by being torn from a notch 213'. In the weak thermal weld seal band, the seal strength is low on the bottom side of the bag body and is high on the gas release section side.

### [Modification Example 1]

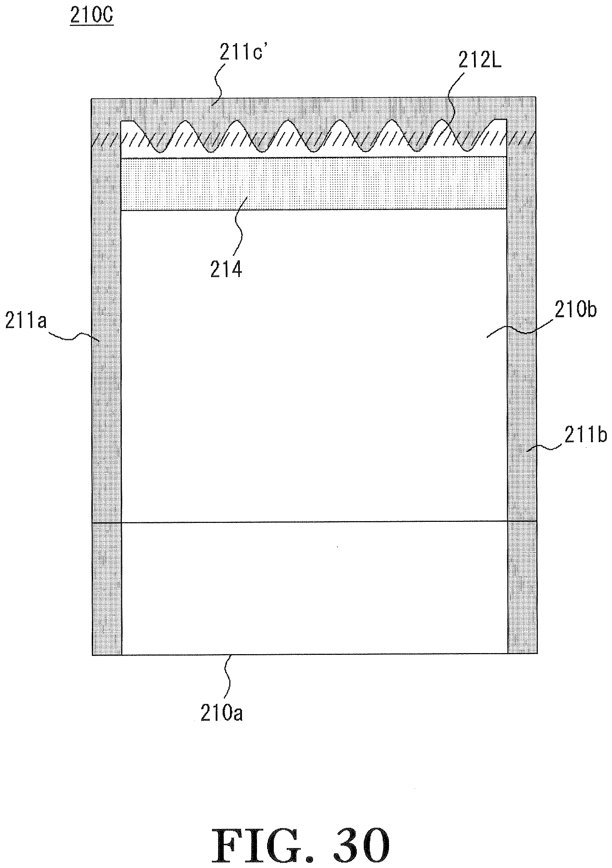

A packaging bag for a microwave oven according to Modification Example 1 of the present invention will be described with reference to Fig. 30. Note that Fig. 30 is a front view of the packaging bag for a microwave oven according to Modification Example 1 of the present invention. In a packaging bag 210C for a microwave oven according to Modification Example 1 of the present invention, a portion in which the bag opening of the bag body is sealed by thermal welding in the packaging bags 210, 210A, and 210B of Embodiments 10 and 11 is formed to be sealed in a wave shape over the gas release section. Thus, common portions are denoted by the same reference numerals, redundant descriptions will be omitted, and the difference in configuration will be described in detail.

As shown in Fig. 30, a portion in which a bag opening seal section 210c' of the packaging bag 210C is sealed by thermal welding is formed and sealed in a wave shape. With such a configuration, the proportion of intersections of a thermally welded seal portion in the bag opening seal section 210c' and the gas release section 212L increases, and thus the internal pressure generated within the bag body can be released more efficiently.

### [Modification Example 2]

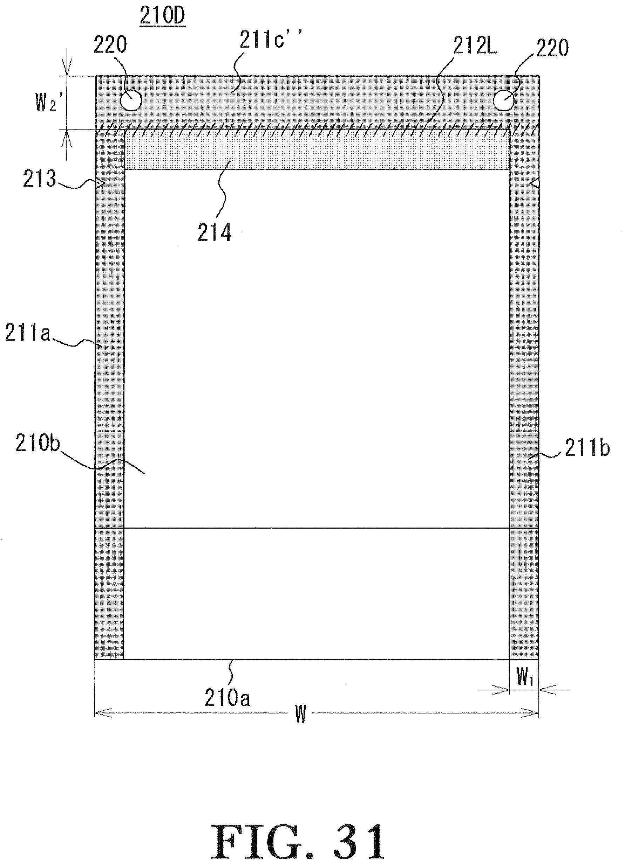

A packaging bag for a microwave oven according to Modification Example 2 of the present invention will be described with reference to Fig. 31. Note that Fig. 31 is a front view of the packaging bag for a microwave oven according to Modification Example 2 of the present invention. In a packaging bag 210D for a microwave oven according to Modification Example 2 of the present invention, a portion in which the bag opening of the bag body is sealed by thermal welding in the packaging bags 210, 210A to 210C of Embodiments 10 and 11 and Modification Example 1 is provided with a wider width than in a portion in which both side edge borders are sealed by thermal welding. Thus, common portions are denoted by the same reference numerals, redundant descriptions will be omitted, and the difference in configuration will be described in detail.

As shown in Fig. 31, a width W₂' of a portion in which a bag opening seal section 210c" of the packaging bag 210D is sealed by thermal welding is provided as a wider width than the width W₁ of the portion in which in the both side edge heat seal sections 211a and 211b are sealed by thermal welding. With such a configuration, a portion with which a user can hold the packaging bag 210D heated in a microwave oven with a bare hand can be provided to the bag opening seal section 210c", and thus a secure removal from the microwave oven or carrying by the user becomes possible. By forming a pore 220 in the bag opening seal section 210c" having a wider width, the user can pass a finger through the pore 220 for holding or kitchen chopsticks or the like can be inserted. Thus, removal or carrying of the heated packaging bag can be performed more securely. Note that, in Fig. 31, the packaging bag 210 according to
Embodiment 10 is used for illustration. However, this is not limiting, and the packaging bag 210A according to Embodiment 10, the packaging bag 210B according to Embodiment 11, and the packaging bag 210C according to Modification Example 1 can also be used in a similar manner.

### EXPLANATIONS OF LETTERS OR NUMERALS

- 1 to 1B, 10, 10A: Gas-permeable film
- 2: Base plastic film
- 3, 3A to 3D, S: Slit
- 3L, 3AL, 3BL, 3CL, 3DL: Slit group
- 4: Manufacturing device
- 5: Pretreatment device
- 6: Slit forming device
- 6A: Pressing roll
- 6B: Receiving roll
- 7: Slit forming tooth
- 8: Joining device
- 9A, 9B: Manufacturing device
- 11, 14: Plastic film
- 101, 101A to 101E: Packaging bag
- 102: Back seal section
- 102₁: Tear section
- 103a, 103b: End seal section
- 104: Opening
- 104b: Opened opening
- 105a, 105b: Opening cut line
- 105a1, 105b1: First guide cut line
- 106a, 106b, 106a1 to 106an, 106b, 106b1 to 106bn: Guide cut line
- 106a1' to 106an', 106b1' to 106bn': Second guide cut line
- 107a: Base film
- 107b: Intermediate adhesion layer
- 107c: Outer sheet material
- 108: Base film
- 109: Slit
- 109a: Opening groove
- 109L: Slit group
- 110: Manufacturing device
- 111: Pretreatment device
- 112: Slit forming device
- 112A: Pressing roll
- 112B: Receiving roll
- 113: Slit forming tooth
- 114, 114A: Film sheet
- 116, 119: Film
- 115, 118: Adhesive
- 210, 210A to 210D: Packaging bag for microwave oven (packaging bag)
- 210a: Bottom
- 210b, 210c: Front-back film (first and second plastic films)
- 211a, 211b: Side edge heat seal section
- 211c to 211c": Bag opening seal section
- 212L: Gas release section
- 212: Slit
- 213, 213': Notch
- 214, 214A to 214E: Liquid leakage block section (weak thermal weld seal band)
- 215: Processing device
- 216: Pretreatment device
- 217: Slit forming device
- 218: Slit tooth
- 219: Partition seal section
- 220: Pore
- S: Space
- S1: Upper chamber
- S2: Lower chamber

## Claims

1. A gas-permeable film (1, 1A, 1B, 10, 10A) comprising:
a gas-permeable section for gas permeation that is provided to a base plastic film (2) of a prescribed thickness, wherein
the gas-permeable section is a non-penetrating recession having a top opening (3a, 109a, 212a) and a bottom (3c, 109c, 212c), and the recession is formed such that a thickness decreases gradually from the top opening towards the bottom with the bottom being thinnest, and wherein the bottom of the recession protrudes outwards from a surface of the base plastic film, and wherein the recession is formed as a slit (3, 5, 109, 212) having a U-shaped or V-shaped sectional shape, and wherein the recession is formed from a discontinuous slit group (3L, 109L, 212L) wherein a plurality of slits are arranged at a prescribed interval.

2. The gas-permeable film according to claim 1, wherein the plurality of slits of the discontinuous slit group each have one of a straight line, curved, and bent shapes in planar view.

3. The gas-permeable film according to claim 1, wherein the plurality of slits of the discontinuous slit group are each arranged in a shape of a straight line at a prescribed interval.

4. The gas-permeable film according to claim 2, wherein an extending direction of each of the plurality of slits of the discontinuous slit group is inclined at a prescribed angle with respect to an extending direction of the straight line.

5. The gas-permeable film according to claim 1, wherein the base plastic film is a film of at least one layer of polypropylene, polyethylene, polyethylene terephthalate, and polyacetal with a thickness of 15 to 100 µm, and a thickness at the bottom of the recession is 2 to 70 µm.

6. The gas-permeable film according to claim 5, wherein the base plastic film is a one-layer film (11, 14), and another plastic film (13, 16) is laminated on a front surface or back surface of the base plastic film (11, 14).

7. The gas-permeable film according to any one of claims 1 to 6, that is for hermetically sealing an opening of a container.

8. A method for manufacturing a gas-permeable film (1, 1A, 1B, 10, 10A) for forming a gas-permeable section for gas permeation in a plastic film of a prescribed thickness, the method comprising:
forming the gas-permeable section from a recession for which the base plastic film (2) is brought to a temperature exceeding a glass transition temperature and below a melting temperature of the film, and the film is pressed and stretched from one surface towards another surface to be recessed a prescribed amount, such that a thickness decreases gradually from a top opening (3a, 109a, 212a) towards a bottom with the bottom being thinnest and the bottom (3c, 109c, 212c) protrudes outwards from the other surface, the recession being formed as a slit having a U-shaped or V-shaped sectional shape, and the recession being formed from a discontinous slit group (3L, 109L, 212L) wherein a plurality of slits (3, S, 109, 212) are arranged at a prescribed interval.

9. The method for manufacturing a gas-permeable film according to claim 8, wherein another plastic film (13, 16) is laminated on one of front and back surfaces of the base plastic film (11, 14) after the recession has been formed in the base plastic film (11, 14).

10. The method for manufacturing a gas-permeable film according to claim 9, wherein the recession is formed by running the plastic film (2) between one roller (6A) provided with a protrusion of a prescribed shape and another roller (6B) not formed with the protrusion of the prescribed shape.

11. The method for manufacturing a gas-permeable film according to claim 10, wherein a rigidity of the one roller provided with the protrusion of the prescribed shape being used is lower than a rigidity of the other roller.

12. The method for manufacturing a gas-permeable film according to any one of claims 8 to 11, wherein a film of at least one layer of polypropylene, polyethylene, polyethylene terephthalate, and polyacetal is used as the base plastic film with a thickness of 15 to 100 µm, and a thickness at the bottom of the recession is 2 to 70 µm.

13. A packaging bag (101) comprising:
a one-end-open bag body (104a) formed using the gas-permeable film according to any one of claims 1 to 7.

14. The packaging bag according to claim 13, wherein
the one-end-open bag body has a back seal section (102) in which two end edge sections (101b', 101c') are fin-sealed and an end seal section (103a, 103b) in which one opening of an end edge section orthogonal to the back seal section is sealed,
the back seal section has a tear section that is a partial tear from an end section of the back seal section in a direction orthogonal to a length direction of the back seal section,
a surface where the back seal section (102₁) is located is provided with an opening cut line (105a, 105b) formed to be apart from the back seal section to extend approximately parallel to the back seal section and a guide cut line (106a, 106b) formed towards the tear section of the back seal section from the opening cut line, and
the opening cut line and the guide cut line are formed by the recession of the gas-permeable film.

15. The packaging bag according to claim 14, wherein the tear section is formed in a plurality of parts to be apart from each other, the opening cut lines are formed on both sides of the back seal, the guide cut line is formed in a plurality of parts each towards the tear section in the plurality of parts from each of the opening cut lines.

16. The packaging bag according to claim 15, wherein the guide cut line (106a, 106b) is divided into a plurality of short first guide cut lines (105a1, 105b1) that extend at a prescribed interval from the opening cut line (106a1', 106b1') and a second guide cut line that is apart a prescribed distance from the first guide cut line, extends to a side of the back seal section at a different interval from the first guide cut line, and is longer than the first guide cut line.

17. The packaging bag according to claim 13, wherein
in the one-end-open bag body, a packaging film material (107a) laminated on one surface with an outer sheet material (107c) to have a prescribed distance from both end borders with an intermediate layer (107b) in between is used such that the packaging film material is bent from the outer film portion with both end border sections (107a') being fin-sealed by the back seal section (102) and an opening formed at an end edge section orthogonal to the back seal section is sealed by the end seal section (103a, 103b),
the back seal section (102) is located in a center section of the bag body or to a side of an end section at one of both ends from the center section, a tear section (102₁) is formed at least near one end section of and in a direction orthogonal to a length direction of the back seal section, the intermediate layer is provided with a guide cut line (106a, 106b) that extends from the outer film end border edge towards the tear section of the back seal section for opening, and
the guide cut line (106a, 106b) is formed by the recession of the gas-permeable film.

18. The packaging bag according to claim 17, wherein
the bag body has an opening cut line (105a, 105b) at the outer film (107c) end border edge, and
the opening cut line (105a, 105b) is formed by the recession of the gas-permeable film.

19. The packaging bag according to claim 18, wherein the tear section (102₁) is formed in a plurality of parts to be apart from each other, and a plurality of the guide cut lines (106a, 106b) are formed towards the plurality of the tear sections (102₁) of the back seal section (102) from the outer film (107c) end border edge or the opening cut line (105a, 105b) to extend approximately parallel at an approximately identical interval as an interval of the tear sections.

20. The packaging bag according to claim 19, wherein the guide cut line (106a, 106b) is divided into a plurality of short first guide cut lines (105a₁, 105b₁) that extend at a prescribed interval from the opening cut line (105a, 105b) and a long second guide cut line (106a₁, 106b₁) that is apart a prescribed distance from the first guide cut line and extends to a side of the back seal section (102) at an interval different from the interval, and both the cut lines are formed from a non-penetrating groove wherein only a portion in a thickness direction of the plastic film is cut.

21. The packaging bag (210) according to claim 13, wherein
in the one-end-open bag body, a pair of overlapping first and second plastic films (210b, 210c) wherein at least one is formed from a gas-permeable film are sealed together at a bottom (210a) and both side edge borders (211a, 211b) continuous with the bottom, a remaining one end opposing the bottom is a bag opening that is open, the bag opening has a bag opening seal section (211c) that is sealed after packaged matter is packed,
a gas release section (212L) that, when an internal pressure of the bag body has increased to a prescribed value or greater, externally releases the increased internal pressure in a state where the bag opening is sealed and a liquid leakage block section (214) that blocks leakage of liquid from the packaged matter to the gas release section are provided in a vicinity of the bag opening in order from the bag opening towards the bottom, and
the gas release section is formed by the recession of the gas-permeable film.

22. The packaging bag according to claim 21, wherein the gas release section (212L) is provided to straddle between a part that seals the bag opening (211c) and the liquid leakage block section (214).

23. The packaging bag according to claim 21, wherein a prescribed gap (Lo) is provided between the bag opening seal section (211c) and the liquid leakage block section (214), and the gas release section (212L) is provided at the gap.

24. The packaging bag according to claim 21, wherein the liquid leakage block section (214) is formed from a weak thermal weld seal band wherein the pair of gas-permeable films (210b, 210c) is thermally welded with a weak seal strength at a prescribed width between the both side edge borders, and the seal strength of the weak thermal weld seal band is weaker than a thermal weld seal strength of the both side edge borders and the bag opening.

25. The packaging bag according to claim 24, wherein the weak thermal weld seal band is provided with at least one part that is a non-weld or a weak weld part close to the non-weld such that width is crossed or the width is narrowed.

26. The packaging bag according to claim 24, wherein the seal strength of the weak thermal weld seal band is low on a bottom side (210a) of the bag body and high on a side of the gas release section (212L).

27. The packaging bag according to claim 21, wherein the gas release section (212L) is formed from a continuous slit or discontinuous slits, and the slit (212) is recessed from an inner wall surface of the film towards an outer front surface such that a peak section thinly protrudes outwards.

28. The packaging bag according to claim 21, wherein the one-end-open bag body is provided with a partition section (219) between the liquid leakage block section (214) and the bottom (210a) for a separate accommodation of packaged matter, the partition section (219) is formed from the weak thermal weld seal band (214A to 215E) thermally welded at a prescribed width between the both side edge borders (211a, 211b) of the pair of gas-permeable films (210b, 210c), and the seal strength of the weak thermal weld seal band is weaker than a thermal weld seal strength of the both side edge borders and the bag opening.

29. The packaging bag according to claim 28, wherein the weak thermal weld seal band is provided with at least one part that is a non-weld or a weak weld part close to the non-weld such that width is crossed or the width is narrowed.

30. The packaging bag according to claim 28, wherein the seal strength of the weak thermal weld seal band is low on a bottom side of the bag body (210a) and high on a side of the gas release section (212L).

31. The packaging bag according to claim 28, wherein the one-end-open bag body has a notch (213') in at least one edge of the both side edges on a side to the bottom from the partition section.

32. The packaging bag according to claim 21, wherein the bottom is folded at a time of non-accommodation of the packaged matter and has a structure wherein an area is increased to a size that enables independent standing when the packaged matter is accommodated.

33. The packaging bag according to claim 21, wherein the bag opening seal section (211c) is sealed in a wave shape over the gas release section (212L).

34. The packaging bag according to claim 21, wherein the bag opening seal section (211c) is provided with a width wider than a portion wherein the both side edge borders (211a, 211b) are sealed by thermal welding.

35. The packaging bag according to any one of claims 21 to 34, wherein the bag opening seal section (211c) has at least one pore (220).

## Patentansprüche

1. Gasdurchlässige Folie (1, 1A, 1B, 10, 10A), umfassend:
einen gasdurchlässigen Abschnitt zur Gaspermeation, der einer Basis-Kunststofffolie (2) von einer vorgeschriebenen Dicke bereitgestellt ist, wobei
der gasdurchlässige Abschnitt eine nicht durchdringende Vertiefung ist, die eine obere Öffnung (3a, 109a, 212a) und einen Boden (3c, 109c, 212c) aufweist, und die Vertiefung so ausgebildet ist, dass eine Dicke von der oberen Öffnung zum Boden hin allmählich abnimmt, wobei der Boden am dünnsten ist, und wobei der Boden der Vertiefung von einer Oberfläche der Basis-Kunststofffolie nach außen vorsteht, und wobei die Vertiefung als ein Schlitz (3, 5, 109, 212) ausgebildet ist, der eine U-förmige oder V-förmige Querschnittsform aufweist, und wobei die Vertiefung von einer diskontinuierlichen Schlitzgruppe (3L, 109L, 212L) ausgebildet ist, wobei eine Vielzahl von Schlitzen mit einem vorgeschriebenen Intervall angeordnet sind.

2. Gasdurchlässige Folie nach Anspruch 1, wobei die Vielzahl von Schlitzen der diskontinuierlichen Schlitzgruppe jeweils eine von einer geradlinigen, gekrümmten und gebogenen Formen aufweisen in Draufsicht.

3. Gasdurchlässige Folie nach Anspruch 1, wobei die Vielzahl von Schlitzen der diskontinuierlichen Schlitzgruppe jeweils in einer Form einer geraden Linie mit einem vorgeschriebenen Intervall angeordnet sind.

4. Gasdurchlässige Folie nach Anspruch 2, wobei eine Erstreckungsrichtung von jedem der Vielzahl von Schlitzen der diskontinuierlichen Schlitzgruppe mit einem vorgeschriebenen Winkel in Bezug auf eine Erstreckungsrichtung der geraden Linie geneigt ist.

5. Gasdurchlässige Folie nach Anspruch 1, wobei die Basis-Kunststofffolie eine Folie aus mindestens einer Schicht aus Polypropylen, Polyethylen, Polyethylenterephthalat und Polyacetal ist mit einer Dicke von 15 bis 100 µm, wobei eine Dicke am Boden der Vertiefung 2 bis 70 µm beträgt.

6. Gasdurchlässige Folie nach Anspruch 5, wobei die Basis-Kunststofffolie eine Einschichtfolie (11, 14) ist und eine andere Kunststofffolie (13, 16) auf eine vordere Oberfläche oder hintere Oberfläche der Basis-Kunststofffolie laminiert ist (11, 14).

7. Gasdurchlässige Folie nach einem der Ansprüche 1 bis 6, die zum hermetischen Versiegeln einer Öffnung eines Behälters ist.

8. Verfahren zur Herstellung einer gasdurchlässigen Folie (1, 1A, 1B, 10, 10A) zum Ausbilden eines gasdurchlässigen Abschnitts zur Gaspermeation in einer Kunststofffolie von einer vorgeschriebenen Dicke, wobei das Verfahren umfasst:
Ausbilden des gasdurchlässigen Abschnitts aus einer Vertiefung, wofür die Basis-Kunststofffolie (2) auf eine Temperatur gebracht wird, die eine Glasübergangstemperatur überschreitet und die unter einer Schmelztemperatur der Folie liegt, und die Folie von einer Oberfläche zu einer anderen Oberfläche hin gedrückt und gestreckt wird, um vertieft zu werden um einen vorgeschriebenen Betrag, sodass eine Dicke von einer oberen Öffnung (3a, 109a, 212a) zu einem Boden hin allmählich abnimmt, wobei der Boden am dünnsten ist und der Boden (3c, 109c, 212c) von der anderen Oberfläche nach außen vorsteht, wobei die Vertiefung als Schlitz ausgebildet wird, der eine U-förmige oder V-förmige Querschnittsform aufweist, und die Vertiefung aus einer diskontinuierlichen Schlitzgruppe (3L, 109L, 212L) ausgebildet wird, wobei eine Vielzahl von Schlitzen (3, S, 109, 212) mit einem vorgeschriebenen Intervall angeordnet sind.

9. Verfahren zur Herstellung einer gasdurchlässigen Folie nach Anspruch 8, wobei eine weitere Kunststofffolie (13, 16) auf eine von vorderen und hinteren Oberflächen der Basis-Kunststofffolie (11, 14) laminiert wird, nachdem die Vertiefung in der Basis-Kunststofffolie (11, 14) ausgebildet worden ist.

10. Verfahren zur Herstellung einer gasdurchlässigen Folie nach Anspruch 9, wobei die Vertiefung ausgebildet wird, indem die Kunststofffolie (2) zwischen einer Walze (6A), die mit einem Vorsprung einer vorgeschriebenen Form bereitgestellt ist, und einer anderen Walze (6B), die nicht mit dem Vorsprung der vorgeschriebenen Form ausgebildet ist, läuft.

11. Verfahren zur Herstellung einer gasdurchlässigen Folie nach Anspruch 10, wobei eine Steifheit der einen Walze, die mit dem Vorsprung der vorgeschriebenen Form bereitgestellt ist, die verwendet wird, geringer ist als eine Steifheit der anderen Walze.

12. Verfahren zur Herstellung einer gasdurchlässigen Folie nach einem der Ansprüche 8 bis 11, wobei als Basis-Kunststofffolie eine Folie aus mindestens einer Schicht aus Polypropylen, Polyethylen, Polyethylenterephthalat und Polyacetal mit einer Dicke von 15 bis 100 µm verwendet wird und eine Dicke am Boden der Vertiefung 2 bis 70 µm beträgt.

13. Verpackungsbeutel (101), umfassend:
einen einseitig offenen Beutelkörper (104a), der unter Verwendung der gasdurchlässigen Folie nach einem der Ansprüche 1 bis 7 ausgebildet ist.

14. Verpackungsbeutel nach Anspruch 13, wobei
der einseitig offene Beutelkörper einen hinteren Versiegelungsabschnitt (102), in welchem zwei Endkantenabschnitte (101b', 101c') siegelrandversiegelt sind, und einen Endversiegelungsabschnitt (103a, 103b) aufweist, in welchem eine Öffnung eines Endkantenabschnitts orthogonal zum hinteren Versiegelungsabschnitt versiegelt ist,
der hintere Versiegelungsabschnitt einen Aufreißabschnitt aufweist, der ein teilweiser Riss von einem Endabschnitt des hinteren Versiegelungsabschnitts in einer Richtung orthogonal zu einer Längsrichtung des hinteren Versiegelungsabschnitts ist,
eine Oberfläche, wo sich der hintere Versiegelungsabschnitt (102₁) befindet, mit einer Öffnungsschnittlinie (105a, 105b) bereitgestellt ist, die ausgebildet ist, um von dem hinteren Versiegelungsabschnitt getrennt zu werden und sich ungefähr parallel zum hinteren Versiegelungsabschnitt und einer Führungsschnittlinie (106a, 106b) erstreckt, die zum Aufreißabschnitt des hinteren Versiegelungsabschnitts hin von der Öffnungsschnittlinie ausgebildet ist, und
die Öffnungsschnittlinie und die Führungsschnittlinie durch die Vertiefung der gasdurchlässigen Folie ausgebildet sind.

15. Verpackungsbeutel nach Anspruch 14, wobei der Aufreißabschnitt in einer Vielzahl von Teilen ausgebildet ist, um voneinander getrennt zu werden, die Öffnungsschnittlinien auf beiden Seiten der hinteren Versiegelung ausgebildet sind, die Führungsschnittlinie in einer Vielzahl von Teilen jeweils zum Aufreißabschnitt in der Vielzahl von Teilen hin von jeder der Öffnungsschnittlinien ausgebildet ist.

16. Verpackungsbeutel nach Anspruch 15, wobei die Führungsschnittlinie (106a, 106b) in eine Vielzahl von kurzen ersten Führungsschnittlinien (105a1, 105b1) geteilt ist, die sich mit einem vorgeschriebenen Intervall von der Öffnungsschnittlinie (106a1', 106b1') erstrecken und eine zweite Führungsschnittlinie, die um einen vorgeschriebenen Abstand von der ersten Führungsschnittlinie getrennt ist, sich zu einer Seite des hinteren Versiegelungsabschnitts mit einem verschiedenen Intervall von der ersten Führungsschnittlinie erstreckt und länger ist als die erste Führungsschnittlinie.

17. Verpackungsbeutel nach Anspruch 13, wobei
in dem einseitig offenen Beutelkörper ein Verpackungsfolienmaterial (107a) verwendet ist, das auf eine Oberfläche mit einem äußeren Blattmaterial (107c) laminiert ist, um einen vorgeschriebenen Abstand von beiden Endrändern mit einer Zwischenschicht (107b) dazwischen aufzuweisen, sodass das Verpackungsfolienmaterial gebogen ist von dem äußeren Folienabschnitt mit beiden Endrandabschnitten (107a'), die durch den hinteren Versiegelungsabschnitt (102) siegelrandversiegelt werden, und eine Öffnung, die an einem Endkantenabschnitt orthogonal zum hinteren Versiegelungsabschnitt ausgebildet ist, durch den Endversiegelungsabschnitt (103a, 103b) versiegelt ist,
der hintere Versiegelungsabschnitt (102) sich in einem Zentrumsabschnitt des Beutelkörpers oder an einer Seite eines Endabschnitts an einem der beiden Enden des Zentrumsabschnitts befindet, ein Aufreißabschnitt (102₁) mindestens nahe eines Endabschnitts von und in einer Richtung orthogonal zu einer Längsrichtung des hinteren Versiegelungsabschnitts ausgebildet ist, die Zwischenschicht mit einer Führungsschnittlinie (106a, 106b) bereitgestellt ist, die sich von der äußeren Folienendrandkante zum Aufreißabschnitt des hinteren Versiegelungsabschnitts hin zum Öffnen erstreckt, und
die Führungsschnittlinie (106a, 106b) durch die Vertiefung der gasdurchlässigen Folie ausgebildet ist.

18. Verpackungsbeutel nach Anspruch 17, wobei der Beutelkörper eine Öffnungsschnittlinie (105a, 105b) an der äußeren Folienendrandkante (107c) aufweist, und
die Öffnungsschnittlinie (105a, 105b) durch die Vertiefung der gasdurchlässigen Folie ausgebildet ist.

19. Verpackungsbeutel nach Anspruch 18, wobei der Aufreißabschnitt (102₁) in einer Vielzahl von Teilen ausgebildet ist, um voneinander getrennt zu werden, und eine Vielzahl der Führungsschnittlinien (106a, 106b) zu der Vielzahl der Aufreißabschnitte (102₁) des hinteren Versiegelungsabschnitts (102) von der äußeren Folienendrandkante (107c) oder der Öffnungsschnittlinie (105a, 105b) ausgebildet sind, um sich ungefähr parallel mit einem ungefähr identischen Intervall wie einem Intervall der Aufreißabschnitte zu erstrecken.

20. Verpackungsbeutel nach Anspruch 19, wobei die Führungsschnittlinie (106a, 106b) in eine Vielzahl von kurzen ersten Führungsschnittlinien (105a₁, 105b₁) geteilt ist, die sich mit einem vorgeschriebenen Intervall von der Öffnungsschnittlinie (105a, 105b) erstrecken, und eine lange zweite Führungsschnittlinie (106a₁, 106b₁), die um einen vorgeschriebenen Abstand von der ersten Führungsschnittlinie getrennt ist und sich zu einer Seite des hinteren Versiegelungsabschnitts (102) mit einem von dem Intervall verschiedenen Intervall erstreckt, und beide der Schnittlinien aus einer nicht durchdringenden Nut ausgebildet sind, wobei nur ein Abschnitt in einer Dickenrichtung der Kunststofffolie geschnitten ist.

21. Verpackungsbeutel (210) nach Anspruch 13, wobei
in dem einseitig offenen Beutelkörper ein Paar von überlappenden ersten und zweiten Kunststofffolien (210b, 210c), wobei mindestens eine aus einer gasdurchlässigen Folie ausgebildet ist, an einem Boden (210a) und beiden Seitenkantenrändern (211a, 211b) durchgehend mit dem Boden miteinander versiegelt sind, ein verbleibendes, dem Boden gegenüberliegendes Ende eine Beutelöffnung ist, die offen ist, die Beutelöffnung einen Beutelöffnungs-Versiegelungsabschnitt (211c) aufweist, der nach einem Verpacken verpackter Substanz versiegelt ist,
ein Gasfreisetzungsabschnitt (212L), der, wenn ein Innendruck des Beutelkörpers auf einen vorgeschriebenen Wert oder größer angestiegen ist, den angestiegenen Innendruck extern freisetzt in einem Zustand, in welchem die Beutelöffnung versiegelt ist und ein Flüssigkeitsleckage-Blockierungsabschnitt (214), der eine Leckage von Flüssigkeit aus der verpackten Substanz zum Gasfreisetzungsabschnitt blockiert, in einer Nähe der Beutelöffnung bereitgestellt sind, in einer Reihenfolge von der Beutelöffnung zum Boden hin, und
der Gasfreisetzungsabschnitt durch die Vertiefung der gasdurchlässigen Folie ausgebildet ist.

22. Verpackungsbeutel nach Anspruch 21, wobei der Gasfreisetzungsabschnitt (212L) bereitgestellt ist, um sich zwischen einem Teil, der die Beutelöffnung (211c) versiegelt, und dem Flüssigkeitsleckage-Blockierungsabschnitt (214) zu spreizen.

23. Verpackungsbeutel nach Anspruch 21, wobei ein vorgeschriebener Spalt (Lo) zwischen dem Beutelöffnungs-Versiegelungsabschnitt (211c) und dem Flüssigkeitsleckage-Blockierungsabschnitt (214) bereitgestellt ist und der Gasfreisetzungsabschnitt (212L) an dem Spalt bereitgestellt ist.

24. Verpackungsbeutel nach Anspruch 21, wobei der Flüssigkeitsleckage-Blockierungsabschnitt (214) aus einem schwachen Wärmeschweiß-Versiegelungsband ausgebildet ist, wobei das Paar gasdurchlässiger Folien (210b, 210c) mit einer schwachen Versiegelungsfestigkeit wärmegeschweißt ist mit einer vorgeschriebenen Breite zwischen den beiden Seitenkantenrändern, und die Versiegelungsfestigkeit des schwachen Wärmeschweiß-Versiegelungsbandes schwächer ist als eine Wärmeschweiß-Versiegelungsfestigkeit der beiden Seitenkantenränder und der Beutelöffnung.

25. Verpackungsbeutel nach Anspruch 24, wobei das schwache Wärmeschweiß-Versiegelungsband mit mindestens einem Teil bereitgestellt ist, der ein nicht geschweißter oder schwach geschweißter Teil nahe dem nicht geschweißten ist, sodass eine Breite gekreuzt ist oder die Breite verengt ist.

26. Verpackungsbeutel nach Anspruch 24, wobei die Versiegelungsfestigkeit des schwachen Wärmeschweiß-Versiegelungsbandes an einer Unterseite (210a) des Beutelkörpers niedrig und an einer Seite des Gasfreisetzungsabschnitts (212L) hoch ist.

27. Verpackungsbeutel nach Anspruch 21, wobei der Gasfreisetzungsabschnitt (212L) aus einem kontinuierlichen Schlitz oder diskontinuierlichen Schlitzen ausgebildet ist, und der Schlitz (212) von einer inneren Wandoberfläche der Folie zu einer äußeren vorderen Oberfläche vertieft ist, sodass ein Spitzenabschnitt dünn nach außen vorsteht.

28. Verpackungsbeutel nach Anspruch 21, wobei der einseitig offene Beutelkörper mit einem Trennabschnitt (219) zwischen dem Flüssigkeitsleckage-Blockierungsabschnitt (214) und dem Boden (210a) zur getrennten Aufnahme von verpackter Substanz bereitgestellt ist, der Trennabschnitt (219) aus dem schwachen Wärmeschweiß-Versiegelungsband (214A bis 215E) ausgebildet ist, das mit einer vorgeschriebenen Breite zwischen den beiden Seitenkantenrändern (211a, 211b) von dem Paar gasdurchlässiger Folien (210b, 210c) wärmegeschweißt ist, und die Versiegelungsfestigkeit des schwachen Wärmeschweiß-Versiegelungsbandes schwächer als eine Wärmeschweiß-Versiegelungsfestigkeit der beiden Seitenkantenränder und der Beutelöffnung ist.

29. Verpackungsbeutel nach Anspruch 28, wobei das schwache Wärmeschweiß-Versiegelungsband mit mindestens einem Teil bereitgestellt ist, der ein nicht geschweißter oder ein schwach geschweißter Teil nahe dem nicht geschweißten ist, sodass eine Breite gekreuzt ist oder die Breite verengt ist.

30. Verpackungsbeutel nach Anspruch 28, wobei die Versiegelungsfestigkeit des schwachen Wärmeschweiß-Versiegelungsbandes an einer Unterseite des Beutelkörpers (210a) niedrig und an einer Seite des Gasfreisetzungsabschnitts (212L) hoch ist.

31. Verpackungsbeutel nach Anspruch 28, wobei der einseitig offene Beutelkörper eine Kerbe (213') in mindestens einer Kante der beiden Seitenkanten auf einer Seite zum Boden vom Trennabschnitt aufweist.

32. Verpackungsbeutel nach Anspruch 21, wobei der Boden zu einem Zeitpunkt der Nichtaufnahme der verpackten Substanz gefaltet ist und eine Struktur aufweist, wobei ein Bereich auf eine Größe vergrößert ist, die ein unabhängiges Stehen ermöglicht, wenn die verpackte Substanz aufgenommen ist.

33. Verpackungsbeutel nach Anspruch 21, wobei der Beutelöffnungs-Versiegelungsabschnitt (211c) über dem Gasfreisetzungsabschnitt (212L) in einer Wellenform versiegelt ist.

34. Verpackungsbeutel nach Anspruch 21, wobei der Beutelöffnungsversiegelungsabschnitt (211c) mit einer Breite bereitgestellt ist, die breiter ist als ein Abschnitt, wobei die beiden Seitenkantenränder (211a, 211b) durch Wärmeschweißen versiegelt sind.

35. Verpackungsbeutel nach einem der Ansprüche 21 bis 34, wobei der Beutelöffnungs-Versiegelungsabschnitt (211c) mindestens eine Pore (220) aufweist.

## Revendications

1. Film perméable aux gaz (1, 1A, 1B, 10, 10A) comprenant :
une section perméable aux gaz pour la perméation aux gaz qui est prévue sur un film plastique de base (2) d'une épaisseur prescrite, dans lequel
la section perméable aux gaz est un renfoncement non pénétrant présentant une ouverture supérieure (3a, 109a, 212a) et un fond (3c, 109c, 212c), et le renfoncement est formé de sorte qu'une épaisseur diminue progressivement de l'ouverture supérieure vers le fond, le fond étant le plus mince, et dans lequel le fond du renfoncement fait saillie vers l'extérieur depuis une surface du film plastique de base, et dans lequel le renfoncement est formé comme une fente (3, 5, 109, 212) présentant une forme de section en U ou V, et dans lequel le renfoncement est formé à partir d'un groupe de fentes discontinues (3L, 109L, 212L) dans lequel une pluralité de fentes sont agencées à un intervalle prescrit.

2. Film perméable aux gaz selon la revendication 1, dans lequel la pluralité de fentes du groupe de fentes discontinues présentent chacune l'une parmi les formes de ligne droite, courbée et pliée dans une vue planaire.

3. Film perméable aux gaz selon la revendication 1, dans lequel la pluralité de fentes du groupe de fentes discontinues sont agencées chacune sous une forme de ligne droite à un intervalle prescrit.

4. Film perméable aux gaz selon la revendication 2, dans lequel une direction d'extension de chacune de la pluralité de fentes du groupe de fentes discontinues est inclinée selon un angle prescrit par rapport à une direction d'extension de la ligne droite.

5. Film perméable aux gaz selon la revendication 1, dans lequel le film plastique de base est un film parmi au moins une couche de polypropylène, polyéthylène, téréphtalate de polyéthylène et polyacétal avec une épaisseur de 15 à 100 µm, et une épaisseur sur le fond du renfoncement est de 2 à 70 µm.

6. Film perméable aux gaz selon la revendication 5, dans lequel le film plastique de base est un film à une couche (11, 14), et un autre film plastique (13, 16) est laminé sur une surface avant ou une surface arrière du film plastique de base (11, 14).

7. Film perméable aux gaz selon l'une quelconque de revendications 1 à 6, qui est destiné à rendre étanche hermétiquement une ouverture d'un contenant.

8. Procédé de fabrication d'un film perméable aux gaz (1, 1A, 1B, 10, 10A) pour la formation d'une section perméable aux gaz pour la perméation aux gaz dans un film plastique d'une épaisseur prescrite, le procédé comprenant :
la formation de la section perméable aux gaz à partir d'un renfoncement pour laquelle le film plastique de base (2) est amené à une température excédant une température de transition du verre et sous une température de fusion du film, et le film est pressé et étiré d'une surface vers une autre surface à renfoncer d'une quantité prescrite de sorte qu'une épaisseur diminue progressivement d'une ouverture supérieure (3a, 109a, 212a) vers un fond, le fond étant le plus mince et le fond (3c, 109c, 212c) fait saillie vers l'extérieur de l'autre surface, le renfoncement étant formé comme une fente présentant une forme de section en U ou V, et le renfoncement étant formé à partir d'un groupe de fentes discontinues (3L, 109L, 212L) dans lequel une pluralité de fentes (3, S, 109, 212) sont agencées à un intervalle prescrit.

9. Procédé de fabrication d'un film perméable aux gaz selon la revendication 8, dans lequel un autre film plastique (13, 16) est laminé sur une des surfaces avant et arrière du film plastique de base (11, 14) après que le renfoncement a été formé dans le film plastique de base (11, 14).

10. Procédé de fabrication d'un film perméable aux gaz selon la revendication 9, dans lequel le renfoncement est formé par pose du film plastique (2) entre un rouleau (6A) doté d'une saillie d'une forme prescrite et un autre rouleau (6B) non formé avec la saillie de la forme prescrite.

11. Procédé de fabrication d'un film perméable aux gaz selon la revendication 10, dans lequel une rigidité du un rouleau doté de la saillie de la forme prescrite qui est utilisée est inférieure à une rigidité de l'autre rouleau.

12. Procédé de fabrication d'un film perméable aux gaz selon l'une quelconque des revendications 8 à 11, dans lequel un film d'au moins une couche de polypropylène, polyéthylène, téréphtalate de polyéthylène et polyacétal est utilisé comme film plastique de base avec une épaisseur de 15 à 100 µm, et une épaisseur sur le fond du renfoncement est de 2 à 70 µm.

13. Sac d'emballage (101) comprenant :
un corps de sac à une extrémité ouverte (104a) formé en utilisant le film perméable aux gaz selon l'une quelconque des revendications 1 à 7.

14. Sac d'emballage selon la revendication 13, dans lequel
le corps de sac à une extrémité ouverte présente une section étanche arrière (102) dans laquelle deux sections d'arête d'extrémité (101b', 101c') sont scellées par soudage et une section étanche d'extrémité (103a, 103b) dans laquelle une ouverture d'une section d'arête d'extrémité orthogonale à la section étanche arrière est scellée,
la section étanche arrière présente une section de déchirure qui est une déchirure partielle d'une section d'extrémité de la section étanche arrière dans une direction orthogonale à une direction de longueur de la section étanche arrière,
une surface où la section étanche arrière (102₁) est située est dotée d'une ligne de coupe d'ouverture (105a, 105b) formée pour être espacée de la section étanche arrière pour s'étendre approximativement parallèlement à la section étanche arrière et une ligne de coupe de guidage (106a, 106b) formée vers la section de déchirure de la section étanche arrière de la ligne de coupe d'ouverture, et
la ligne de coupe d'ouverture et la ligne de coupe de guidage sont formées par le renfoncement du film perméable aux gaz.

15. Sac d'emballage selon la revendication 14, dans lequel la section de déchirure est formée dans une pluralité de parties à espacer les unes des autres, les lignes de coupe d'ouverture sont formées sur les deux côtés du joint arrière, la ligne de coupe de guidage est formée dans une pluralité de parties chacune vers la section de déchirure dans la pluralité de parties de chacune des lignes de coupe d'ouverture.

16. Sac d'emballage selon la revendication 15, dans lequel la ligne de coupe de guidage (106a, 106b) est divisée en une pluralité de premières lignes de coupe de guidage courtes (105a1, 105b1) qui s'étendent à un intervalle prescrit de la ligne de coupe d'ouverture (106a1', 106b1') et une seconde ligne de coupe de guidage qui est espacée d'une distance prescrite de la première ligne de coupe de guidage, s'étend vers un côté de la section étanche arrière à un intervalle différent de la première ligne de coupe de guidage, et est plus longue que la première ligne de coupe de guidage.

17. Sac d'emballage selon la revendication 13, dans lequel
dans le corps de sac à une extrémité ouverte, un matériau de film d'emballage (107a) laminé sur une surface avec un matériau de feuille extérieure (107c) pour présenter une distance prescrite des deux bordures d'extrémité avec une couche intermédiaire (107b) entre elles est utilisé de sorte que le matériau de film d'emballage soit plié de la portion de film extérieur, les deux sections de bordure d'extrémité (107a') étant scellées par soudage par la section étanche arrière (102) et une ouverture formée sur une section d'arête d'extrémité orthogonale à la section étanche arrière est scellée par la section étanche d'extrémité (103a, 103b),
la section étanche arrière (102) est située dans une section centrale du corps de sac ou vers un côté d'une section d'extrémité sur une des deux extrémités de la section centrale, une section de déchirure (102₁) est formée au moins près d'une section d'extrémité de la section étanche arrière et dans une direction orthogonale à une direction de longueur de celle-ci, la couche intermédiaire est dotée d'une ligne de coupe de guidage (106a, 106b) qui s'étend depuis l'arête de bordure d'extrémité de film extérieur vers la section de déchirure de la section étanche arrière pour l'ouverture, et
la ligne de coupe de guidage (106a, 106b) est formée par le renfoncement du film perméable aux gaz.

18. Sac d'emballage selon la revendication 17, dans lequel le corps de sac présente une ligne de coupe d'ouverture (105a, 105b) sur l'arête de bordure d'extrémité de film extérieur (107c), et
la ligne de coupe d'ouverture (105a, 105b) est formée par le renfoncement du film perméable aux gaz.

19. Sac d'emballage selon la revendication 18, dans lequel la section de déchirure (102₁) est formée dans une pluralité de parties à espacer les unes des autres, et une pluralité des lignes de coupe de guidage (106a, 106b) sont formées vers la pluralité des sections de déchirure (102₁) de la section étanche arrière (102) de l'arête de bordure d'extrémité de film extérieur (107c) ou la ligne de coupe d'ouverture (105a, 105b) pour s'étendre approximativement parallèlement à un intervalle approximativement identique en tant qu'intervalle des sections de déchirure.

20. Sac d'emballage selon la revendication 19, dans lequel la ligne de coupe de guidage (106a, 106b) est divisée en une pluralité de premières lignes de coupe de guidage courtes (105a₁, 105b₁) qui s'étendent à un intervalle prescrit de la ligne de coupe d'ouverture (105a, 105b) et une seconde ligne de coupe de guidage longue (106a₁, 106b₁) qui est espacée d'une distance prescrite de la première ligne de coupe de guidage et s'étend vers un côté de la section étanche arrière (102) à un intervalle différent de l'intervalle, et les deux lignes de coupe sont formées à partir d'une rainure non pénétrante dans lequel seule une portion dans une direction d'épaisseur du film plastique est coupée.

21. Sac d'emballage (210) selon la revendication 13, dans lequel
dans le corps de sac à une extrémité ouverte, une paire de premier et second films plastiques se chevauchant (210b, 210c) dans lequel au moins l'un est formé à partir d'un film perméable aux gaz, sont scellés ensemble sur un fond (210a) et les deux bordures d'arête latérale (211a, 211b) continues avec le fond, une extrémité restante s'opposant au fond est une ouverture de sac qui est ouverte, l'ouverture de sac présente une section étanche d'ouverture de sac (211c) qui est scellée après que les matières emballées soient emballées,
une section de libération de gaz (212L) qui, lorsqu'une pression interne du corps de sac a augmenté à une valeur prescrite ou plus, libère en externe la pression interne accrue dans un état où l'ouverture de sac est scellée et une section de bloc de fuite de liquide (214) qui bloque la fuite de liquide des matières emballées vers la section de libération de gaz sont prévues à proximité de l'ouverture de sac dans l'ordre à partir de l'ouverture de sac vers le fond, et
la section de libération de gaz est formée par le renfoncement du film perméable aux gaz.

22. Sac d'emballage selon la revendication 21, dans lequel la section de libération de gaz (212L) est prévue pour le chevauchement entre une partie qui scelle l'ouverture de sac (211c) et la section de bloc de fuite de liquide (214).

23. Sac d'emballage selon la revendication 21, dans lequel une fente prescrite (Lo) est prévue entre la section étanche d'ouverture de sac (211c) et la section de bloc de fuite de liquide (214), et la section de libération de gaz (212L) est prévue au niveau de la fente.

24. Sac d'emballage selon la revendication 21, dans lequel la section de bloc de fuite de liquide (214) est formée à partir d'une bande étanche thermosoudée faible dans lequel la paire de films perméables au gaz (210b, 210c) est thermosoudée avec une résistance étanche faible à une largeur prescrite entre les deux bordures d'arête latérale, et la résistance étanche de la bande étanche thermosoudée faible est plus faible qu'une résistance étanche thermosoudée des deux bordures d'arête latérale et de l'ouverture de sac.

25. Sac d'emballage selon la revendication 24, dans lequel la bande étanche thermosoudée faible est dotée d'au moins une partie qui est une partie non soudée ou une partie soudée faible près de la non soudée de sorte que la largeur soit croisée ou que la largeur soit rétrécie.

26. Sac d'emballage selon la revendication 24, dans lequel la résistance étanche de la bande étanche thermosoudée faible est basse sur un côté inférieur (210a) du corps de sac et élevée sur un côté de la section de libération de gaz (212L).

27. Sac d'emballage selon la revendication 21, dans lequel la section de libération de gaz (212L) est formée à partir d'une fente continue ou de fentes discontinues, et la fente (212) est évidée d'une surface de paroi intérieure du film vers une surface avant extérieure de sorte qu'une section de pointe fasse saillie de manière mince vers l'extérieur.

28. Sac d'emballage selon la revendication 21, dans lequel le corps de sac à une extrémité ouverte est doté d'une section de séparation (219) entre la section de bloc de fuite de liquide (214) et le fond (210a) pour un logement séparé des matières emballées, la section de séparation (219) est formée à partir de la bande étanche thermosoudée faible (214A à 215E) thermosoudée à une largeur prescrite entre les deux bordures d'arête latérale (211a, 211b) de la paire de films perméables aux gaz (210b, 210c), et la résistance étanche de la bande étanche thermosoudée faible est plus faible qu'une résistance étanche thermosoudée des deux bordures d'arête latérale et de l'ouverture de sac.

29. Sac d'emballage selon la revendication 28, dans lequel la bande étanche thermosoudée faible est dotée d'au moins une partie qui est une partie non soudée ou une partie soudée faible près de la non soudée de sorte que la largeur soit croisée ou que la largeur soit rétrécie.

30. Sac d'emballage selon la revendication 28, dans lequel la résistance étanche de la bande étanche thermosoudée faible est basse sur un côté inférieur du corps de sac (210a) et élevée sur un côté de la section de libération de gaz (212L).

31. Sac d'emballage selon la revendication 28, dans lequel le corps de sac à une extrémité ouverte présente une encoche (213') dans au moins une arête des deux arêtes latérales sur un côté vers le fond depuis la section de séparation.

32. Sac d'emballage selon la revendication 21, dans lequel le fond est plié à un moment de non logement des matières emballées et présente une structure dans lequel une zone est augmentée à une taille qui permet la position indépendante lorsque les matières emballées sont logées.

33. Sac d'emballage selon la revendication 21, dans lequel la section étanche d'ouverture de sac (211c) est scellée sous une forme d'onde sur la section de libération de gaz (212L).

34. Sac d'emballage selon la revendication 21, dans lequel la section étanche d'ouverture de sac (211c) est dotée d'une largeur plus large qu'une portion dans lequel les deux bordures d'arête latérale (211a, 211b) sont scellées par thermosoudage.

35. Sac d'emballage selon l'une quelconque des revendications 21 à 34, dans lequel la section étanche d'ouverture de sac (211c) présente au moins un pore (220).
